(19) Europäisches Patentamt
European Patent Office
Office européen des brevets

(11) EP 2 813 372 B1

(12) **EUROPEAN PATENT SPECIFICATION**

(45) Date of publication and mention of the grant of the patent:
**10.05.2017 Bulletin 2017/19**

(51) Int Cl.:
***B41M 5/00*** *(2006.01)* ***C09D 11/101*** *(2014.01)*
*B41M 7/00* *(2006.01)* *C09D 11/40* *(2014.01)*

(21) Application number: **14171809.8**

(22) Date of filing: **10.06.2014**

(54) **Image formation method, decorative sheet, molding method, decorative sheet molded product, process for producing in-mold molded article, and in-mold molded article**

Bilderzeugungsverfahren, Dekorfolie, Formverfahren, Dekorfolienformprodukt, Verfahren zur Herstellung eines in einer Form hergestellten Gegenstands, und in einer Form hergestellter Gegenstand

Procédé de formation d'image, feuille décorative, procédé de moulage, produit moulé en feuille décorative, procédé de production d'article moulé et ledit article

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.06.2013 JP 2013123415**

(43) Date of publication of application:
**17.12.2014 Bulletin 2014/51**

(73) Proprietor: **Fujifilm Corporation**
**Minato-ku**
**Tokyo (JP)**

(72) Inventors:
- **Araki, Kenjiro**
**Ashigarakami-gun, Kanagawa (JP)**
- **Sato, Takehiko**
**Ashigarakami-gun, Kanagawa (JP)**

(74) Representative: **Höhfeld, Jochen et al**
**Klunker Schmitt-Nilson Hirsch**
**Patentanwälte**
**Destouchesstrasse 68**
**80796 München (DE)**

(56) References cited:
**EP-A1- 2 088 176** **EP-A1- 2 511 101**
**EP-A2- 2 568 018** **JP-A- 2009 221 416**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 813 372 B1

## Description

The present invention relates to an image formation method, a decorative sheet, a molding method, a decorative sheet molded product, a process for producing an in-mold molded article, a process for producing in-mold molded article, and an in-mold molded article.

As image recording methods for forming an image on a recording medium such as paper based on an image data signal, there are an electrophotographic system, sublimation type and melt type thermal transfer systems, an inkjet system, etc.

With regard to the inkjet system, the printing equipment is inexpensive, it is not necessary to use a plate when printing, and since an image is formed directly on a recording medium by discharging an ink composition only on a required image area, the ink composition can be used efficiently and the running cost is low, particularly in the case of small lot production. Furthermore, there is little noise and it is excellent as an image recording system, and has been attracting attention in recent years.

Among them, an inkjet recording ink composition (radiation-curing inkjet recording ink composition), which is curable upon exposure to radiation such as UV rays, is an excellent system from the viewpoint of it being possible to print on various types of recording media because, compared with a solvent-based ink composition, the drying properties are excellent and an image is resistant to spreading since the majority of the components in the ink composition cure upon exposure to radiation such as UV rays.

In recent years, radiation curable ink compositions for inkjet recording have been required to be printed on a substrate that is later subjected to stretching or bending.

For the purpose of providing a photocurable ink composition for inkjet printing that has excellent photocurability and can form a cured coating film having good stretchability, heat resistance, and punching processability even when a substrate is subjected to thermal molding, JP-A-2012-007107 discloses a photocurable ink composition for inkjet printing comprising at least a photopolymerizable compound and a photopolymerization initiator, wherein the photopolymerizable compound comprises a photopolymerizable monomer having one ethylenically unsaturated double bond and at least one urethane bond and the content of the photopolymerizable monomer is such that the urethane bond is contained at 2.8 to 4.7 mmol per g of the photopolymerizable compound.

Furthermore, for the purpose of providing a sign board that can be used with various design and molding processes, and a process for producing same, JP-A-2009-096043 describes a sign board comprising a resin substrate and a printing layer formed by inkjet printing above at least part of the resin substrate, wherein the printing layer comprises a cured material of a UV-curable ink comprising a UV monomer that polymerizes upon irradiation with UV and cures, and the printing layer comprising at least two cured materials having different pencil hardnesses.

JP 2009-221416 A discloses an ink set that has excellent curability and forms an image having excellent flexibility, scratch resistance and solvent resistance. This document further discloses an inkjet recording method using the ink set. The ink set includes at least an ink composition A composed of (a-1) a polymerization initiator and (b-1) a polymerizable compound in which the amount of a monofunctional polymerizable compound is ≥ 65 wt.% in the total weight of (b-1) the polymerizable compound and an ink composition B composed of (a-2) a polymerization initiator and (b-2) a polymerizable compound in which the amount a polyfunctional polymerizable compound is ≥ 50 wt.% in the total weight of (b-2) the polymerizable compound.

It is an object of the present invention to provide an image formation method that can form an image having excellent stretchability and suppressed sticking to a mold, and a decorative sheet obtained by the image formation method. Furthermore, it is another object of the present invention to provide, employing the decorative sheet, a molding method, a decorative sheet molded product, a process for producing an in-mold molded article, and an in-mold molded article.

The present invention is defined in the appendant claims.

The objects of the present invention have been attained by means described in <1>, <14> to <16>, <18>, or <19> below. They are given below together with <2> to <13> and <17>, which are preferred embodiments.

<1> An image formation method comprising, in sequence, an image layer formation step of forming an image layer by discharging at least one radiation curable inkjet colored ink composition onto a recording medium, and a clear layer formation step of forming a clear layer by discharging a radiation curable inkjet clear ink composition onto the image layer, the radiation curable inkjet colored ink composition comprising a monofunctional polymerizable compound in an amount of at least 50 mass % of polymerizable compounds (preferably at least 60 mass %, more preferably at least 70 mass %, yet more preferably at least 80 mass %, particularly preferably at least 90 mass %, and most preferably at least 95 mass %), the radiation curable inkjet clear ink composition comprising a polyfunctional polymerizable compound in an amount of at least 50 mass % of the polymerizable compounds (preferably at least 55 mass %, more preferably at least 60 mass %, yet more preferably at least 65 mass %, and particularly preferably at least 70 mass %), and in the clear layer formation step the radiation curable inkjet clear ink composition being

dispersed above the image layer to thus form a non-continuous clear layer,
wherein when the image layer is formed using n color radiation curable inkjet colored ink compositions, the requirements below are satisfied,
when n = 1, $1/10,000 \leq X/Y \leq 40/100$
when n = 2, $1/10,000 \leq X/Y \leq 30/100$
when n = 3, $1/10,000 \leq X/Y \leq 25/100$
when n = 4, $1/10,000 \leq X/Y \leq 20/100$
when $n \geq 5$, $1/10,000 \leq X/Y \leq 15/100$,
wherein the amount of fired droplets per unit area of the clear layer-forming radiation curable inkjet clear ink composition is X, in $g/m^2$, and the total amount of fired droplets per unit area of the image layer-forming radiation curable inkjet colored ink compositions is Y, in $g/m^2$,
<2> the image formation method according to <1>, wherein the clear layer has an area of at least 0.1% but no greater than 80% of an image region (more preferably 1% to 78%, yet more preferably 5% to 76%, and particularly preferably 10% to 75%),
<3> the image formation method according to <1> or <2>, wherein when the image layer is formed using n color radiation curable inkjet colored ink compositions, the requirements below are satisfied,
when n = 1, $1/100 \leq X/Y \leq 35/100$
when n = 2, $1/100 \leq X/Y \leq 25/100$
when n = 3, $1/100 \leq X/Y \leq 24/100$
when n = 4, $1/100 \leq X/Y \leq 18/100$
when $n \geq 5$, $1/100 \leq X/Y \leq 13/100$
and preferably,
when n = 1, $1/100 \leq X/Y \leq 30/100$
when n = 2, $1/100 \leq X/Y \leq 20/100$
when n = 3, $1/100 \leq X/Y \leq 20/100$
when n = 4, $1/100 \leq X/Y \leq 15/100$
when $n \geq 5$, $1/100 \leq X/Y \leq 10/100$
wherein the amount of fired droplets per unit area of the clear layer-forming radiation curable inkjet clear ink composition is X, in $g/m^2$, and the total amount of fired droplets per unit area of the image layer-forming radiation curable inkjet colored ink compositions is Y, in $g/m^2$,
<4> the image formation method according to any one of <1> to <3>, wherein the radiation curable inkjet colored ink composition comprises the monofunctional polymerizable compound in an amount of at least 70 mass % of the polymerizable compounds and the radiation curable inkjet clear ink composition comprises the polyfunctional polymerizable compound in an amount of at least 60 mass % of the polymerizable compounds,
<5> the image formation method according to any one of <1> to <4>, wherein the radiation curable inkjet colored ink composition comprises the monofunctional polymerizable compound in an amount of at least 80 mass % of the polymerizable compounds and the radiation curable inkjet clear ink composition comprises the polyfunctional polymerizable compound in an amount of at least 70 mass % of the polymerizable compounds,
<6> the image formation method according to any one of <1> to <5>, wherein the radiation curable inkjet colored ink composition comprises as the polymerizable compound an *N*-vinyllactam,
<7> the image formation method according to any one of <1> to <6>, wherein the radiation curable inkjet colored ink composition comprises as the polymerizable compound at least one monofunctional polymerizable compound selected from the group consisting of (a-1) to (a-8) below, more preferably comprises at least (a-7), yet more preferably comprises (a-7) and at least one monofunctional monomer selected from the group consisting of (a-1) to (a-6) and (a-8), and particularly preferably comprises (a-7) and (a-3),

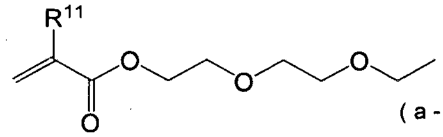 (a-1) 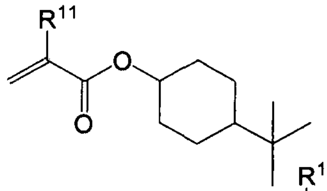 (a-2)

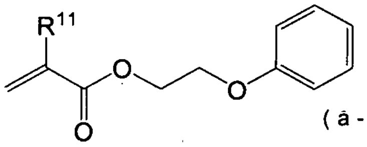 (a-3) 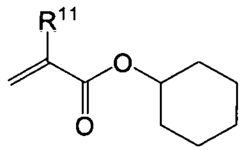 (a-4) 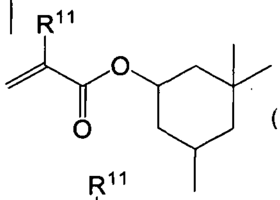 (a-5)

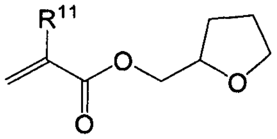 (a-6) 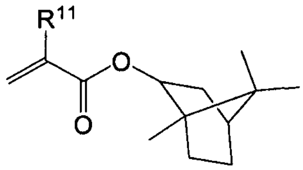 (a-7) 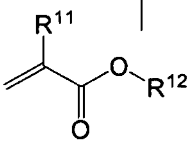 (a-8)

(In Formulae, $R^{11}$ denotes a hydrogen atom or a methyl group, and $R^{12}$ denotes an alkyl group having 4 to 12 carbons.)

<8> the image formation method according to any one of <1> to <7>, wherein the radiation curable inkjet clear ink composition comprises a polyfunctional polymerizable compound (more preferably a polyfunctional polymerizable monomer), having a glass transition temperature (Tg) of at least 80°C (preferably 80°C to 300°C, more preferably 85°C to 300°C, and particularly preferably 90°C to 300°C), wherein the glass transition temperature of a polyfunctional polymerizable compound means the glass transition temperature of a homopolymer of this polyfunctional polymerizable compound,

<9> the image formation method according to <8>, wherein the radiation curable inkjet clear ink composition comprises as the polyfunctional polymerizable compound having a glass transition temperature (Tg) of at least 80°C at least one polyfunctional polymerizable compound selected from the group consisting of the polymerizable compounds below,

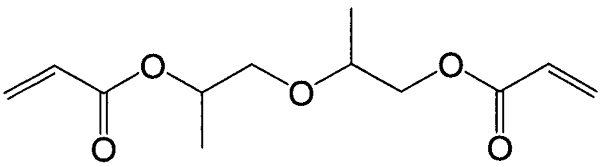

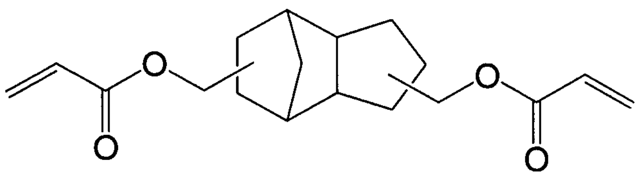

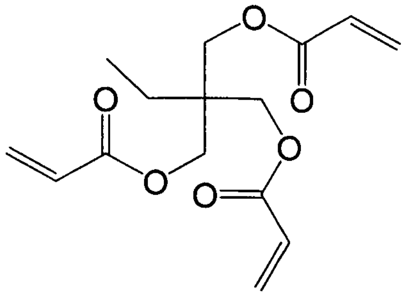

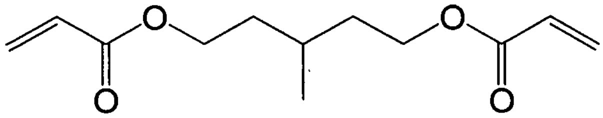

<10> the image formation method according to any one of <1> to <9>, wherein the radiation curable inkjet clear ink composition comprises the polyfunctional polymerizable compound having a glass transition temperature (Tg) of at least 80°C in an amount of at least 30 mass % in the ink composition (preferably 40 to 90 mass %, and more preferably 55 to 85 mass %), wherein the glass transition temperature of a polyfunctional polymerizable compound means the glass transition temperature of a homopolymer of this polyfunctional polymerizable compound,

<11> the image formation method according to any one of <1> to <10>, wherein the radiation curable inkjet colored ink composition and/or the radiation curable inkjet clear ink composition comprise as the polymerizable compound a silicone-based acrylate oligomer,

<12> the image formation method according to any one of <1> to <11>, wherein the image layer formation step and/or the clear layer formation step comprise (a1) a step of discharging the inkjet ink composition onto a recording medium by an inkjet method, (b1) a step of irradiating the discharged inkjet ink composition with actinic radiation

so as to preliminarily cure the inkjet ink composition to thus form a preliminarily cured film, and (c1) a step of irradiating the preliminarily cured film with actinic radiation to thus completely cure it,

<13> the image formation method according to <12>, wherein the actinic radiation employs as a light source a light-emitting diode,

<14> a decorative sheet comprising above a resin sheet an image layer and a clear layer formed by the image formation method according to any one of <1> to <13>,

<15> a molding method comprising vacuum forming, pressure forming, or vacuum/pressure forming the decorative sheet according to <14>,

<16> a decorative sheet molded product obtained by vacuum forming, pressure forming, or vacuum/pressure forming the decorative sheet according to <14>,

<17> the decorative sheet molded product according to <16>, wherein it is further subjected to hole making by means of trimming after the vacuum forming, pressure forming, or vacuum/pressure forming,

<18> a process for producing an in-mold molded article, comprising a step of placing the decorative sheet according to <14> or the decorative sheet molded product according to <16> or <17> on an inner wall of a hollow part formed from a plurality of molds, and a step of injecting a molten resin into the hollow part via a gate, and

<19> an in-mold molded article obtained by the production process according to <18>.

In accordance with the present invention, there can be provided an image formation method that can form an image having excellent stretchability and suppressed sticking to a mold, and a decorative sheet obtained by the image formation method. Furthermore, in accordance with the present invention, there can also be provided, employing the decorative sheet, a molding method, a decorative sheet molded product, a process for producing an in-mold molded article, and an in-mold molded article.

BRIEF DESCRIPTION OF DRAWINGS

FIG. 1: A schematic diagram showing a sectional view when an image layer and a clear ink layer are formed above a recording medium by the image formation method of the present invention.

FIG. 2: An external perspective view showing one example of ink jet recording equipment suitably used in the present invention.

FIG. 3: A transparent plan view schematically showing a paper transport path of the ink jet recording equipment shown in FIG. 2.

FIG. 4: A transparent plan view showing the layout configuration of an ink jet head and a UV irradiation section shown in FIG. 2.

FIG. 5: An explanatory view showing an example of the configuration of the ink jet head and the UV irradiation section for forming an image shown in FIG. 1 (a).

FIG. 6: An explanatory view showing an example of the configuration of the ink jet head and the UV irradiation section for forming an image shown in FIG. 1 (b).

The image formation method of the present invention comprises, in sequence, an image layer formation step of forming an image layer by discharging at least one radiation curable inkjet colored ink composition (hereinafter, also called a ’colored ink’ or a ’colored ink composition’) onto a recording medium, and a clear layer formation step of forming a clear layer by discharging a radiation curable inkjet clear ink composition (hereinafter, also called a ’clear ink’ or a ’clear ink composition’) onto the image layer, the radiation curable inkjet colored ink composition comprising a monofunctional polymerizable compound in an amount of at least 50 mass % of polymerizable compounds, the radiation curable inkjet clear ink composition comprising a polyfunctional polymerizable compound in an amount of at least 50 mass % of the polymerizable compounds, and in the clear layer formation step the radiation curable inkjet clear ink composition being dispersed above the image layer to thus form a non-continuous clear layer.

FIG. 1 is a sectional view schematically showing one example of a case in which an image layer 14 and a clear layer 16 are formed above a recording medium (support or substrate) 12 using the image formation method of the present invention. Arrow V in the diagram show the direction in which the image is viewed (observation direction).

In FIG. 1, the recording medium 12 is preferably transparent. The image layer 14 may be formed from a plurality of colored image layers formed from a plurality of colored ink compositions.

In FIG. 1 (b), the image layer 14 is formed from a color image layer 17 and a white layer (also called a white ink layer) 18, and the uppermost layer of the image layer 14 (the side adjacent to the clear layer 16) is the white layer 18 formed from a white ink composition. The white layer 18 is preferably formed as a substantially uniform layer of a solid image over the entire face of an image region (a region where an image can be formed). In the present invention,

as in the white layer 18, it is preferable for at least one image layer to be formed so as to cover the entire face of the image region, but the present invention should not be construed as being limited to such a mode.

The clear layer 16 is formed by dispersing a clear ink composition above the image layer, thus forming a non-continuous layer. The clear layer is a non-continuous layer dispersed above the entire face of the image region and is formed for example in the form of isolated dots.

In the present invention, it is preferable to form above the recording medium 12, as the image layer 14, a layer formed from at least one colored ink composition selected from the group consisting of black (K), yellow (Y), cyan (C), and magenta (M), and a white layer formed as a substantially uniform layer, but it may comprise as the colored ink composition a light color ink composition such as light cyan or light magenta in addition to the above colors, or may comprise a special color ink such as orange or green, a metal ink, etc.

Conventionally, it has been found that, if an image layer is formed using a colored ink composition that gives a cured image having excellent stretchability, there is the problem that the image sticks to a mold when molding the obtained image.

As a result of an intensive investigation by the present inventors, it has been found that sticking to a mold can be suppressed by forming a non-continuous clear layer by dispersing a specific clear ink composition above an image layer, and the present invention has thus been accomplished. In the present invention, the colored ink composition for forming an image layer comprises a monofunctional polymerizable compound in an amount of at least 50 mass % of the polymerizable compounds, and the clear ink composition for forming a clear layer comprises a polyfunctional polymerizable compound in an amount of at least 50 mass % of the polymerizable compounds.

Although the detailed mechanism of the action of the present invention is not clear, it may be surmised to be as follows.

It is surmised that due to the colored ink composition used in the present invention comprising a large amount of a monofunctional polymerizable compound, a cured image has excellent stretchability and substrate adhesion. On the other hand, due to the clear ink composition comprising a large amount of a polyfunctional polymerizable compound, a cured image has relatively high hardness, and since it is dispersed above the image layer, sticking to a mold is suppressed. Furthermore, it is surmised that since the clear layer is non-continuous, even if it is stretched, loss of image, etc. is not caused, and it can follow the stretching of the image layer.

In the present invention, the notation 'X to Y', which expresses a numerical range, means 'at least X but no greater than Y' (X<Y) or 'no greater than X but at least Y' (X>Y). In the present invention, 'mass %' is used for the same meaning as 'weight%', and 'parts by mass' is used for the same meaning as 'parts by weight'. Furthermore, '(Component A) a monofunctional polymerizable compound', etc., may simply be called 'Component A', etc.

In the present invention, a combination of preferred embodiments is more preferable.

The present invention is explained in detail below.

I. Ink composition

A radiation curable inkjet colored ink composition (colored ink composition) and a radiation curable inkjet clear ink composition (clear ink composition) used in the image formation method of the present invention are now explained. In the explanation below, when referring simply to an 'ink composition', it means the colored ink composition and the clear ink composition collectively.

The image formation method of the present invention forms an image layer by means of the colored ink composition and a clear layer by means of the clear ink composition. Furthermore, the clear layer is formed as a non-continuous layer above the image layer by dispersing the clear ink composition.

In the present invention, both of the colored ink composition and the clear ink composition is an actinic radiation curing ink composition and an oilbased ink composition that can be cured by actinic radiation. The 'actinic radiation' referred to here is radiation that can provide energy that enables an initiating species to be generated in the ink composition when irradiated, and includes $\alpha$ rays, $\gamma$ rays, X rays, UV rays, visible light, and an electron beam. Among these, UV rays and an electron beam are preferable from the viewpoint of curing sensitivity and the availability of equipment, and UV rays are more preferable.

Furthermore, since the ink composition of the present invention is a radiation-curable ink composition and is cured after being applied onto a recording medium, it is preferable that it does not contain volatile solvent and is solvent-free. This is because, if volatile solvent remains in a cured ink image, the solvent resistance is degraded, and the VOC (Volatile Organic Compound) problem based remaining on volatile solvent occurs. The content of a solvent, including water, is preferably 5 mass % or less, more preferably 3 mass % or less, yet more preferably 1 mass % or less, and most preferably the ink composition substantially contains no solvent. However, a case in which the ink composition comprises a slight amount of water, etc. due to it absorbing moisture in the air in a usual application mode is not excluded.

The polymerizable compounds, which are characteristic components of the colored ink composition and the clear ink composition, are explained below for each ink composition, and other components are then explained.

I-1. Radiation curable inkjet colored ink composition

The radiation curable colored inkjet ink composition (colored ink composition) used in the present invention comprises a monofunctional polymerizable compound in an amount of at least 50 mass % of polymerizable compounds.

The content of the monofunctional polymerizable compound is preferably at least 60 mass % of the polymerizable compounds, more preferably at least 70 mass %, yet more preferably at least 80 mass %, particularly preferably at least 90 mass %, and most preferably at least 95 mass %.

Furthermore, it comprises a polyfunctional polymerizable compound in an amount of no greater than 50 mass % of the polymerizable compounds, preferably no greater than 40 mass %, more preferably no greater than 30 mass %, yet more preferably no greater than 20 mass %, yet more preferably no greater than 10 mass %, and particularly preferably no greater than 5 mass %.

When the contents of the monofunctional polymerizable compound and the polyfunctional polymerizable compound are in these ranges, an image layer having excellent adhesion to a recording medium (substrate) and having excellent stretchability is obtained.

The colored ink composition preferably comprises a polymerizable compound at 50 to 98 mass % of the entire ink composition, more preferably 55 to 96 mass %, and yet more preferably 60 to 95 mass %. It is preferable for the content of the polymerizable compound to be in this range since an image layer having excellent curability and having excellent substrate adhesion and stretchability is obtained.

The polymerizable compound referred to here is not particularly limited as long as it is a compound having at least one polymerizable group, and includes any of monomer, oligomer, or polymer forms.

The polymerizable group may be either of a cationically polymerizable group and a radically polymerizable group, examples of the cationically polymerizable group including an epoxy group, an oxetanyl group, and a vinyl ether group, and examples of the radically polymerizable group including an ethylenically unsaturated group (ethylenically unsaturated bond).

In the present invention, the colored ink composition and the clear ink composition preferably comprise as the polymerizable compound a radically polymerizable compound.

In the present invention, a 'monomer' means a compound having a molecular weight (weight-average molecular weight when there is molecular weight distribution) of no greater than 1,000. The molecular weight (weight-average molecular weight when there is molecular weight distribution) is preferably 50 to 1,000, more preferably 70 to 800, and yet more preferably 90 to 600.

Furthermore, an 'oligomer' usually means a polymer having a constituent unit based on a limited number (usually 5 to 100) of monomers, the weight-average molecular weight of the oligomer being greater than 1,000 but less than 20,000, and preferably 1,500 to 10,000.

Moreover, a 'polymer' means a compound having a weight-average molecular weight greater than the oligomer region, the weight-average molecular weight being at least 20,000, preferably 20,000 to 50,000, more preferably 21,000 to 45,000, and yet more preferably 22,000 to 40,000.

The weight-average molecular weight is measured by a GPC method (gel permeation chromatograph method) and determined on a reference polystyrene basis. For example, an HLC-8220 GPC (Tosoh Corporation) is used as a GPC, with three columns of TSKgeL SuperHZM-H, TSKgeL SuperHZ4000, and TSKgeL SuperHZ2000 (Tosoh Corporation, 4.6 mm ID $\times$ 15cm) as columns, and THF (tetrahydrofuran) as eluent. The conditions are such that the sample concentration is 0.35 mass %, the flow rate is 0.35 mL/min, the amount of sample injected is 10 $\mu$L, the measurement temperature is 40°C, and an IR detector is used. Furthermore, a calibration curve is generated from eight samples of 'reference sample TSK standard, polystyrene', that is, 'F-40', 'F-20', 'F-4', 'F-1', 'A-5000', 'A-2500', 'A-1000', and 'n-propylbenzene' manufactured by Tosoh Corporation.

In the present invention, the colored ink composition preferably comprises a monofunctional polymerizable monomer as the monofunctional polymerizable compound. It is preferable for at least 50 mass % of the monofunctional polymerizable compound to be a monofunctional polymerizable monomer, it is more preferable for at least 70 mass % to be a monofunctional polymerizable monomer, it is yet more preferable for at least 90 mass % to be a monofunctional polymerizable monomer, and it is even more preferable for the entire amount (100 mass %) of the monofunctional polymerizable compound to be a monofunctional polymerizable monomer.

Furthermore, the colored ink composition preferably comprises a polyfunctional polymerizable oligomer as the polyfunctional polymerizable compound. It is preferable for at least 50 mass % of the polyfunctional polymerizable compound to be a polyfunctional polymerizable oligomer, it is more preferable for at least 70 mass % to be a polyfunctional polymerizable oligomer, and it is yet more preferable for the entire amount (100 mass %) of the polyfunctional polymerizable compound to be a polyfunctional polymerizable oligomer.

When a plurality of colored ink compositions are used as the colored ink composition, it is preferable for all of the respective color ink compositions to satisfy the conditions described above.

(Component A) Monofunctional polymerizable compound

In the present invention, the colored ink composition preferably comprises (Component A-1) an *N*-vinyl compound as the monofunctional polymerizable compound.

(Component A-1) *N*-vinyl compound

In the present invention, the colored ink composition preferably comprises (Component A-1) an N-vinyl compound as the monofunctional polymerizable compound. In addition, one in which the clear ink comprises the *N*-vinyl compound is not excluded.

As the *N*-vinyl compound, an *N*-vinyllactam is preferably, *N*-vinylcaprolactam or 1-vinyl-2-pyrrolidone is more preferable, and *N*-vinylcaprolactam is particularly preferable. *N*-vinylcaprolactam is preferable since it has excellent safety, is commonly used and easily available at a relatively low price, and gives particularly good ink curability and adhesion of a cured film to a recording medium.

The content of Component A-1 in the colored ink compositionis preferably in the range of 5 to 60 mass % relative to the mass of the entire colored ink composition, more preferably in the range of 15 to 35 mass %. When the content is 5 mass % or greater the adhesion to a recording medium is excellent, and when the content is no greater than 60 mass % the storage stability is excellent.

(Component A-2) Monofunctional (meth)acrylate

The colored ink composition of the present invention preferably comporises (Component A-2) a monofunctional (meth)acrylate as the monofunctional polymerizable compound. Moreover, '(meth)acrylate' means both or either of 'acrylate' and 'methacrylate', and '(meth)acrylic' means both or either of 'acrylic' and 'methacrylic'. It is preferable for Component A-2 to be contained in the colored ink composition since the colored ink composition having an excellent curability, adhesion to a substrate, and stretchability can be obtained.

In the present invention, the colored ink preferably comprises as Component A-2 at least one monofunctional polymerizable monomer selected from the group consisting of (a-1) to (a-8) below.

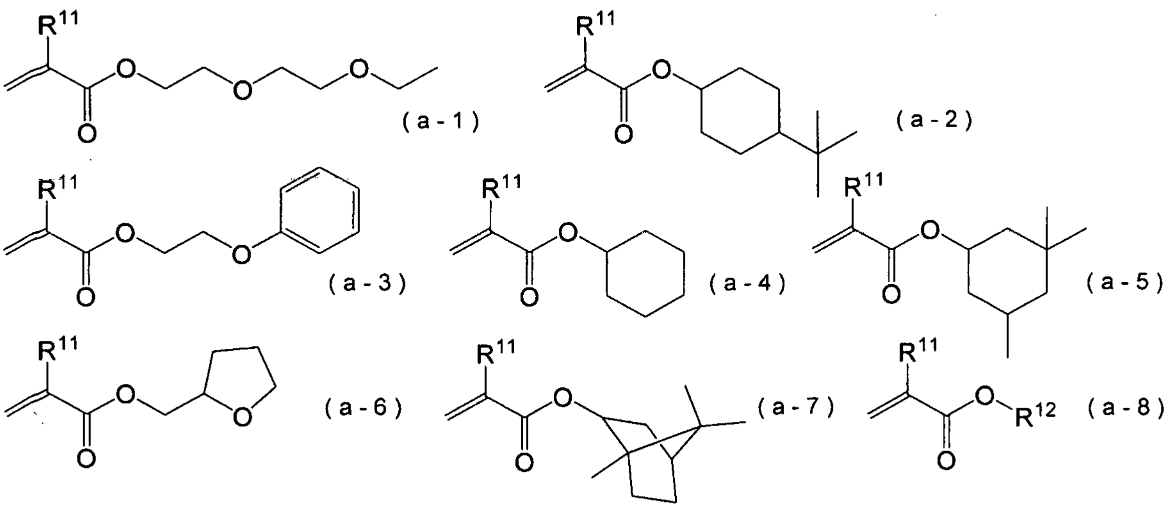

(a-1) (a-2) (a-3) (a-4) (a-5) (a-6) (a-7) (a-8)

(In Formulae, $R^{11}$ denotes a hydroxy atom or a methyl group, and $R^{12}$ denotes an alkyl group having 4 to 12 carbon atoms.)

The colored ink composition preferably comprises at least one monofunctional polymerizable monomer selected from the group consisting of (a-1) to (a-8). $R^{11}$ denotes a hydroxy atom or a methyl group, and preferably a hydroxyl atom.

The colored ink composition preferably comprises at least isobornyl (meth)acrylate (a-7). The colored ink composition preferably comprises at least one monofunctional polymerizable monomer selected from the group consisting of (a-1) to (a-6) and (a-8) in combination with isobornyl (meth)acrylate, and particularly preferably comprises isobornyl (meth)acrylate (a-7) and phenoxyethyl (meth)acrylate. By using isobornyl (meth)acrylate (a-7) and phenoxyethyl (meth)acrylate in combination, a cured film having an excellent curability, an excellent adhesion to a substrate, and an excellent stretchability can be obtained.

When the colored ink composition comprises isobornyl (meth)acrylate (a-7) and at least one monofunctional monomer selected from the group consisting of (a-1) to (a-6) and (a-8), it is preferable for A:B to be 0.5:9.5 to 9.5:0.5

wherein the content of isobornyl (meth)acrylate in the colored ink composition is A (mass %) and the total content of the monofunctional monomer selected from the group consisting of (a-1) to (a-6) and (a-8) is B (mass %); it is more preferably 1:9 to 9:1, and yet more preferably 2:8 to 8:2. When A:B is in this range, an image having excellent stretchability and excellent suitability for punching is obtained.

The colored ink composition preferably comprises the monofunctional monomers selected from the group consisting of (a-1) to (a-8) in total at 10 to 85 mass % of the entire colored ink composition, more preferably 20 to 75 mass %, and yet more preferably 30 to 65 mass %.

It is preferable for the content to be in this range since the stretchability is excellent and suitability for punching is excellent.

The ink composition of the present invention may comprise other monofunctional (meth)acrylate compound other than Component A-2. Specific examples of the monofunctional (meth)acrylate compound other than Component A-2 include isoamyl (meth)acrylate, stearyl (meth)acrylate, lauryl (meth)acrylate, isomyristic (meth)acrylate, isostearyl (meth)acrylate, 2-ethylhexyl diglycol (meth)acrylate, 2-hydroxybutyl (meth)acrylate, buthoxyethyl (meth)acrylate, methoxydiethylene glycol (meth)acrylate, methoxypolyethylene glycol (meth)acrylate, methoxypropylene glycol (meth)acrylate, 2-hydroxyethyl (meth)acrylate, 2-hydroxypropyl (meth)acrylate, 2-(meth)acryloyloxyethylsuccinic acid, 2-(meth)acryloyloxyethyl-2-hydroxyethylphthalic acid, a lactone-modified flexible (meth)acrylate, cyclopentenyl (meth)acrylate, cyclopentenyloxyethyl (meth)acrylate, dicyclopentanyl (meth)acrylate, dicyclopentanyloxyethyl (meth)acrylate, benzyl. (meth)acrylate, and cyclic trimethylolpropane formal (meth)acrylate, etc.

(Component B) Polyfunctional polymerizable compound

In the present invention, the colored ink composition may comprise (Component B) a polyfunctional polymerizable compound as the polymerizable compound, the polyfunctional polymerizable compound being preferably a polyfunctional radically polymerizable compound, and a radically polymerizable group being preferably an ethylenically unsaturated group, and more preferably a (meth)acryloyl group.

That is, Component B is preferably a polyfunctional (meth)acrylate compound, and particularly preferably a polyfunctional (meth)acrylate oligomer.

The oligomer having a (meth)acryloyl group as a functional group is preferable. The oligomer having an acryloyl group, that is, an acrylate oligomer is particularly preferable.

From the viewpoint of a balance between flexibility and curability, it is preferable for the number of the functional group contained in the oligomer to be 2 to 15 per oligomer molecule, more preferably 2 to 6, yet more preferably 2 to 4, and particularly preferably 2.

Examples of the oligomer in the present invention include a polyester (meth)acrylate-based oligomer, an olefin-based oligomer (an ethylene oligomer, a propylene oligomer, a butene oligomer, etc.), a vinyl-based oligomer (a styrene oligomer, a vinyl alcohol oligomer, a vinylpyrrolidone oligomer, a (meth)acrylate oligomer, etc.), a diene-based oligomer (a butadiene oligomer, a chloroprene rubber, a pentadiene oligomer, etc.), a ring-opening polymerization type oligomer (di-, tri-, tetra-ethylene glycol, polyethylene glycol, polyethylimine, etc.), an addition-polymerization type oligomer (an oligoester (meth)acrylate, a polyamide oligomer, a polyisocyanate oligomer), an addition-condensation oligomer (a phenolic resin, an amino resin, a xylene resin, a ketone resin, etc.), amine-modified polyester oligomer, and silicone oligomer (silicone (meth)acrylate oligomer, etc.) etc. Among these, a silicone oligomer is preferable, and a silicone (meth)acrylate oligomer is particularly preferable.

With regard to the oligomer, one type thereof may be used on its own or two or more types may be used in combination.

Examples of the silicone-based oligomer include a silicone-containing compound (primarily a polydialkylsiloxane) having an acryloyl group, a methacryloyl group, or a vinyl group at a molecular terminal or in a side chain, and those having an acryloyl group or a methacryloyl group are preferable. It is possible by the use of a silicone-based oligomer to obtain an image that is excellent in terms of blocking resistance and stretchability of a cured film.

Specific examples include compounds described in paragraphs 0012 to 0040 of JP-A-2009-185186.

In the present invention, as the silicone oligomer, the commercial materials below may be used.

Ebecryl 350 and Ebecryl 4842 (both manufactured by DAICEL-ALLNEX LTD.), PERENOL S-5 (manufactured by Cognis), RC149, RC300, RC450, RC709, RC710, RC711, RC720, and RC802 (all manufactured by Goldschmidt Chemical Corporation), FM0711, FM0721, FM0725, and PS583 (all manufactured by Chisso Corporation), KP-600, X-22-164, X-22-164AS, X-22-164A, X-22-164B, X-22-164C, and X-22-164E (all manufactured by Shin-Etsu Chemical Co., Ltd.), BYK UV3500, BYK UV3570, and BYK Silclean 3700 (all manufactured by BYK Chemie), TEGO Rad 2100, TEGO Rad 2200N, TEGO Rad 2250N, TEGO Rad 2300, TEGO Rad 2500, TEGO Rad 2600, and TEGO Rad 2700 (all manufactured by Degussa), and DMS-V00, DMS-V03, DMS-V05, DMS-V21, DMS-V22, DMS-V25, DMS-V25R, DMS-V31, DMS-V33, DMS-V35, DMS-V41, DMS-V42, DMS-V46, DMS-V52, DMS-V25R, DMS-V35R, PDV-0325, PDV 0331, PDV 0341, PDV 0346, PDV 0525, PDV 0541, PDV 1625, PDV 1631, PDV 1635, PDV 1641, PDV 2331, PDV 2335, PMV-9925, PVV-3522, FMV-4031, EDV-2025, VDT-123, VDT-127, VDT-131, VDT-153, VDT-431, VDT-731, VDT-954, VDS-2513, VDV-0131, VGM-021, VGP-061, VGF-991, VQM-135, VQM-146, VQX-221, VMS-005, VMS-T11, VTT-106, MTV-124, VAT-4326, VBT-1323, VPT-1323, VMM-010, VEE-005, and VPE-005 (all manufactured by Gelest, Inc.).

Furthermore, it may comprise an oligomer other than the silicone-based oligomer, examples thereof including a polyethylene glycol di(meth)acrylate, polyurethane oligomer, and polyester oligomer having a molecular weight in the oligomer region.

As the polyurethane oligomer, urethane (meth)acrylate oligomer is preferable, and examples thereof include an aliphatic polyurethane (meth)acrylate oligomer and an aromatic polyurethane (meth)acrylate oligomer. With respect to the oligomer, 'Origomar Handobukku (Oligomer Handbook)' (edited by Junji Furukawa, The Chemical Daily Co., Ltd.) may also be referred to.

Examples of the polyurethane (meth)acrylate oligomer include U-2PPA, U-4HA, U-6HA, U-6LPA, U-15HA, U-324A, UA-122P, UA5201, UA-512, etc. manufactured by Shin-Nakamura Chemical Co., Ltd.; CN964A85, CN964, CN959, CN962, CN963J85, CN965, CN982B88, CN981, CN983, CN996, CN9002, CN9007, CN9009, CN9010, CN9011, CN9178, CN9788, CN9893 manufactured by Sartomer Japan; EB204, EB230, EB244, EB245, EB270, EB284, EB285, EB810, EB4830, EB4835, EB4858, EB1290, EB210, EB215, EB4827, EB4830, EB4849, EB6700, EB204, EB8402, EB8804, EB8800-20R, etc. manufactured by DAICEL-CYTEC COMPANY LTD.

Examples of the polyester oligomer preferably include amine-modified polyester oligomer such as EB524, EB80, EB81 manufactured by DAICEL-ALLNEX LTD.; CN550, CN501, CN551 manufactured by Sartomer; GENOMER5275 manufactured by RAHN AG.

From the viewpoint of a balance between curability and adhesion, the content of the polyfunctional polymerizable oligomer is preferably 0.3 to 10 mass % relative to the total mass of the ink composition, more preferably 0.5 to 5 mass %, and yet more preferably 1 to 3 mass %.

In the present invention, the colored ink composition may comprise a polyfunctional polymerizable compound other than those described above, examples thereof including a polyfunctional polymerizable monomer.

Due to the colored ink composition comprising a polyfunctional polymerizable monomer, high curability can be obtained. Specific examples of the polyfunctional polymerizable monomer include a polyfunctional polymerizable monomer used in the clear ink, which is described later, and a polyfunctional (meth)acrylate monomer is particularly preferable.

I-2. Clear ink composition

The radiation curable inkjet clear ink composition (clear ink composition) used in the present invention comprises a polyfunctional polymerizable compound in an amount of at least 50 mass % of polymerizable compounds.

The content of the polyfunctional polymerizable compound is preferably at least 55 mass % of the polymerizable compounds, more preferably at least 60 mass %, yet more preferably at least 65 mass %, and particularly preferably at least 70 mass %.

Furthermore, the monofunctional polymerizable compound is contained at no greater than 50 mass % of the polymerizable compounds, preferably no greater than 45 mass %, more preferably no greater than 40 mass %, yet more preferably no greater than 35 mass %, and even more preferably no greater than 30 mass %.

When the contents of the monofunctional polymerizable compound and the polyfunctional polymerizable compound are in these ranges, sticking to a mold is suppressed effectively.

A plurality of clear ink compositions may be used as the clear ink composition, and it is preferable for all of the clear ink compositions to satisfy the above conditions.

The clear ink composition preferably comprises a polymerizable compound at 50 to 98 mass % of the entire ink composition, more preferably 60 to 95 mass %, and yet more preferably 70 to 90 mass %. It is preferable for the content of the polymerizable compound to be within this range since a clear layer that has excellent curability and excellent substrate adhesion and stretchability can be obtained.

In the present invention, the clear ink composition preferably comprises a polyfunctional polymerizable monomer as the polyfunctional polymerizable compound. It is preferable for at least 50 mass % of the polyfunctional polymerizable compound to be a polyfunctional polymerizable monomer, it is more preferable for at least 70 mass % to be a polyfunctional polymerizable monomer, it is yet more preferable for at least 90 mass % to be a polyfunctional polymerizable monomer, and it is even more preferable for at least 95 mass % to be a polyfunctional polymerizable monomer.

Furthermore, the clear ink composition preferably comprises a monofunctional polymerizable monomer as the monofunctional polymerizable compound. It is preferable for at least 50 mass % of the monofunctional polymerizable compound to be a monofunctional polymerizable monomer, it is more preferable for at least 70 mass % to be a monofunctional polymerizable monomer, and it is yet more preferable for the entire amount (100 mass %) of the monofunctional polymerizable compound to be a monofunctional polymerizable monomer.

(Component A') Monofunctional polymerizable compound

The clear ink composition may comprise (Component A') a monofunctional polymerizable compound, and it is preferable for it to comprise Component A'.

Component A' is preferably a monofunctional (meth)acrylate monomer explained as the monofunctional (meth)acrylate (Component A-2) for the colored ink composition, and in particular a monofunctional (meth)acrylate monomer selected from the group consisting of (a-1) to (a-8) is more preferable.

Among them, isobornyl acrylate is suitable.

The contents of the monofunctional polymerizable compound and the monofunctional polymerizable monomer are preferably 1 to 45 mass % of the entire clear ink composition, more preferably 2 to 40 mass %, yet more preferably 3 to 30 mass %, and particularly preferably 5 to 20 mass %.

It is preferable for the contents of the monofunctional polymerizable compound and the monofunctional polymerizable monomer to be in this range since sticking to a mold is suppressed and an image that is excellent in terms of stretchability and punching suitability is obtained.

(Component B') Polyfunctional polymerizable compound

The clear ink composition comprises (Component B') a polyfunctional polymerizable compound in an amount of at least 50 mass % of the entire polymerizable compounds. Preferred examples of Component B' include a polyfunctional polymerizable monomer, and a polyfunctional (meth)acrylate monomer is particularly preferable.

The polyfunctional (meth)acrylate monomer is not particularly limited as long as it is a monomer having two or more in total of an acryloyl group and/or a methacryloyl group, and it may be selected as appropriate from known polyfunctional (meth)acrylate monomers.

The polyfunctional (meth)acrylate monomer may have two or more (meth)acryloyl groups in total, preferably has 2 to 6 (meth)acryloyl groups (di- to hexa-functional), more preferably has 2 to 4 (meth)acryloyl groups (di- to tetrafunctional), and yet more preferably has 2 or 3 (meth)acryloyl groups (difunctional or trifunctional).

The clear ink composition preferably comprises as the polyfunctional polymerizable monomer a polyfunctional polymerizable compound having a glass transition temperature (Tg) of at least 80°C, and more preferably comprises a polyfunctional polymerizable monomer having a glass transition temperature (Tg) of at least 80°C.

It is preferable for it to comprise a polyfunctional polymerizable monomer having a Tg of at least 80°C since sticking to a mold is suppressed.

Here, the glass transition temperature of a polyfunctional polymerizable compound means the glass transition temperature of a homopolymer of this polyfunctional polymerizable compound. Specifically, a polymerization initiator is added to a polyfunctional polymerizable compound to thus obtain a homopolymer having a weight-average molecular weight of at least 10,000. The glass transition temperature (Tg) may be measured by a differential scanning calorimeter in accordance with for example ASTM D3418-8.

The glass transition temperature (Tg) changes according to the molecular weight, but when the weight-average molecular weight is 10,000 or greater, the variation of Tg with molecular weight is negligible.

The glass transition temperature is not particularly limited as long as it is at least 80°C, but it is preferably 80°C to 300°C, more preferably 85°C to 300°C, and yet more preferably 90°C to 300°C.

The clear ink composition comprises a polyfunctional polymerizable compound having a Tg of at least 80°C, and preferably comprises a polyfunctional polymerizable monomer having a Tg of at least 80°C, in an amount of preferably at least 30 mass % in the ink composition, more preferably 40 to 90 mass %, and yet more preferably 55 to 85 mass %.

Furthermore, among polyfunctional polymerizable monomers contained in the clear ink composition, it is preferable for at least 50 mass % thereof to be a polyfunctional polymerizable monomer having a Tg of at least 80°C, and it is more preferable for at least 70 mass % thereof to be so.

When the contents of the polyfunctional polymerizable compound having a Tg of at least 80°C and the polyfunctional polymerizable monomer having a Tg of at least 80°C are in these ranges, the clear layer has excellent hardness, and sticking to a mold is suppressed effectively.

Examples of the polyfunctional polymerizable compound having a Tg of at least 80°C include the polyfunctional polymerizable monomers below, but the present invention should not be construed as being limited to these compound examples.

b-1: 3-methyl-1,5-pentanediol diacrylate (Tg: 105°C)
b-2: dipropylene glycol diacrylate (Tg: 101°C)
b-3: tripropylene glycol diacrylate (Tg: 90°C)
b-4: neopentyl glycol diacrylate (Tg: 117°C)
b-5: tricyclodecanedimethanol diacrylate (Tg: 186°C)

b-6: trimethylolpropane triacrylate (Tg: > 250°C)
b-7: dioxane diacrylate (Tg: 156°C)
b-8: 1,10-decanediol diacrylate (Tg: 91°C)
b-9: pentaerythritol triacrylate (Tg: > 250°C)
b-10: pentaerythritol tetraacrylate (Tg: > 250°C)
b-11: ditrimethylolpropane tetraacrylate (Tg: > 250°C)
b-12: dipentaerythritol pentaacrylate (Tg: > 250°C)

The clear ink composition preferably comprises at least one polyfunctional polymerizable monomer having a Tg of at least 80°C selected from the group consisting of b-1 to b-12, and one type thereof may be used on its own or two or more types may be used in combination.

Among them, the clear ink composition preferably comprises at least one polyfunctional polymerizable monomer selected from the group consisting of b-1, b-2, b-5, b-6, b-10, and b-12, and more preferably comprises at least one polyfunctional polymerizable monomer selected from the group consisting of b-1, b-2, b-5, and b-6, that is, the clear ink composition preferably comprises at least one polyfunctional polymerizable compound (polyfunctional polymerizable monomer) selected from the group consisting of the polymerizable compounds below as the polyfunctional polymerizable compound having a glass transition temperature of at least 80°C.

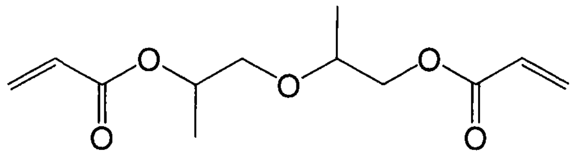

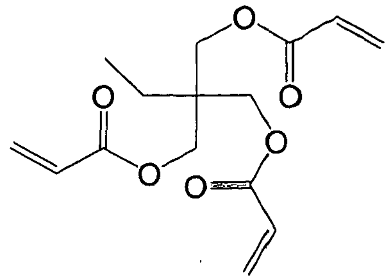

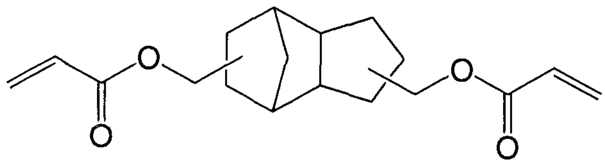

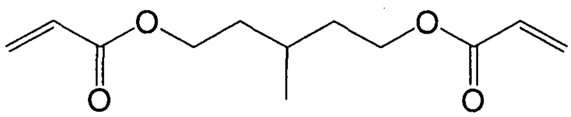

In the present invention, it is particularly preferable for the clear ink composition to comprise b-2, b-6, and b-5 in combination.

Due to the use of b-2, b-6, and b-5 in combination, sticking to a mold is suppressed effectively.

The clear ink composition may comprise other polyfunctional polymerizable monomer other than the above-mentioned polyfunctional polymerizable monomer.

Example thereof include bis(4-acryloyloxypolyethoxyphenyl)propane, ethoxylated (2) neopentyl glycol di(meth)acrylate (compound formed by di(meth)acrylating neopentyl glycol ethylene oxide 2 mole adduct), propoxylated (2) neopentyl glycol di(meth)acrylate (compound formed by di(meth)acrylating neopentyl glycol propylene oxide 2 mole adduct), 1,6-hexanediol di(meth)acrylate, 1,9-nonanediol di(meth)acrylate, ethylene glycol di(meth)acrylate, diethylene glycol di(meth)acrylate, triethylene glycol di(meth)acrylate, tetraethylene glycol di(meth)acrylate, polyethylene glycol di(meth)acrylate, dipropylene glycol di(meth)acrylate, tripropylene glycol di(meth)acrylate, tetrapropylene glycol di(meth)acrylate, polypropylene glycol di(meth)acrylate, ethoxylated trimethylolpropane tri(meth)acrylate, pentaerythritol tetra (meth)acrylate, tetramethylolmethane tetra(meth)acrylate, tetramethylolmethane tri(meth)acrylate, dimethyloltricyclodecane di(meth)acrylate, modified glycerol tri(meth)acrylate, modified bisphenol A di(meth)acrylate, bisphenol A propylene oxide (PO) adduct di(meth)acrylate, bisphenol A ethylene oxide (EO) adduct di(meth)acrylate, dipentaerythritol hexa(meth)acrylate, caprolactone-modified dipentaerythritol hexa(meth)acrylate, and propyleneglycol di(meth)acrylate, etc.

Furthermore, the clear ink composition preferably comprises the polyfunctional polymerizable oligomer described above for the colored ink composition, and the polyfunctional polymerizable oligomer is preferably a silicone-based oligomer.

As the silicone-based oligomer, a silicone-based (meth)acrylate oligomer is preferable, and from the viewpoint of achieving a balance between curability and adhesion, it preferably comprises a silicone-based (meth)acrylate oligomer at 0.3 to 10 mass % in the clear ink composition, more preferably 0.5 to 5 mass %, and yet more preferably 1 to 3 mass %.

(Component C) Polymerization initiator

In the present invention, the ink composition (the colored ink composition and the clear ink composition) preferably comprises (Component C) a polymerization initiator, and more preferably comprises a radical polymerization initiator as the polymerization initiator.

As the radical polymerization initiator that can be used in the present invention, a known radical polymerization initiator may be used. The radical polymerization initiator that can be used in the present invention may be used singly or in a combination of two or more types. Moreover, a radical polymerization initiator and a cationic polymerization initiator can be used in combination.

The polymerization initiator that can be used in the present invention is a compound that forms a polymerization initiating species such as radical, etc. by absorbing external energy. The external energy used for initiating polymerization can be broadly divided into heat and actinic radiation, a thermal polymerization initiator and a photopolymerization initiator are used respectively. Examples of the actinic radiation include $\gamma$ rays, $\beta$ rays, an electron beam, ultraviolet rays, visible light, and infrared rays.

Examples of the radical polymerization initiator that can be used in the present invention include (a) an aromatic ketone, (b) an acylphosphine compound, (c) an aromatic onium salt compound, (d) an organic peroxide, (e) a thio compound, (f) a hexaarylbiimidazole compound, (g) a ketoxime ester compound, (h) a borate compound, (i) an azinium compound, (j) a metallocene compound, (k) an active ester compound, (l) a compound having a carbon-halogen bond, (m) an alkylamine compound, etc. With regard to these radical polymerization initiators, the above-mentioned compounds (a) to (m) may be used singly or in combination. The radical polymerization initiator that can be used in the present invention is preferably used singly or in a combination of two or more types.

In the present invention, Component C is preferably (Component C-1) a bisacylphosphine compound and (Component C-2) a monoacylphosphine compound.

Preferred examples of Component C-1 and Component C-2 include bisacylphosphine oxide compounds and monoacylphosphine compounds described in paragraphs 0080 to 0098 of JP-A-2009-096985.

As the bisacylphosphine oxide compound, bis(2,4,6-trimethylbenzoyl)phenylphosphine oxide (IRGACURE 819, manufactured by Ciba Japan) is preferable.

As the monoacylphosphine oxide compound, 2,4,6-trimethylbenzoyldiphenylphosphine oxide (Darocur TPO manufactured by Ciba Japan, Lucirin TPO manufactured by BASF) is preferable.

In the present invention, the colored ink composition preferably comprises a bisacylphosphine oxide compound (Component C-1) and/or a monoacylphosphine oxide compound (Component C-2).

Furthermore, the colored ink composition preferably comprises at least a bisacylphosphine oxide compound (Component C-1) as Component C. It is preferable for the colored ink composition to comprise Component C-1 since the excellent curability can be obtained even if a small amount is added. In addition, compared with a monoacylphosphine oxide compound, a bisacylphosphine oxide compound can improve ink sensitivity with a low amount thereof added, but from the viewpoint of a printed material being colored yellow it is not suitable for a clear ink. Because of this, in the colored ink for which yellowing of an image is not conspicuous compared with the clear ink, it is preferable to use a bisacylphosphine oxide compound and a monoacylphosphine oxide compound in combination.

In the colored ink composition, when the total amount of radical polymerization initiator is 100 parts by mass, the total amount of Component C-1 and Component C-2 is preferably at least 20 parts by mass, more preferably at least 25 parts by mass, and yet more preferably at least 30 parts by mass.

Furthermore, in the present invention, the clear ink composition preferably comprises a monoacylphosphine oxide compound (Component C-2) as the polymerization initiator (Component C).

It is preferable for the clear ink composition to comprise Component C-2 as Component C since yellowing of the image is suppressed and excellent curability is obtained.

In the clear ink composition, when the total amount of radical polymerization initiator is 100 parts by mass, it is preferable for it to comprise at least 50 parts by mass of the monoacylphosphine oxide compound, more preferably 60 to 100 parts by mass, yet more preferably 70 to 100 parts by mass, and particularly preferably substantially 100 parts by mass.

The ink composition of the present invention preferably comprises (Component C-3) a thioxanthone compound and/or a thiochromanone compound. In particular, from the viewpoint of curability, the colored ink composition preferably comprises Component C-3.

Examples of the thioxanthone compound include thioxanthone, 2-isopropylthioxanthone, 4-isopropylthioxanthone, 2-chlorothioxanthone, 2-dodecylthioxanthone, 2,4-diethylthioxanthone, 2,4-dimethylthioxanthone, 1-methoxycarbonylthioxanthone, 2-ethoxycarbonylthioxanthone, 3-(2-methoxyethoxycarbonyl)thioxanthone, 4-butoxycarbonylthioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminothioxanthone, 1-ethoxycarbonyl-3-phenylsulfurylthioxanthone, 3,4-di[2-(2-methoxyethoxy)ethoxycarbonyl]thioxanthone, 1-ethoxycarbonyl-3-(1-methyl-1-morpholinoethyl)thioxanthone, 2-methyl-6-dimethoxymethylthioxanthone, 2-methy)-6-(1,1-dimethoxybenzyl)thioxanthone, 2-morpholinomethylthioxanthone, 2-methyl-6-morpholinomethylthioxanthone, n-allylthioxanthone-3,4-dicarboximide, n-octylthioxanthone-3,4-dicarboxyimide, *N*-(1,1,3,3-tetramethylbutyl)thioxanthone-3,4-dicarboxyimide, 1-phenoxythioxanthone, 6-ethoxycarbonyl-2-methoxythioxanthone, 6-ethoxycarbonyl-2-methylthioxanthone, thioxanthone-2-polyethylene glycol ester, and 2-hydroxy-3-(3,4-dimethyl-9-oxo-9*H*-thioxanthon-2-yloxy)-*N*,*N*,*N*-trimethyl-1-propanaminium chloride.

Among them, from the viewpoint of ready availability and curability, 2,4-diethylthioxanthone, 2-isopropylthioxanthone, and 4-isopropylthioxanthone are more preferable.

Preferred examples of the thiochromanone compound include those described in for example paragraphs 0039 to 0054 of JP-A-2009-084423.

Among them, (I-14), (I-17) and (I-19) are preferable, and (I-14) is particularly preferable.

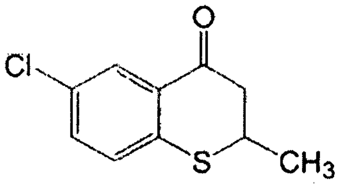
(I - 14)

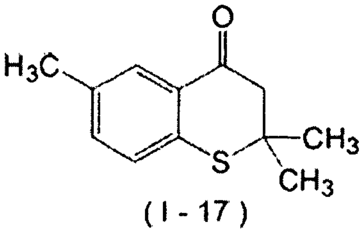
(I - 17)

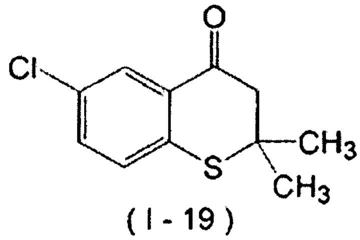
(I - 19)

Other polymerization initiator

The ink composition of the present invention may comprise other polymerization initiator other than Component C-1 to Component C-3. As the other polymerization initiator, (Component C-4) an alkylphenone compound is preferable.

Preferred examples of the alkylphenone compound include a commercial product such as IRGACURE 184 (manufactured by BASF Japan), IRGACURE 369 (manufactured by BASF Japan), IRGACURE 379 (manufactured by BASF Japan), IRGACURE 907 (manufactured by BASF Japan), and IRGACURE 2959 (manufactured by BASF Japan).

From the viewpoint of curability, the content of the alkylphenone compound (Component C-4) is preferably 0.1 to 15 mass % relative to the ink composition, more preferably 0.5 to 10 mass %, and yet more preferably 1 to 5 mass %.

Examples of the other polymerization initiator include aromatic ketones, aromatic onium salt compounds, organic peroxides, thio compounds, hexaarylbiimidazole compounds, ketoxime ester compounds, borate compounds, azinium compounds, metallocene compounds, active ester compounds, and carbon halogen bond-containing compounds. Details of the above-mentioned polymerization initiators are known to a person skilled in the art, and are described in for example paragraphs 0090 to 0116 of JP-A-2009-185186.

In the colored ink composition, the total amount of the radical polymerization initiator is preferably 1 to 20 mass % relative to the total mass of the colored ink composition, more preferably 2 to 18 mass %, and yet more preferably 3 to 16 mass %.

The total amount of the radical polymerization initiator in the clear ink composition is preferably 1 to 20 mass % relative to the total mass of the clear ink composition, more preferably 3 to 18 mass %, and yet more preferably 5 to 16 mass %.

When the content of the radical polymerization initiator of the colored ink composition and the clear ink composition is in the range, the curability is excellent.

(Component D) Colorant

The colored ink composition of the present invention comprises (Component D) a colorant corresponding to each color.

The clear ink comprises substantially no colorant. 'Comprises substantially no colorant' means that the content of the colorant in the clear ink composition is no greater than 1 mass %. The content of Component D is preferably no greater than 0.5 mass %, more preferably no greater than 0.1 mass %, and yet more preferably no greater than 0.05 mass %. It is particularly preferable for the clear ink composition to comprise no colorant. In addition, one in which the clear ink comprises a slight amount of (no greater than 1 mass % of) blue pigment or the like in order to control a hue of the clear ink is not excluded.

The colorant that can be used in the present invention is not particularly limited, and various known pigments and dyes may be selected appropriately according to an intended application. Among them, as a colorant, a pigment is particularly preferable from the viewpoint of excellent light fastness.

Pigments that are preferably used in the present invention are now described.

With regard to the pigments, there is no particular limitation, and any generally commercially available organic pigment and inorganic pigment, resin particles dyed with a dye, etc. may be used. Furthermore, a commercial pigment dispersion or a surface-treated pigment such as, for example, a dispersion of a pigment in an insoluble resin, etc. as a dispersion medium or a pigment having a resin grafted on the surface, etc. may be used as long as the effects of the present invention are not impaired.

Examples of these pigments include pigments described in, for example, 'Ganryo no Jiten (Pigment Dictionary)', Ed. by Seishiro Ito (2000), W. Herbst, K. Hunger, Industrial Organic Pigments, JP-A-2002-12607, JP-A-2002-188025, JP-A-2003-26978, and JP-A-2003-342503.

Specific examples of the organic pigment and the inorganic pigment that can be used in the present invention include, as those exhibiting a yellow color, monoazo pigments such as C.I. Pigment Yellow 1 (Fast Yellow G, etc.) and C.I. Pigment Yellow 74, disazo pigments such as C.I. Pigment Yellow 12 (Disazo Yellow AAA, etc.) and C.I. Pigment Yellow 17, benzidine-free azo pigments such as C.I. Pigment Yellow 180, azo lake pigments such as C.I. Pigment Yellow 100 (Tartrazine Yellow Lake, etc.), condensed azo pigments such as C.I. Pigment Yellow 95 (Azo Condensation Yellow GR, etc.), acidic dye lake pigments such as C.I. Pigment Yellow 115 (Quinoline Yellow Lake, etc.), benzimidazolone pigments such as and C.I. Pigment Yellow 120 (Novoperm Yellow 2HG), basic dye lake pigments such as C.I. Pigment Yellow 18 (Thioflavine Lake, etc.), anthraquinone pigments such as Flavanthrone Yellow (Y-24), isoindolinone pigments such as Isoindolinone Yellow 3RLT (Y-110), quinophthalone pigments such as Quinophthalone Yellow (Y-138), isoindoline pigments such as Isoindoline Yellow (Y-139), nitroso pigments such as C.I. Pigment Yellow 153 (Nickel Nitroso Yellow, etc.), and metal complex azomethine pigments such as C.I. Pigment Yellow 117 (Copper Azomethine Yellow, etc.).

Examples of pigments exhibiting a red or magenta color include monoazo pigments such as C.I. Pigment Red 3 (Toluidine Red, etc.), disazo pigments such as C.I. Pigment Red 38 (Pyrazolone Red B, etc.), azo lake pigments such as C.I. Pigment Red 53:1 (Lake Red C, etc.) and C.I. Pigment Red 57:1 (Brilliant Carmine 6B), condensed azo pigments such as C.I. Pigment Red 144 (Azo Condensation Red BR, etc.), acidic dye lake pigments such as C.I. Pigment Red 174 (Phloxine B Lake, etc.), basic dye lake pigments such as C.I. Pigment Red 81 (Rhodamine 6G' Lake, etc.), anthraquinone pigments such as C.I. Pigment Red 177 (Dianthraquinonyl Red, etc.), thioindigo pigments such as C.I. Pigment Red 88 (Thioindigo Bordeaux, etc.), perinone pigments such as C.I. Pigment Red 194 (Perinone Red, etc.), perylene pigments such as C.I. Pigment Red 149 (Perylene Scarlet, etc.), quinacridone pigments such as C.I. Pigment violet 19 (unsubstituted quinacridone, CINQUASIA Magenta RT-355T; manufactured by Ciba Japan) and C.I. Pigment Red 122 (Quinacridone Magenta, etc.), isoindolinone pigments such as C.I. Pigment Red 180 (Isoindolinone Red 2BLT, etc.), and alizarin lake pigments such as C.I. Pigment Red 83 (Madder Lake, etc.).

Examples of pigments exhibiting a blue or cyan color include disazo pigments such as C.I. Pigment Blue 25 (Dianisidine Blue, etc.), phthalocyanine pigments such as C.I. Pigment Blue 15 (Phthalocyanine Blue, etc.) and C.I. Pigment Blue 15:3 (IRGALITE BLUE GLVO; manufactured by Ciba Japan), acidic dye lake pigments such as C.I. Pigment Blue 24 (Peacock Blue Lake, etc.), basic dye lake pigments such as C.I. Pigment Blue 1 (Victoria Pure Blue BO Lake, etc.), anthraquinone pigments such as C.I. Pigment Blue 60 (Indanthrone Blue, etc.), and alkali blue pigments such as C.I. Pigment Blue 18 (Alkali Blue V-5:1).

Examples of pigments exhibiting a green color include phthalocyanine pigments such as C.I. Pigment Green 7 (Phthalocyanine Green) and C.I. Pigment Green 36 (Phthalocyanine Green), and azo metal complex pigments such as C.I. Pigment Green 8 (Nitroso Green).

Examples of pigments exhibiting an orange color include isoindoline pigments such as C.I. Pigment Orange 66 (Isoindoline Orange) and anthraquinone pigments such as C.I. Pigment Orange 51 (Dichloropyranthrone Orange).

Examples of pigments exhibiting a black color include carbon black, titanium black, and aniline black.

Specific examples of white pigments that can be used include basic lead carbonate ($2PbCO_3Pb(OH)_2$, also known as silver white), zinc oxide (ZnO, also known as zinc white), titanium oxide ($TiO_2$, also known as titanium white), and strontium titanate ($SrTiO_3$, also known as titan strontium white).

Titanium oxide has, compared with other white pigments, a low specific gravity, a high refractive index, and is chemically and physically stable, and therefore has high hiding power and coloring power as a pigment and, furthermore, has excellent durability toward acids, alkalis, and other environments. It is therefore preferable to use titanium oxide as the white pigment. It is of course possible to use another white pigment (which can be any white pigment, in addition to the white pigments cited above) as necessary.

For dispersion of the colorant, for example, a dispersing machine such as a ball mill, a sand mill, an attritor, a roll mill, a jet mill, a homogenizer, a paint shaker, a kneader, an agitator, a Henschel mixer, a colloidal mill, an ultrasonic homogenizer, a pearl mill, or a wet type jet mill may be used.

For dispersion of the colorant, a dispersant such as a surfactant may be added. Furthermore, when the colorant is added, as a dispersion adjuvant, it is also possible to use a synergist as necessary according to the various types of colorant. The dispersion adjuvant is preferably used at at least 1 part by mass but no greater than 50 parts by mass relative to 100 parts by mass of the colorant.

In the colored ink composition, a solvent may be added as a dispersion medium for various components such as the colorant, or the polymerizable compound, which is a low molecular weight component, may be used as a dispersion medium without using a solvent, and since the colored ink composition of the present invention is preferably an actinic radiation curing type liquid and the colored ink composition is cured after being applied on top of a recording medium, it is preferable for it to be solvent-free. This is because, if solvent remains in the cured object formed from the cured colored ink composition, the solvent resistance is degraded and the VOC (Volatile Organic Compound) problem of residual solvent occurs. From this viewpoint, it is preferable to use the polymerizable compound as a dispersion medium. Among them, it is preferable to select a polymerizable compound having a low viscosity in terms of improvement of dispersion suitability and handling properties of the ink composition.

Since excellent coloration is achieved by finer particles, it is preferable for the average particle size of the colorant used here to be 0.01 μm to 0.4 μm, and more preferably 0.02 μm to 0.2 μm. In order to make the maximum particle size be no greater than 3 μm, and preferably no greater than 1 μm, it is preferable for the colorant, the dispersant, and the dispersion medium to be selected, and dispersion conditions and filtration conditions to be set. By such control of particle size, clogging of a head nozzle can be suppressed, and the storage stability of the colored ink composition, and the transparency and curing sensitivity of the ink composition can be maintained. In the present invention, by using a dispersant having excellent dispersibility and stability, a uniform and stable dispersed substance can be obtained even when a fine particulate colorant is used.

The particle size of the colorant may be measured by a known measurement method. Specifically, it may be measured by a centrifugal sedimentation light transmission method, an X-ray transmission method, a laser diffraction/scattering method, or a dynamic light scattering method. In the present invention, a value obtained by measurement using the laser diffraction/scattering method is employed.

The content of the colorant may be selected appropriately according to the color and the intended application, but from the viewpoint of image density and storage stability, it is preferably 0.5 to 30 mass % relative to the mass of the entire colored ink composition, more preferably 1.0 to 20 mass %, and particularly preferably 2.0 to 10 mass %.

(Other components)

The ink composition used in the present invention may comprise as necessary, in addition to the above-mentioned components, a surfactant, a polymerization inhibitor, a sensitizer, a co-sensitizer, a UV absorber, an antioxidant, an antifading agent, a conductive salt, a solvent, a polymer compound, a basic compound, a leveling additive, a matting agent and, for adjusting film physical properties, a polyester resin, polyurethane resin, vinyl resin, acrylic resin, rubber resin, or wax, etc. They are described in JP-A-2009-185186 and may be used in the present invention as well.

<Surfactant>

In the present invention, the ink composition may comprise a surfactant.

Examples of the surfactant used in the present invention include the surfactants below. For example, those described in JP-A-62-173463 and JP-A-62-183457 can be cited. Specific examples thereof include anionic surfactants such as dialkylsulfosuccinic acid salts, alkylnaphthalenesulfonic acid salts, and fatty acid salts, nonionic surfactants such as polyoxyethylene alkyl ethers, polyoxyethylene alkyl allyl ethers, acetylene glycols, and polyoxyethylene/polyoxypropylene block copolymers, and cationic surfactants such as alkylamine salts and quaternary ammonium salts. As the above known surfactants, an organofluoro compound may be used. The organofluoro compound is preferably hydrophobic. Examples of the organofluoro compound include fluorine-based surfactants, oil-like fluorine-based compounds (e.g. fluorine oils), and solid fluorine compound resins (e.g. tetrafluoroethylene resin), and those described in JP-B-57-9053 (8th to 17th columns) and JP-A-62-135826.

The surfactant used in the present invention is not particularly limited to the surfactants described above, and it may be an additive that, for the concentration added, is capable of reducing the surface tension efficiently.

The amount of surfactant added is not particularly limited, but from the viewpoint of stable discharge properties and surface tension being in a desired range, it is preferably 0.05 to 5 mass % of the entire ink, more preferably 0.1 to 3 mass %, and particularly preferably 0,3 to 2 mass %.

<Polymerization inhibitor>

The ink composition of the present invention preferably comprises a polymerization inhibitor from the viewpoint of improving the storage stability.

When the ink composition is used as an inkjet recording ink composition, it is preferably heated in the range of 25°C to 80°C to thus make it less viscous and then discharged, and in order to prevent clogging of a head due to thermal polymerization it is preferable to add a polymerization inhibitor. The polymerization inhibitor may be used singly

or in combination of two or more types. However, it is preferable to use two or more types in combination.

Examples of the polymerization inhibitor include a nitroso-based polymerization inhibitor, a hydroquinone, a benzoquinone, p-methoxyphenol, an *N*-oxyl-based polymerization inhibitor (TEMPO, TEMPOL (4-hydroxy TEMPO), etc.), Al cupferron, and a hindered amine. Among them, a nitroso-based polymerization inhibitor, a hindered amine-based polymerization inhibitor, a phenol-based polymerization initiator and an *N*-oxyl-based polymerization inhibitor are preferable. In the colored ink composition, preferable examples of the polymerization inhibitor include a combination of two or more compounds selected from the group consisting of a nitroso-based polymerization inhibitor, a hindered amine-based polymerization inhibitor, a phenol-based polymerization inhibitor, and an *N*-oxyl-based polymerization inhibitor, and a combination of a nitroso-based polymerization inhibitor and an *N*-oxyl-based polymerization inhibitor is particularly preferable.

Specific examples of the nitroso-based polymerization inhibitor preferably used in the present invention are shown below, but not limited thereto.

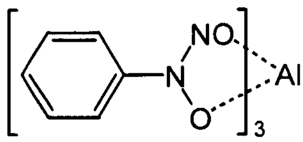
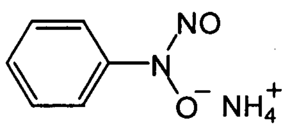
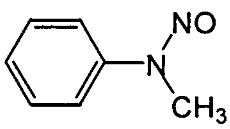
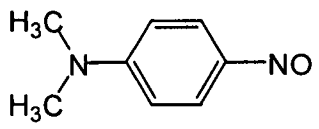

Examples of the nitroso-based polymerization inhibitor include a commercial product such as FIRSTCURE ST-1 manufactured by Chem First, UV-12 (tris(*N*-nitroso-*N*-phenylhydroxyamine) aluminum salt, manufactured by Kroma Chem inc.). Examples of the hindered amine-based polymerization inhibitor include a commercial product such as TINUVIN292, TINUVIN770DF, TINUVIN765, and TINUVIN123. Examples of the phenol-based polymerization inhibitor include a commercial product such as MEHQ (4-methoxyphenol). Examples of the *N*-oxyl-based polymerization inhibitor include a commercial product such as TEMPO (2,2,6,6-tetramethylpiperidin-N-oxyl) and TEMPOL (4-hydroxy TEMPO).

The content of the polymerization inhibitor in the ink composition of the present invention is preferably in the range of 0.01 to 5 mass % relative to the ink composition, more preferably 0.1 to 4 mass %, yet more preferably 0.5 to 4 mass %. When in the above range, it is possible to suppress polymerization during storage and preparation of the ink composition and prevent clogging of an inkjet head nozzle.

The ink composition of the present invention preferably comprises a dispersant. Especially, when the pigment is used, the ink composition preferably comprises a dispersant in order to stably disperse the pigment in the ink composition. As the dispersant, a polymeric dispersant is preferable. The 'polymeric dispersant' referred to in the present invention means a dispersant having a weight-average molecular weight of 1,000 or greater.

The content of the dispersant in the ink composition is appropriately selected according to the intended purpose, and is preferably 0.05 to 15 mass % relative to the mass of the entire ink composition.

(Properties of ink)

While taking into consideration dischargeability, the ink composition used in the present invention has a viscosity at 25°C of preferably no more than 40 mPa·s, more preferably 5 to 40 mPa·s, and yet more preferably 7 to 30 mPa·s. Furthermore, the viscosity of the ink composition at the discharge temperature (preferably 25°C to 80°C, and more preferably 25°C to 50°C) is preferably 3 to 15 mPa·s, and more preferably 3 to 13 mPa·s. With regard to the ink composition used in the present invention, it is preferable that its component ratio is appropriately adjusted so that the viscosity is in the above-mentioned range. When the viscosity at room temperature is set to be high, even when a porous recording medium is used, penetration of the ink into the recording medium can be prevented, and uncured monomer can be reduced. Furthermore, ink spreading when ink droplets have landed can be suppressed, and as a result there is the advantage that the image quality is improved.

The 'viscosity' referred to here is a viscosity determined using a model RE80 viscometer manufactured by Toki Sangyo Co., Ltd.. The model RE80 viscometer is a conical rotor/flat plate system E-type viscometer, and measurement is carried out at a rotational speed of 10 rpm using a rotor code No. 1 rotor. For those having a viscosity of higher than 60 mPa·s, measurement was carried out by changing the rotational speed as necessary to 5 rpm, 2.5 rpm, 1 rpm, 0.5 rpm, etc.

The ink composition used in the present invention preferably has a surface tension at 25°C of 18 to 40 mN/m, and more preferably 20 to 35 mN/m. When in the above-mentioned range, sticking to a mold is suppressed..

Here, the surface tension is a value measured at 25°C by the Wilhelmy method using a general surface tensiometer (e.g. a CBVP-Z surface tensiometer manufactured by Kyowa Interface Science Co., Ltd., etc.).

In the present invention, the ink set preferably comprises as the colored ink composition at least a yellow ink composition, a magenta ink composition, a cyan ink composition, and a black ink composition, and may further comprise

an ink composition of another color.

Specifically, it is preferable for it to further comprise light cyan and light magenta ink compositions. In this case, the colored ink composition comprises a total of six colors, that is, a yellow ink composition, a magenta ink composition, a cyan ink composition, a black ink composition, a light cyan ink composition, and a light magenta ink composition.

The 'dark ink composition' referred to in the present invention means an ink composition for which the content of the colorant exceeds 1 mass % of the entire ink composition. The colorant is not particularly limited; a known colorant may be used, and examples thereof include a pigment and a disperse dye.

The ink set of the present invention may comprise at least one dark ink composition and at least one light ink composition. The dark ink composition and the light ink composition employ colorants of similar colors, the ratio of the colorant concentration of the dark ink composition to the colorant concentration of the light ink composition is preferably dark ink composition:light ink composition = 15:1 to 4:1, more preferably 12:1 to 4:1, and yet more preferably 10:1 to 4.5:1. When the ratio is in the above-mentioned range, a vivid full color image with little feeling of grain can be obtained.

Furthermore, the ink set of the present invention may comprise a white ink composition as the colored ink composition. The white ink composition is a ink composition which comprises a white pigment.

As described above, the white ink composition is preferably used to form an almost uniform layer on the top of the image layer.

II. Inkjet recording method

The inkjet recording method of the present invention comprises, in sequence, an image layer formation step of forming an image layer by discharging at least one radiation curable inkjet colored ink onto a recording medium, and a clear layer formation step of forming a clear layer by discharging a radiation curable inkjet clear ink onto the image layer, wherein in the clear layer formation step, the radiation curable inkjet clear ink is dispersed above the image layer so as to form a non-continuous clear layer.

In the present invention, the area of the clear layer is preferably at least 0.1% but no greater than 80% of the image region. The image region means a region where an image layer can be formed (the total area when a solid image is formed). When the area of the clear layer is within this range, the clear layer becomes a non-continuous layer, and sticking to a mold is suppressed.

The area of the clear layer is more preferably 1% to 78% of the image region, yet more preferably 5% to 76%, and particularly preferably 10% to 75%.

The area of the clear layer above the image layer is measured as follows.

Specifically, it is determined by taking a photomicrograph using a profile measurement laser microscope (VK9700, Keyence Corporation), identifying dots formed by a clear ink composition by observing with an overhead view, and analyzing the area thereof. More specifically, an image is measured at a magnification of 200×, a 1,350 μm × 1,012 μm region is randomly selected from the measured image, this region is defined as the entire image, the area of dots formed from a clear ink composition in the entire image is identified, the area occupied by the clear ink is analyzed, and calculation is carried out using (area of clear ink/area of entire image × 100). 10 points are randomly selected from the image, the ratio of the area of the clear ink is calculated as above, and the average value thereof is calculated.

The height of the dot of the clear layer (the height of a cured dot formed from the clear ink composition) is preferably 1 to 30 μm, more preferably 3 to 28 μm, and yet more preferably 5 to 25 μm. It is preferable for the height of the dot of the clear layer to be in this range since sticking to a mold is suppressed and transfer of a dot shape of the clear layer to the substrate is suppressed.

The height of the dot of the clear layer is calculated by analysis in the height direction using the UV laser microscope; specifically, measurement of an image is carried out using a profile measurement laser microscope (VK9700, Keyence Corporation) at a magnification of 200x. 10 dots of the clear layer are selected from a 1,350 μm × 1,012 μm image, and the number-average is calculated.

In the present invention, when an image layer is formed from colored ink compositions of n colors, the requirements below are satisfied, wherein the amount of fired droplets of the clear ink composition per unit area is X, in $g/m^2$, and the total amount per unit area of fired droplets of the radiation curable inkjet colored inks forming the image layer is Y, in $g/m^2$. The amount of fired droplets per unit area is determined from the amount of fired droplets of the clear ink composition and the total amount of fired droplets of the colored inks in an actually obtained image.

When n = 1, $1/10,000 \leq X/Y \leq 40/100$.

When n = 2, $1/10,000 \leq X/Y \leq 30/100$.

When n = 3, $1/10,000 \leq X/Y \leq 25/100$.

When n = 4, $1/10,000 \leq X/Y \leq 20/100$.

When $n \geq 5$, $1/10,000 \leq X/Y \leq 15/100$.

It is advantageous for the ratio of the amounts of fired droplets of the colored ink composition and the clear ink composition to be in these ranges since sticking to a mold is suppressed effectively and an image having excellent

stretchability can be obtained.

It is preferable for the ratio of the amounts of fired droplets of the colored ink composition and the clear ink composition to satisfy the requirements below.

When n = 1, $1/100 \leq X/Y \leq 35/100$.

When n = 2, $1/100 \leq X/Y \leq 25/100$.

When n = 3, $1/100 \leq X/Y \leq 24/100$.

When n = 4, $1/100 \leq X/Y \leq 18/100$.

When $n \geq 5$, $1/100 \leq X/Y \leq 13/100$.

It is more preferable for the ratio of the amounts of fired droplets of the colored ink composition and the clear ink composition to satisfy the requirements below.

When n = 1, $1/100 \leq X/Y \leq 30/100$.

When n = 2, $1/100 \leq X/V \leq 20/100$.

When n = 3, $1/100 \leq X/Y \leq 20/100$.

When n = 4, $1/100 \leq X/Y \leq 15/100$.

When $n \geq 5$, $1/100 \leq X/Y \leq 10/100$.

The amount of fired droplets per unit area of the clear layer is preferably 0.001 to 10 $g/m^2$, more preferably 0.01 to 9 $g/m^2$, and particularly preferably 0.5 to 8 $g/m^2$.

In the present invention, the minimum droplet volume of the nozzle for discharging a colored ink composition is preferably at least 5 pL but less than 40 pL, and the minimum droplet volume of the nozzle for discharging a clear ink composition is preferably at least 20 pL but no greater than 60 pL.

The clear ink composition forms a clear layer in order to suppress sticking to a mold and is not required to have a high resolution. On the other hand, the colored ink composition forms a color image and is required to have a high resolution. High productivity is obtained by increasing the minimum droplet volume of the nozzle for discharging the clear ink composition compared with the minimum droplet volume of the nozzle for discharging the colored ink composition.

The image formation method of the present invention comprises, in sequence, an image layer formation step of forming an image layer by discharging at least one radiation curable inkjet colored ink composition onto a recording medium, and a clear layer formation step of forming a clear layer by discharging a radiation curable inkjet clear ink onto the image layer, and more specifically the image layer formation step and/or the clear layer formation step preferably comprise ($a^1$) a step of discharging an inkjet ink composition onto a recording medium by an inkjet method and ($b^1$) a step of curing the inkjet ink composition by irradiating the discharged inkjet ink composition with actinic radiation.

Furthermore the image layer formation step and/or the clear layer formation step more preferably comprise ($a^2$) a step of discharging an inkjet ink composition onto a recording medium by an inkjet method, ($b^2$) a step of forming a preliminarily cured film by irradiating the discharged inkjet ink composition with actinic radiation so as to preliminary cure the inkjet ink composition, and ($c^2$) a step of completely curing the preliminarily cured film by irradiation with actinic radiation.

In the present invention, due to the image layer formation step and/or the clear layer formation step comprising steps ($a^1$) and ($b^1$) or steps ($a^2$) to ($c^2$), an image is formed from the ink composition cured above a recording medium.

Furthermore, the inkjet recording method of the present invention may be carried out in a multipass mode in which steps ($a^1$) and ($b^1$) or steps ($a^2$) to ($c^2$) are carried out two or more times for one and the same area above the recording medium, that is, one and the same area is printed by superimposition, or may be carried out in a single pass mode in which an image is formed by one scan, but the multipass mode is preferable.

Moreover, the printed material of the present invention is a printed material recorded by the image formation method of the present invention.

The inkjet recording equipment described in detail below can be used in the step ($a^1$) and the step ($a^2$) of the present invention.

<u>Inkjet recording equipment</u>

An inkjet recording equipment used in the inkjet recording method of the present invention is not particularly limited, and any known inkjet recording equipment that can achieve an intended resolution may be used. That is, any known inkjet recording equipment, such as a commercial product, may be used in order to discharge an ink onto a recording medium in step ($a^1$) and step ($a^2$) of the image formation method of the present invention.

The inkjet recording equipment that can be used in the present invention is equipped with, for example, an ink supply system, a temperature sensor, and an actinic radiation source.

The ink supply comprises, for example, a main tank containing the ink composition of the present invention, a supply pipe, an ink supply tank immediately before an inkjet head, a filter, and a piezo system inkjet head. The piezo system inkjet head may be driven so as to discharge a multisize dot of preferably 1 to 100 pL, more preferably 8 to 30

pL, at a resolution of preferably 320 x 320 to 4,000 x 4,000 dpi (dot per inch), more preferably 400 x 400 to 1,600 x 1,600 dpi, and yet more preferably 720 x 720 dpi. Here, dpi referred to in the present invention means the number of dots per 2.54 cm.

Since it is desirable for the ink composition of the present invention to be discharged at a constant temperature, the inkjet recording equipment is preferably equipped with a temperature stabilizer for stabilizing the temperature of the inks. Parts to be controlled to a constant temperature include all of the supply pipe system and the members from the ink tank (including an intermediate tank if it is provided) to the discharging face of the nozzle. A section from the ink supply tank to the inkjet head is thermally insulated and heated.

A method of controlling temperature is not particularly limited, but it is preferable to provide, for example, temperature sensors at a plurality of pipe section positions, and control heating according to the flow rate of the ink composition and the temperature of the surroundings. The temperature sensors may be provided on the ink supply tank and in the vicinity of the inkjet head nozzle. Furthermore, the head unit that is to be heated is preferably thermally shielded or insulated so that the equipment main body is not influenced by the temperature of the outside air. In order to reduce the printer start-up time required for heating, or in order to reduce the thermal energy loss, it is preferable to thermally insulate the head unit from other sections and also to reduce the heat capacity of the entire heated unit.

The ink composition of the present invention is preferably discharged using the above mentioned inkjet recording equipment after being heated to preferably 25°C to 80°C, and more preferably 25°C to 50°C, so as to reduce the viscosity of the ink composition to preferably 3 to 15 mPa·s, and more preferably 3 to 13 mPa·s. In particular, it is preferable to use the ink composition having an ink viscosity at 25°C of not more than 50 mPa·s since a good dischargeability can be obtained. By employing this method, high discharge stability can be realized.

The radiation curing type ink composition such as the ink composition of the present invention generally has a viscosity that is higher than that of a water-based ink composition used for an inkjet recording ink, and variation in viscosity due to a change in temperature at the time of discharge is large. Viscosity variation in the ink composition has a large effect on changes in liquid droplet size and changes in liquid droplet discharge speed and, consequently, causes the image quality to be degraded. It is therefore necessary to maintain the ink composition discharge temperature as constant as possible. In the present invention, the control range for the temperature of ink composition is preferably ±5°C of a set temperature, more preferably ±2°C of the set temperature, and yet more preferably ±1°C of the set temperature.

The step ($b^1$), the step ($b^2$) and the step ($c^2$) are now explained.

The ink composition discharged onto the recording medium cures upon exposure to actinic radiation. This is due to a initiating species such as a radical being generated by decomposition of the polymerization initiator contained in the ink composition of the present invention by irradiation with actinic radiation, the initiating species functioning so as to make a polymerization reaction of a polymerizable compound take place and to promote it. In this process, if a sensitizer is present together with the polymerization initiator in the ink composition, the sensitizer in the system absorbs actinic radiation, becomes excited, and promotes decomposition of the polymerization initiator by contact with the polymerization initiator, thus enabling a curing reaction with higher sensitivity to be achieved.

The actinic radiation used in this process may include α rays, γ rays, an electron beam, X rays, UV rays, visible light, and IR rays. Although it depends on the absorption characteristics of the sensitizing dye, the peak wavelength of the actinic radiation is, for example, preferably 200 to 600 nm, more preferably 300 to 450 nm, yet more preferably 320 to 420 nm, and particularly preferably 340 to 400 nm.

Furthermore, the polymerization initiation system of the ink composition of the present invention has sufficient sensitivity for low output actinic radiation. The actinic radiation is applied therefore so that the illumination intensity on the exposed surface is, for example, preferably 10 to 4,000 mW/cm$^2$, and more preferably 20 to 2,500 mW/cm$^2$.

As an actinic radiation source, a mercury lamp, a gas/solid laser, etc. are mainly used, and for UV photocuring ink composition for inkjet recording a mercury lamp and a metal halide lamp are widely known. However, from the viewpoint of protection of the environment, there has recently been a strong desire for mercury not to be used, and replacement by a GaN semiconductor UV light emitting device is very useful from industrial and environmental viewpoints. Furthermore, LEDs (UV-LED) and LDs (UV-LD) have small dimensions, long life, high efficiency, and low cost, and their use as a photocuring inkjet light source can be expected.

Furthermore, light-emitting diodes (LED) and laser diodes (LD) may be used as the source of actinic radiation. In particular, when a UV ray source is needed, a UV-LED or a UV-LD may be used. For example, Nichia Corporation has marketed a violet LED having a wavelength of the main emission spectrum of between 365 nm and 420 nm. Furthermore, when a shorter wavelength is needed, the example of the LED includes a LED, disclosed in US Pat. No. 6,084,250, that can emit actinic radiation whose wavelength is centered between 300 nm and 370 nm. Furthermore, another violet LED is available, and irradiation can be carried out with radiation of a different UV bandwidth. The actinic radiation source preferable in the present invention is a UV-LED, and a UV-LED having a peak wavelength at 340 to 400 nm is particularly preferable.

The maximum illumination intensity of the LED on a recording medium is preferably 10 to 2,000 mW/cm$^2$, more

preferably 20 to 1,000 mW/cm$^2$, and particularly preferably 50 to 800 mW/cm$^2$.

The ink composition of the present invention are preferably exposed to such actinic radiation for preferably 0.01 to 120 sec., more preferably 0.1 to 90 sec.

Irradiation conditions and a basic method for irradiation with actinic radiation are disclosed in JP-A-60-132767. Specifically, a light source is provided on either side of a head unit that includes an ink composition discharge device, and the head unit and the light source are made to scan by a so-called shuttle system. Irradiation with actinic radiation is carried out after a certain time (preferably 0.01 to 0.5 sec., more preferably 0.01 to 0.3 sec., and particularly preferably 0.01 to 0.15 sec.) has elapsed from when the ink composition has landed. By controlling the time from ink composition landing to irradiation so as to be a minimum in this way, it becomes possible to prevent the ink composition that has landed on a recording medium from spreading before being cured. Furthermore, since the ink composition can be exposed before it reaches a deep area of a porous recording medium that the light source cannot reach, it is possible to prevent monomer from remaining unreacted.

Furthermore, curing may be completed using another light source that is not driven. WO99/54415 discloses, as an irradiation method, a method employing an optical fiber and a method in which a collimated light source is incident on a mirror surface provided on a head unit side face, and a recorded area is irradiated with UV light. These curing methods can also be applied to the image formation method of the present invention.

By employing such an inkjet recording method as described above, it is possible to maintain a uniform dot diameter for landed ink composition even for various types of recording medium having different surface wettability, thereby improving the image quality. In order to obtain a color image, it is preferable to superimpose colors in order from those with a high lightness. By superimposing inks in order from one with high lightness, it is easy for radiation to reach a lower ink, the curing sensitivity is good, the amount of residual monomer decreases, and an improvement in adhesion can be expected. Furthermore, although it is possible to discharge all colors and then expose them at the same time, it is preferable to expose one color at a time from the viewpoint of promoting curing.

As described later, it is also preferable to discharge the ink composition, then irradiate the discharged ink composition with actinic radiation to thus preliminarily cure (partially cure) the ink composition to form a preliminarily cured film, and after that to irradiate the preliminarily cured film with actinic radiation to thus completely cure it. Preliminary curing (partial curing) may be referred to in JP-A-2008-248070, JP-A-2009-221416, etc.

In this way, the ink composition of the present invention may be cured by irradiation with actinic radiation in high sensitivity and form an image on the surface of the recording medium.

An image formation method of the present invention and an image formation equipment which are suitable for the present invention are explained in detail below by reference to drawings.

<u>Overall configuration of ink jet recording equipment</u>

FIG. 2 is an external perspective view showing one example of ink jet recording equipment 10 suitably used in the present invention. This ink jet recording equipment 10 is a wide format printer that forms a color image above a recording medium 12 using a UV curing type ink (UV curable ink). The wide format printer is equipment that is suitable for recording on a wide printing region such as for a large size poster or a commercial wall advertisement. Here, one corresponding to A3+ (329 mm x 483 mm) or greater is called 'wide format'.

The ink jet recording equipment 10 comprises a main body 20 and support legs 22 for supporting the main body 20. The main body 20 is provided with a drop-on-demand type ink jet head 24 for discharging an ink toward a recording medium (media) 12, a platen 26 for supporting the recording medium 12, and a guide mechanism 28 and a carriage 30 as head movement means (scanning means).

The guide mechanism 28 is disposed above the platen 26 so as to extend perpendicular to the transport direction (X direction) of the recording medium 12 and along the scanning direction (Y direction), which is parallel to a medium support face of the platen 26. The carriage 30 is supported so that it can move reciprocatingly in the Y direction along the guide mechanism 28. The carriage 30 is equipped with the ink jet head 24, provisional curing light sources (pinning light sources) 32A and 32B for irradiating the ink above the recording medium 12 with UV, and main curing light sources (curing light sources) 34A and 34B.

The provisional curing light sources 32A and 32B are light sources for emitting UV for preliminary curing of an ink to a degree such that adjacent droplets do not coalesce after ink droplets discharged from the ink jet head 24 land on the recording medium 12. The main curing light sources 34A and 34B are light sources for emitting UV for carrying out additional exposure after preliminary curing and finally completely curing the ink (main curing). Although details are described later, either one or both of the main curing light sources 34A and 34B are configured so as to be movable in the X direction so as to be aligned in the Y direction with the ink jet head 24 and the provisional curing light sources 32A and 32B.

The ink jet head 24, the provisional curing light sources 32A and 32B, and the main curing light sources 34A and 34B disposed on the carriage 30 move integrally (together) with the carriage 30 along the guide mechanism 28.

The reciprocating movement direction (Y direction) of the carriage 30 can be called a 'main scanning direction' and the transport direction (X direction) of the recording medium 12 can be called a 'sub scanning direction'.

The recording medium 12 is fed from the back side of the equipment in a rolled state (see FIG. 3) and wound up by a wind-up roller (not illustrated in FIG. 2, reference number 44 in FIG. 3). Ink droplets are discharged from the ink jet head 24 onto the recording medium 12 transported on the platen 26, and the ink droplets attached to the recording medium 12 are irradiated with UV from the provisional curing light sources 32A and 32B and the main curing light sources 34A and 34B.

In FIG. 2, a mounting section 38 for an ink cartridge 36 is provided on the left-hand side of the front face of the main body 20. The ink cartridge 36 is a replaceable ink supply source (ink tank) storing a UV curing type ink. The ink cartridges 36 are provided so as to correspond to each color ink used in the ink jet recording equipment 10 of the present example. Each ink cartridge 36 for the respective color is connected to the ink jet head 24 via an independently formed ink supply route, which is not illustrated. When the amount of each color ink remaining becomes small, the ink cartridge 36 is replaced.

Furthermore, although it is not illustrated, a maintenance section for the ink jet head 24 is provided on the right-hand side of the front face of the main body 20. The maintenance section is provided with a cap for preventing the ink jet head 24 from drying out when not printing and a wiping member (blade, web, etc.) for cleaning a nozzle face (ink discharge face) of the ink jet head 24. The cap for capping the nozzle face of the ink jet head 24 is provided with an ink receptor for receiving ink droplets discharged from the nozzle for maintenance.

<u>Explanation of recording medium transport route</u>

FIG. 3 is an explanatory view schematically showing a recording medium transport route in the ink jet recording equipment 10. As shown in FIG. 3, the platen 26 is formed in an inverted gutter shape, and its upper face acts as a support face for the recording medium 12 (medium support face). Disposed on the upstream side, in the recording medium transport direction (X direction), in the vicinity of the platen 26 is a pair of nip rollers 40 as recording medium transport means for intermittently transporting the recording medium 12. These nip rollers 40 move the recording medium 12 in the recording medium transport direction on the platen 26.

The recording medium 12, which is fed out from a supply-side roll (feed-out supply roll) 42 constituting medium transport means of a roll-to-roll system, is intermittently transported in the recording medium transport direction by means of the pair of nip rollers 40 provided at the entrance (upstream side in the recording medium transport direction of the platen 26) of a printing section. The recording medium 12 that has arrived at the printing section immediately below the ink jet head 24 is subjected to printing by the ink jet head 24 and wound up by the wind-up roll 44 after printing. A guide 46 for the recording medium 12 is provided on the downstream side in the recording medium transport direction of the printing section.

A temperature control section 50 for controlling the temperature of the recording medium 12 during printing is provided on the reverse face of the platen 26 (the face opposite to the face supporting the recording medium 12) at a position opposite the ink jet head 24 in the printing section. When the recording medium 12 during printing is controlled to have a predetermined temperature, values of physical properties such as viscosity or surface tension of ink droplets that have landed on the recording medium 12 attain desired values, and it becomes possible to obtain a desired dot size. If necessary, a pre-temperature control section 52 may be provided on the upstream side of the temperature control section 50, and a post-temperature control section 54 may be provided on the downstream side of the temperature control section 50.

<u>Explanation of ink jet head</u>

FIG. 4 is a transparent plan view showing an example of the configuration of the ink jet head 24, the provisional curing light sources 32A and 32B, and the main curing light sources 34A and 34B disposed on the carriage 30.

Nozzle arrays 61Y, 61M, 61C, 61K, 61LC, 61LM, 61CL, and 61CLW for discharging inks of each color are provided in the ink jet head 24 for inks of each of yellow (Y), magenta (M), cyan (C), black (K), light cyan (LC), light magenta (LM) colors, a clear (transparent) (CL) ink, and a white (W) ink. In FIG. 4, the nozzle arrays are illustrated by dotted lines, and individual nozzles are not illustrated. In the explanation below, the nozzle arrays 61Y, 61M, 61C, 61K, 61LC, 61LM, 61CL, and 61W might collectively be denoted by reference numeral 61.

The type of ink colors (number of colors) and the combination of colors are not limited to those of the present embodiment. For example, a mode in which LC and LM nozzle arrays are omitted, a mode in which a nozzle array for a white ink is omitted, a mode in which a nozzle array for a metal ink is added, a mode in which a nozzle array for discharging a special color ink is added etc. are possible. Furthermore, the order for the arrangement of color nozzle arrays is also not restricted. However, a configuration in which an ink having low curing sensitivity toward UV among the plurality of ink types is disposed on the side closer to the provisional curing light source 32A or 32B is preferable.

It is possible to form a head module for the nozzle array 61 of each color and form an ink jet head 24 that can carry out color drawing by arranging the head modules. For example, a mode in which a head module 24Y having the nozzle array 61Y for discharging a yellow ink, a head module 24M having the nozzle array 61M for discharging a magenta ink, a head module 24C having the nozzle array 61C for discharging a cyan ink, a head module 24K having the nozzle array 61K for discharging a black ink, and head modules 24LC, 24LM, 24CL, and 24W having the nozzle arrays 61 LC, 61 LM, 61CL1, and 61W for discharging the respective LC, LM, CL, and W inks are disposed and arranged at equal intervals along the reciprocating movement direction (the main scanning direction, the Y direction) of the carriage 30 is also possible. A module group (head group) comprising the respective color head modules 24Y, 24M, 24C, 24K, 24LC, 24LM, 24CL, and 24W may be interpreted as being the 'ink jet head', or each module may be interpreted as being the 'ink jet head'. Alternatively, a configuration in which ink flow paths for the respective colors are separately formed in the interior of one ink jet head 24 and said one head comprises a nozzle array for discharging inks of a plurality of colors is also possible.

In each nozzle array 61, a plurality of nozzles are arranged at fixed intervals in one line (in a straight line) along the recording medium transport direction (the sub scanning direction, the X direction). In the ink jet head 24 of this example, the arrangement pitch (nozzle pitch) of nozzles forming each nozzle array 61 is 254 $\mu$m (100 dpi), the number of nozzles forming one line nozzle array 61 is 256 nozzles, and the overall length Lw of the nozzle array 61 (nozzle array overall length) is about 65 mm (254 $\mu$m $\times$ 255 = 64.8 mm). Furthermore, the discharge frequency is 15 kHz, and the droplet quantity discharged can be adjusted to three levels, that is, 10 pL, 20 pL, and 30 pL, by changing the drive waveform.

As an ink discharge method for the ink jet head 24, a method (piezo jet method) in which ink droplets are fired by deformation of a piezoelectric element (piezo actuator) is employed. As a discharge energy-generation device, as well as a mode in which an electrostatic actuator is used (electrostatic actuator method), a mode in which a bubble is generated by heating an ink using a heating body (heating device) such as a heater and an ink droplet is fired by the pressure obtained (thermal jet method) may be employed. Since a UV curing type ink usually has high viscosity compared with a solvent ink, when a UV curing type ink is used it is preferable to employ the piezo jet method, which has a relatively large discharge force.

## Drawling mode

The ink jet recording equipment 10 shown in the present example employs drawing control by the multipass method and can change printing resolution by changing the number of printing passes. For example, three types of drawing modes, that is, high productivity mode, standard mode, and high image quality mode, are prepared, and the printing resolution is varied for each mode. The drawing mode can be selected according to the purpose of printing or the intended application.

In the high productivity mode, printing is carried out with a resolution of 600 dpi (main scanning direction) $\times$ 500 dpi (sub scanning direction). In the case of the high productivity mode, a resolution of 600 dpi $\times$ 500 dpi is obtained by a head reciprocating 10 times.

In a standard mode, printing is carried out at a resolution of 900 dpi $\times$ 800 dpi, and a resolution of 900 dpi $\times$ 800 dpi is obtained by a head reciprocating 16 times.

In a high image quality mode, printing is carried out at a resolution of 1,200 dpi $\times$ 1,200 dpi, and a resolution of 1,200 dpi $\times$ 1,200 dpi is obtained by a head reciprocating 24 times.

## Configuration of UV irradiation section

As shown in FIG. 4, the provisional curing light sources 32A and 32B are disposed on left and right sides of the ink jet head 24 in the carriage movement direction (Y direction). Furthermore, the main curing light sources 34A and 34B are disposed on the downstream side, in the recording medium transport direction (X direction), of the ink jet head 24. The main curing light sources 34A and 34B are disposed further outside (position further away) than the provisional curing light sources 32A and 32B in the Y direction from the ink jet head 24. The main curing light sources 34A and 34B are configured so that they can move in a direction (-X direction) opposite to the recording medium transport direction, and their positions can be changed so as to be aligned with the provisional curing light sources 32A and 32B and the ink jet head 24 along the carriage movement direction.

A color ink droplet that has been discharged from a nozzle (nozzle contained in the nozzle array 61Y, 61M, 61C, 61K, 61LC, or 61LM) for a colored ink composition (color ink) of the ink jet head 24 and has landed on the recording medium 12 is irradiated with UV for preliminary curing by means of the provisional curing light source 32A (or 32B) that passes thereabove immediately thereafter.

Further, the ink droplets on the recording medium 12 that have passed the print region of the inkjet head 24 with intermittent transport of the recording medium 12 are irradiated with ultraviolet light for main curing by the main

curing light sources 34A and 34B. Thus, the ink droplets are povisionally brought into a povisionally cured state, whereby the developing time of dots (time period in which the dots are spread into predetermined sizes) can be ensured while landing interference is prevented, the dot heights can be made uniform, interaction of the droplets and the medium is promoted, and mutual adhesiveness can be increased.

Furthermore, in the same manner, a clear ink droplet that has been discharged from a clear ink composition (clear ink) nozzle (nozzle array CL) of an inkjet head 24 and has landed on a recording medium may pass through a provisional curing light source 32A (or 32B) immediately thereafter and be irradiated with UV for preliminary curing.

Moreover, an ink droplet above the recording medium 12 that has passed through a printing region of the inkjet head 24 accompanying intermittent transport of the recording medium is irradiated with UV by means of main curing light sources 34A and 34B for main curing.

Furthermore, in the present embodiment, it is preferable to irradiate, with UV for preliminary curing, a white ink that has been discharged from any white ink nozzle (nozzle contained in a nozzle array 61W) and has landed on the recording medium 12.

The provisional curing light sources 32A and 32B may be switched on at the same time during printing by the ink jet head 24, but the lifespan of the light sources can be increased by switching on only the provisional curing light source that is to the rear with respect to movement of the carriage in the main scanning direction. Furthermore, the main curing light sources 34A and 34B are preferably switched on at the same time during printing by the ink jet recording equipment 10. In a drawing mode where the scanning speed is low, one thereof may be switched off, and the timing with which the provisional curing light sources 32A and 32B are made to start emitting light can be the same as or different from the timing with which the main curing light sources 34A and 34B are made to start emitting light.

Explanation of image formation process

The ink jet recording equipment 10 shown in the present example is configured so that an image having a multi-layer structure is formed by layering a image layer (illustrated by reference numeral 14 in FIG. 1) formed from a color ink (Y, M, C, K, LC, LM, etc.) and a clear layer (illustrated by reference numeral 16 in FIG. 1) formed from a clear ink. The amount of UV irradiation is controlled according to the order of layer formation and UV absorption characteristics (ink curing characteristics).

For example, when a white ink composition is used as an optional component, since the white ink composition contains titanium oxide, zinc oxide, etc. as a pigment, the UV transmittance is poor compared with a color ink and a clear ink, and when the same amount of UV per unit volume as for the color ink or the clear ink is applied, the curing time is long. In order to eliminate any difference in curing characteristics caused by the UV transmission characteristics of the clear ink or the color ink, irradiation with UV is controlled so that the amount of UV irradiation per unit time is larger for the white ink than for the color ink or the clear ink. A specific example of such image formation is described later.

From the viewpoint of UV transmission, the black ink composition is classified as an ink that requires a longer curing time, but since it is used for formation of an image layer and it is necessary to prevent interference between fired droplets by subjecting it to preliminary curing immediately after firing droplets, it is classified as a color ink.

In accordance with an experiment, the color layer (the color image layer and the white layer) and the clear layer are preferably irradiated immediately after firing with an amount of pinning light per unit area of 1 $mJ/cm^2$ to 20 $mJ/cm^2$, and more preferably 2 $mJ/cm^2$ to 6 $mJ/cm^2$.

Pinning light is applied once to multiple times by carriage scanning in order to prevent the droplet shape from collapsing due to coalescence or interference with another ink immediately after the droplet is fired or prevent the droplet from moving. Curing light means exposure for completely curing the ink forming an image. Curing light is also applied multiple times by carriage scanning. The total amount of exposure reaches from 200 $mJ/cm^2$ up to 1,000 to 3,000 $mJ/cm^2$ as a result of one to multiple times of pinning exposure and multiple times of curing exposure. The tendency for ink sensitivity is determined by the sensitivity with respect to irradiation wavelength and the content of the initiator and the sensitizer contained in the UV curing type ink, and the ink is cured by radical polymerization.

In the present embodiment, the provisional curing light source irradiation regions are divided according to the drawing regions of divided nozzle regions forming each layer such as a color image layer, a white layer, or a clear layer so that appropriate pinning light can be applied according to the divided nozzle regions, and the amount of light for each region (illumination intensity distribution) is controlled. Details are described later.

Detailed explanation of image formation process

Refer to Fig. 5, with regard to an image formation method that is applied to the ink jet recording equipment 10 shown in the present example, each nozzle array 61 is divided into a plurality of regions in the recording medium transport direction, and a color image layer and a clear layer (a transparent layer) are formed by discharging the color ink or the clear ink using any of the divided regions. The number of divisions of the nozzle array 61 is the number N of image

formation layers.

In the explanation below, the length of the irradiation area in the recording medium transport direction of the main curing light sources 34A and 34B is considered to be the same as the length in the recording medium transport direction of the main curing light sources 34A and 34B. The actual length in the recording medium transport direction of the main curing light sources 34A and 34B is determined so that a predetermined irradiation area is obtained while taking into consideration spreading of the irradiation area. Moreover, the 'number N of image formation layer' can also be expressed as the 'number of divisions'.

FIG. 5 is an explanatory view schematically showing the configuration of the ink jet head 24 forming an image having the layer structure shown in FIG. 1 (a) and the arrangement of the main curing light sources 34A and 34B. The recording medium transport direction (X direction) is from top to bottom as shown by the downward arrow in the figure, and the reciprocating movement direction (Y direction) for the carriage 30 is the left and right direction.

As shown in FIG. 5, each nozzle array 61 is divided into an upstream side region 61-1 and a downstream side region 61-2, the colored inks (yellow (Y), magenta (M), cyan (C), black(K), light cyan (LC), and light magenta (LM)) are discharged only from the upstream side region 61-1 of the nozzle arrays 61Y, 61M, 61C, 61K, 61LC, and 61LM, and the clear ink composition is discharged only from the downstream side region 61-2 of the nozzle array 61 CL. When an image layer 14 (see FIG. 1(a)) is formed from the colored inks discharged from the upstream side region 61-1, the recording medium 12 is moved only by a distance ((Lw/2)/number of multiple passes) in the recording medium transport direction, and a clear layer 16 is formed on the previously formed image layer 14 from the clear ink discharged from the downstream side region 61-2.

While the clear layer 16 is being formed above the image layer 14, a colored ink is discharged only from the region 61-1, which is on the upstream side of the nozzle array 61 CL, at a position of discharge of the colored ink that is adjacent to the position of discharge of the clear ink and on the upstream side in the recording medium transport direction. That is, at the same time as formation of the clear layer 16, formation of the next color image progresses. Furthermore, the multipass method explained above is applied to discharge of a clear ink for forming the clear ink layer 16 and discharge of a colored ink for forming the image layer 14.

In FIG. 5, when the number of nozzles for each nozzle array is 256, of the 256 nozzles it is preferable for 128 to 255 nozzles to be used for forming a color image layer (yellow (Y), magenta (M), cyan (C), black (K), light magenta (LM), light cyan (LC)), and for 128 to 1 nozzles to be used for forming a clear layer. That is, it is preferable for the number of nozzles for discharging the clear ink composition to be no greater than the number of nozzles for discharging the colored ink composition for forming a color image layer.

Furthermore, the lengths of an upstream side region 61-1 and a downstream side region 61-2 in the recording medium transport direction vary according to the number of nozzles used. It is also preferable to change the regions illuminated by the provisional curing light sources 32A and 32B and the main curing light sources 34A and 34B according to the number of nozzles used.

A step of obtaining an image of the present invnetion is explained below in detail.

Step 1 is a formation step for the image layer 14 in FIG. 1(a). In FIG. 5, the provisional curing light source on the left-hand side is denoted by 32A, and the main curing light source is denoted by 34A.

First, a carriage 30 is scanned in a carriage movement direction, and a colored ink is discharged onto the recording medium 12 via the upstream side region 61-1, which includes the nozzle arrays 24Y, 24M, 24C, 24K, 24LC, and 24LM. Furthermore, the colored ink immediately after landing on the recording medium 12 is preliminarily cured by irradiation with UV with a low amount of light (1 to 5 mJ/cm$^2$ per scan of the carriage) by one carriage scan from the provisional curing light sources 32A-1 and 32B-1 positioned next to the nozzle arrays 24Y, 24M, 24C, 24K, 24LC, and 24LM, thus forming a gel state. By so doing, interference between landed colored ink droplets is prevented.

Subsequently, the recording medium 12 is moved in the recording medium transport direction only by a distance ((Lw/2)/number of multiple passes).

Step 2 is the period from the step of forming the colored image layer to the step of forming the clear layer. By maintaining the preliminary cured state for a predetermined time, in the region where the colored image layer is formed, it is possible to increase the affinity between the recording medium 12 and the colored image layer, promote spreading of dot, and promote suppression of pile height.

Step 3 is the step of forming the clear layer 16. At the discharge position for the clear ink (on the already formed image layer 14) on the downstream side by only (Lw/2) from the discharge position for the color ink on the recording medium 12 in the recording medium transport direction, the carriage 30 (see FIG. 4) is scanned in the carriage movement direction, and the clear ink is discharged onto the image layer 14 in the preliminarily cured state only from the downstream side region 61-2 of the nozzle array 61CL.

A clear ink that has just been fired onto the recording medium 12 is irradiated with a low light quantity of UV by one carriage scan from the provisional curing light sources 32A-2 and 32B-2, which are positioned next to the nozzle array 61CL to thus carry out preliminary curing in the same manner as for the colored ink and put it into a gel state, thus suppressing spreading when wet and interference between fired clear ink droplets and thereby maintaining the dot height

for the clear ink.

Furthermore, the fired clear ink may be subjected to irradiation by means of main curing light sources 34A and 34B, which are described later, without carrying out irradiation with UV from the provisional curing light sources 32A-2 and 32B-2. Since the clear ink does not cause a problem in terms of disturbance of an image when fired droplets thereof interfere with each other, irradiation with UV from the provisional curing light sources 32A-2 and 32B-2 may be omitted depending on the surface tension, viscosity, etc. of the clear ink as long as a sufficient dot height can be maintained.

Step 4 is a main curing treatment step, and the clear layer 16 and the image layer 14 are subjected to a main curing treatment using the main curing light sources 34A and 34B disposed on the downstream side in the recording medium transport direction of the inkjet head 24. The quantity of UV light per carriage scan in such a main curing treatment is 20 to 100 $mJ/cm^2$. This enables the clear layer 16 and the image layer 14 to be completely cured.

Fig. 6 is an explanatory view schematically illustrating a configuration of the inkjet head 24 for forming the image further having a white layer 18 as an image layer 14 shown in Fig. 1 (b), and disposition of the main curing light source 34A. The image thus obtained has a structure in which the number of image formation layers is three, and the respective layers are stacked on the transparent recording medium 12 in sequence of a color image layer 17, the white layer 18, and the clear layer 16. Namely, the image has the structure in which the white layer 18 is arranged between the color image layers 17 and the clear layer 16. In the image having the structure like this, the color image layer 17 with the white layer 18 as a background is visually recognized through the recording medium 12.

As shown in Fig. 6, each of the nozzle arrays 61 is divided into three that are an upstream side region 61-11, a central region 61-12 and a downstream side region 61-13, the color inks are ejected from only the upstream side regions 61-11 of the nozzle arrays 61Y, 6 1 M, 61C, 61 K, 61 LC and 61 LM, the white ink is ejected from the central region 61-12 of the nozzle array 61W, and the clear ink is ejected from the downstream side regions 61-13 of the nozzle array 61CL.

In each of the provisional curing light sources 32A and 32B, the emission region is divided into three in the X direction in correspondence with image forming ranges of the respective divided nozzle regions (the upstream side region 61-11, the central region 61-12, and the downstream side region 61-13) of each of the above-described nozzle arrays divided into three, and control of the light quantity is enabled for each of division units (divided emission regions) denoted with references 32A-11, 32A-12, 32A-13, 32B-11, 32B-12 and 32B-13 in Fig. 6.

Step 1 of the image forming process is a forming step of the color image layer, in which the carriage 30 is caused to scan in the carriage moving direction, and the color inks are deposited onto the recording medium 12 from the upstream side regions 61-11 of the nozzle arrays 61Y, 61M, 61C, 61K, 61 LC and 61 LM. Furthermore, from the provisional curing light sources 32A-11 and 32B-11 following the nozzle arrays 61Y, 61M, 61C, 61K, 61LC and 61 LM, UV light of a small light quantity (1 to 5 $mJ/cm^2$ per one time scan of the carriage) are applied to the color inks immediately after being landed on the recording medium 12 by scan of the carriage of one time to provisionally cure the color inks and bring the color inks into a gel state. By doing so, landing interference of the color inks is prevented.

Step 2 is a time period from the forming step of the color image layer 17 until a forming step of the white layer 18, in the portion where the color image layer 17 is formed, the provisionally cured state is kept for a constant time period, whereby adhesion of the color image layer 17 and the recording medium 12 is enhanced, and spread of dots and reduction in pile height are promoted.

Step 3 is the forming step of the white layer, in which in the white ink ejection position at the downstream side by (Lw/3) in the recording medium transporting direction from the deposition position of the color inks on the recording medium 12, the carriage 30 is caused to scan in the carriage moving direction, and the white ink is deposited from only the central region 61-12 of the nozzle array 61W onto the color image layer 17 in the provisionally cured state. In addition, UV light of a small light quantity (1 to 5 $mJ/cm^2$ per one time scan of the carriage) are applied to the white ink immediately after being landed on the recording medium 12 by scan of the carriage of one time to provisionally cure the white ink and bring the white ink into a gel state. The provisionally cured state is kept for a constant time period, whereby adhesion of the color image layer 17 and the white layer 18 is enhanced. Furthermore, spreading of the white ink into the color image layer can be suppressed, thus giving a high density.

Subsequently, from the main curing light source 34A that scans by following the nozzle array 61W, ultraviolet light of a large light quantity (10 $mJ/cm^2$ or more per one time scan of the carriage) equivalent to that of the main curing processing are applied by scan of the carriage of one time, to the white layer 18 in the provisionally cured state and the color image layer 17 in the provisionally cured state under the white layer in the provisionally cured state, and the white layer 17 with the white ink substantially cured is formed.

Step 4 is a forming step of the clear layer, in which in a clear ink ejection position at the downstream side by (Lw/3) further in the recording medium transporting direction from the white ink deposition position on the recording medium 12, the carriage 30 is caused to scan in the carriage moving direction, and the clear ink is deposited onto the white layer 18 from the downstream side regions 61-13 of the nozzle array 61CL. Further, from the provisional curing light sources 32A and 32B following the nozzle array 61CL, UV light of a small light quantity (1 to 5 $mJ/cm^2$ per one time scan of the carriage) may be applied by scan of the carriage of one time to the clear ink immediately after being landed

on the white layer above the recording medium 12 to provisionally cure the clear ink and bring the clear ink into a gel state. By doing so, landing interference of the clear ink that are landed on the white layer 18 is prevented, and the provisionally cured state is kept for a constant time period, whereby spread of dots and reduction in pile height are promoted. In addition, as described in the explanation concerning Fig. 5 above, UV light of a small light quantity may be applied or may not be applied.

Step 5 is a main curing treatment step, and the color image layer 17, the white layer 18, and the clear layer 16 are subjected to a main curing treatment using the main curing light source 34B disposed on the downstream side in the recording medium transport direction of the inkjet head 24. The quantity of UV light per carriage scan in such a main curing treatment is at least 10 $mJ/cm^2$. Completely curing the color image layer, the white layer, and the clear layer enables the surface gloss of the color image layer to be increased, thus improving adhesion between the recording medium 12 and the color image layer 17, adhesion between the color image layer 17 and the white layer 18, and adhesion between the white layer 18 and the clear layer 16 and also improving film quality at the same time.

In FIG. 6, when the number of nozzles of each nozzle array is 256, of the 256 nozzles it is preferable for 85 to 127 nozzles to be used for forming a color image layer, for 85 to 127 nozzles to be used for forming a white layer, and for 85 to 1 nozzles to be used for forming a clear layer. That is, it is preferable for the number of nozzles for discharging the clear ink composition to be no greater than the number of nozzles for discharging the colored ink composition for forming a color image layer and also to be no greater than the number of nozzles for discharging the white ink composition for forming a white layer.

The ink composition of the present invention is preferably used as an ink set comprising a plurality of inks for inkjet recording.

The order in which colored ink compositions are discharged is not particularly limited, but it is preferable to apply to a recording medium from a colored ink composition having a high lightness; when the ink compositions of yellow, cyan, magenta, and black are used, they are preferably applied on top of the recording medium in the order yellow → cyan → magenta → black. Furthermore, when white is additionally used, they are preferably applied on top of the recording medium in the order white → yellow → cyan → magenta → black. Moreover, the present invention is not limited thereto, and an ink set comprising a total of seven colors, that is, light cyan, light magenta ink compositions and cyan, magenta, black, white, and yellow dark ink compositions may preferably be used, and in this case they are applied on top of the recording medium in the order white → light cyan → light magenta → yellow → cyan → magenta → black.

In the present invention, the recording medium is not particularly limited, and known recording medium known as a support or a recording material may be used. Examples thereof include paper, paper laminated with a plastic (e.g. polyethylene, polypropylene, polystyrene, etc.), a metal plate (e.g. aluminum, zinc, copper, etc.), a plastic film (e.g. cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinylacetal, etc.), and paper or plastic film laminated or vapor-deposited with the above metal.

In the present invention, as the recording medium, a non-absorbing recording medium may suitably be used. Furthermore, a transparent recording medium may suitably be used.

As such a recording medium, a plastic film is particularly suitable, and specific examples thereof include polycarbonate.

Decorative sheet and decorative sheet molded product

Furthermore, the ink composition of the present invention is suitable for the production of a decorative sheet.

The decorative sheet is obtained by the image formation method of the present invention and provided with an image layer and a clear layer above a resin sheet.

Furthermore, it is also preferable to produce a decorative sheet molded product by further including a step of subjecting the decorative sheet to vacuum forming, pressure forming, or vacuum/pressure forming.

Moreover, it is preferable for the decorative sheet molded product to be subjected to hole making.

In particular, since an image layer obtained from the ink composition of the present invention has excellent stretchability and heat resistance, even when it is subjected to vacuum forming, pressure forming, or vacuum/pressure forming, white spots, cracking, etc. in an image are suppressed. Furthermore, cracking of an image during hole making is also suppressed.

Vacuum forming, pressure forming, vacuum/pressure forming

Vacuum forming is a method in which a support having an image formed thereon is preheated to a temperature at which it can be thermally deformed, and molding is carried out by pressing it against a mold and cooling while sucking it toward the mold by means of a vacuum and stretching it. It is preferable to use a convex mold and a concave mold in combination in vacuum forming.

Pressure forming is a method in which a support having an image formed thereon is preheated to a temperature at which it can be thermally deformed, and molding is carried out by pressing it against a mold by applying pressure from the side opposite to the mold and cooling.

Vacuum/pressure forming is a method in which molding is carried out by applying a vacuum and pressure at the same time

Details may be referred to in the 'Thermal Forming' section on p. 766 to 768 of 'Koubunshi Daijiten' (Polymer Dictionary) (Maruzen Co., Ltd.) and literature referred to in this section.

The forming temperature may be determined as appropriate according to the type of support and the support, but it is preferable to carry out forming at a support temperature of 60°C to 180°C, more preferably 80°C to 160°C, and yet more preferably 80°C to 150°C. When in this range, forming is carried out with little change in image color and excellent mold release.

Hole making by means of trimming

In the present invention, it is preferable to subject a decorative sheet or a decorative sheet molded product to hole making by means of trimming. The 'trimming' referred to here means the removal of an unwanted portion of a decorative sheet or a decorative sheet molded product after molding, and 'hole making by means of trimming' means removing an unwanted part by making a hole. From the viewpoint of productivity, the hole making is preferably carried out by punching.

Hole making may be carried out for a decorative sheet or may be carried out for a decorative sheet molded product, and is not particularly limited. Furthermore, hole making may be carried out subsequent to in-mold molding, which is described below.

In-mold molding

A decorative sheet or a decorative sheet molded article formed by the image formation method of the present invention is particularly suitable for in-mold molding. With regard to an image obtained by the image formation method of the present invention, sticking to a mold is suppressed, and even when in-mold molding is carried out sticking to a mold is suppressed.

In the present invention, a process for producing an in-mold molded article preferably comprises (step 1) a step of placing a decorative sheet or a decorative sheet molded product on an inner wall of a hollow part formed from a plurality of molds, and (step 2) a step of injecting a molten resin into the hollow part via a gate.

Examples of step (1) include a step in which the decorative sheet of the present invention is placed within a mold and sandwiched. Specifically, the decorative sheet is fed into a mold for molding formed from a plurality of movable and fixed molds preferably with the image layer on the inside. In this process, a plurality of decorative sheets may be fed one by one, or a required portion of a long decorative sheet may be fed intermittently.

When a decorative sheet is placed within a mold, (i) it is placed by simply heating a mold and carrying out suction by evacuating the mold to give intimate contact, or (ii) it is placed by heating and softening from the image layer side using a heated platen, preliminarily molding the decorative sheet so as to follow the shape of the interior of the mold, and carrying out mold clamping so that there is intimate contact with an inner face of the mold. The heating temperature in (ii) is preferably at least around the glass transition temperature of a substrate film but less than the melting temperature (or melting point), and it is normally a temperature around the glass transition temperature. Around the glass transition temperature means a range of on the order of ±5°C of the glass transition temperature, and is generally on the order of 70°C to 130°C. In the case of (ii), for the purpose of putting the decorative sheet into intimate contact with the mold surface, when heating and softening the decorative sheet using a heated platen, suction by evacuating may be carried out.

In the present invention, a preliminarily molded decorative sheet molded product may be placed in a mold.

Step (2) is an injection step in which a molten resin is injected into the cavity (hollow part) and cooled/solidified to thus laminate and integrate a resin molding and a decorative sheet. When the injection resin is a thermoplastic resin, it is put into a fluid state by heating and melting, and when the injection resin is a thermosetting resin, an uncured liquid composition is heated as appropriate and injected in a fluid state, and solidified by cooling. This enables the decorative sheet to integrate with and stick to the resin molding thus formed, thereby giving a decorative molded article. The heating temperature for the injection resin depends on the injection resin, but is preferably on the order of 180°C to 280°C.

Injection resin

Any injection resin may be used in the decorative molded article as long as it is a thermoplastic resin or thermosetting resin (including a two-component curable resin) that can be injection-molded, and various resins may be

used. Examples of such thermoplastic resin materials include a polystyrene-based resin, a polyolefin-based resin, an ABS resin (including a heat-resistant ABS resin), an AS resin, an AN resin, a polyphenylene oxide-based resin, a polycarbonate-based resin, a polyacetal-based resin, an acrylic-based resin, a polyethylene terephthalate-based resin, a polybutylene terephthalate-based resin, a polysulfone-based resin, and a polyphenylene sulfide-based resin. Examples of the thermosetting resin include a two-component reaction-curing type polyurethane-based resin and an epoxy-based resin. These resins may be used singly or as a mixture of two or more types.

In addition to the above steps, it is preferable to have a step of removing from the mold a molding having a resin molding integrated with a decorative sheet.

Example

The present invention is explained in further detail by reference to Examples and Comparative Examples. However, the present invention should not be construed as being limited to these Examples.

'Parts' described below means 'parts by mass', and '%' described below means 'mass %' unless otherwise specified.

The materials used in the Examples and Comparative Examples were as follows.

(Pigment)

CINQUASIA MAGENTA RT-355D (magenta pigment, mixed crystal pigment of C.I. Pigment Violet 19 and C.I. Pigment Red 202, manufactured by BASF Japan)
IRGALITE BLUE GLVO (cyan pigment, C.I. Pigment Blue 15:4, manufactured by BASF Japan)
NOVOPERM YELLOW H2G (yellow pigment, C.I. Pigment Yellow 120, manufactured by Clariant)
Mogul E (black pigment, C.I. Pigment Black 7, manufactured by Cabot) KRONOS 2300 (white pigment, manufactured by KRONOS)

(Dispersant)

SOLSPERSE 32000 (pigment dispersing agent, manufactured by The Lubrizol Corporation)
SOLSPERSE 41000 (pigment dispersing agent, manufactured by The Lubrizol Corporation)
EFKA 7731 (pigment dispersing agent, manufactured by BASF)
BYKJET 9151 (pigment dispersing agent, manufactured by BYK Chemie Corporation)
EFKA 7701 (pigment dispersing agent, manufactured by BASF); an acrylic block copolymer

(Monomer/oligomer)

NVC (manufactured by BASF); *N*-vinylcaprolactam
EOEOEA (product name; SR256, manufactured by Sartomer): 2-(2-ethoxyethoxy)ethyl acrylate
CTFA (product name; SR531, manufactured by Sartomer): cyclictrimethylolpropane formal acrylate
TBCHA (product name; SR217, manufactured by Sartomer): 4-*t*-butyltricyclohexyl acrylate
PEA (product name; EBECRYL 114, manufactured by Daicel-Cytec Company Ltd.): phenoxyethyl acrylate
CHA (manufactured by Tokyo Chemical Industry Co., Ltd.): cyclohexyl acrylate
CD420 (manufactured by Sartomer): isophoryl acrylate (3,3,5-trimethylcyclohexyl acrylate)
THFA (product name; SR285, manufactured by Sartomer): tetrahydrofurfuryl acrylate
IBOA (product name; SR506, manufactured by Sartomer): isobornyl acrylate
ODA (product name; SR484, manufactured by Sartomer): octyl/decyl acrylate

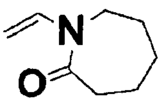
NVC

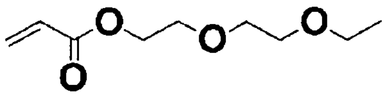
EOEOEA

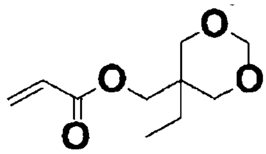
CTFA

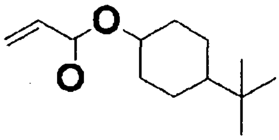
TBCHA

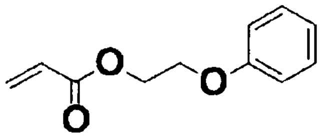
PEA

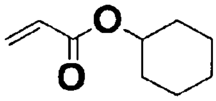
CHA

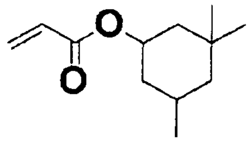
CD420

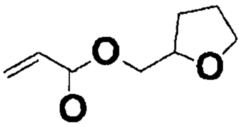
THFA

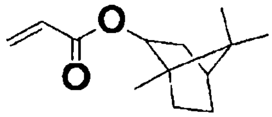
IBOA

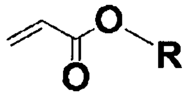
ODA

(R denotes an alkyl group having 8 or 10 carbon atoms.)

<Polyfunctional monomer>

The polyfunctional monomers used were as follows. They are listed together with Tg.

| Product name | Structure | Tg (°C) | Product name | Structure | Tg (°C) |
|---|---|---|---|---|---|
| Light-Acrylate MPD-A (Kyoeisha Chemical Co., Ltd.) | 3-Methyl-1,5-pentanediol diacrylate 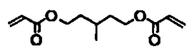 | 105 | CD295 (Sartomer) | Pentaerythritol tetraacrylate 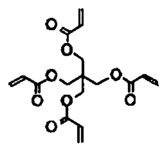 | >250 |
| SR508 (Sartomer) | Dipropyleneglycol diacrylate 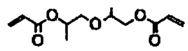 | 101 | SR355 (Sartomer) | Ditrimethylolpropane tetraacrylate 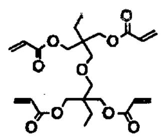 | >250 |
| APG-200 (Shin-Nakamura Chemical Co., Ltd.) | Tripropyleneglycol diacrylate 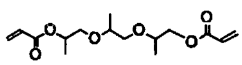 | 90 | SR399 (Sartomer) | Dipentaerythritol pentaacrylate 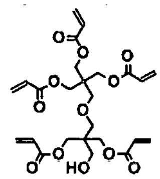 | >250 |
| SR247 (Sartomer) | Neopentyl glycol diacrylate 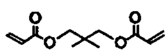 | 117 | SR238 (Sartomer) | 1,6-Hexanediol diacrylate 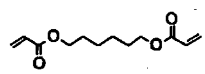 | 67 |

(continued)

| Product name | Structure | Tg (°C) | Product name | Structure | Tg (°C) |
|---|---|---|---|---|---|
| SR833 (Sartomer) | Tricyclodecanedimethanol diacrylate 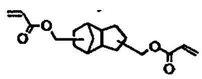 | 186 | SR454 (Sartomer) | EO-modified trimethylolpropane triacrylate 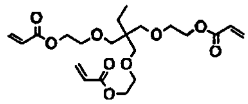 | 50 |
| TMPTA (Shin-Nakamura Chemical Co., Ltd.) | Trimethylolpropane triacrylate 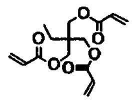 | >250 | | | |
| CD536 (Sartomer) | Dioxanediol diacrylate 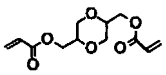 | 156 | | | |
| CD595 (Sartomer) | 1,10-decanediol diacrylate 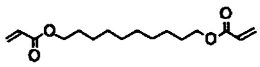 | 91 | | | |
| A-TMM-3L (Shin-Nakamura Chemical Co., Ltd.) | Pentaerythritol triacrylate 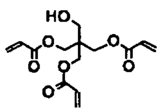 | >250°C | | | |

Other polyfunctional polymerizable compounds used were as follows.

TEGO Rad 2010 (Evonik): polyfunctional polymerizable oligomer, silicone acrylate oligomer

TEGO Rad 2100 (Evonik): polyfunctional polymerizable oligomer, silicone acrylate oligomer

TEGO Rad 2700 (Evonik): polyfunctional polymerizable oligomer, silicone acrylate oligomer

CN9031 (Sartomer Company Inc.): urethane acrylate oligomer

DPGDA: polyfunctional polymerizable monomer, dipropylene glycol diacrylate A-600 (Shin-Nakamura Chemical Co., Ltd.): polyfunctional polymerizable monomer, polyethylene glycol diacrylate (molecular weight ≈708)

In the table, Light-Acrylate MPD-A is entered simply as MPD-A.

Polymerization initiator

TPO (DAROCUR TPO, manufactured by BASF Japan): 2,4,6-trimetylbenzoyl diphenylphosphineoxide
Irg 819 (IRGACURE 819, bisacylphosphine photopolymerization initiator, manufactured by BASF Japan): bis(2,4,6-trimethylbenzoyl)phenylphosphine oxide
Irg 184 (IRGACURE 184, manufactured by BASF Japan), 1-hydroxycyclohexylphenylketone
Irg 369 (IRGACURE 369, manufactured by BASF Japan): 2-benzyl-2-d imethylamino-1-(4-morpholinophenyl)-1-butanone
Irg 907 (IRGACURE 907, manufactured by BASF Japan): 2-methyl-1-(4-methylthiophenyl)-2-morpholinopropane-1-one
ITX (photopolymerization initiator, manufactured by Shell Chemicals Japan Ltd.): isopropylthioxanthone,

Other component

BR113 (manufactured by Mitsubishi Rayon Co., Ltd.): acrylic resin
OH-TEMPO (polymerization inhibitor): 4-hydroxy TEMPO (4-hydroxy-2,2,6,6-tetramethylpiperidin-1-yl)oxy
UV12 (polymerization inhibitor, manufactured by Kromachem):tris(*N*-nitroso-*N*-phenyl hydroxylamine aluminum salt

Preparation of mill base

Preparation of cyan mill base C

C pigment (cyan pigment): IRGALITE BLUE GLVO (BASF Japan): 30 parts by mass
PEA: 60 parts by mass
SOLSPERSE 32000: 10 parts by mass

The above components were stirred to give a cyan mill base. Preparation of a pigment mill base was carried out by putting it into an M50 disperser motor mill (Eiger Machinery, Inc.) and dispersing using zirconia beads having a diameter of 0.65 mm at a peripheral speed of 9 m/s for 8 hours.

Preparation of magenta mill base M

M pigment (magenta pigment): CINQUASIA MAGENTA RT-355D (BASF Japan): 30 parts by mass
PEA: 60 parts by mass
SOLSPERSE 32000: 10 parts by mass

The above components were stirred to give a magenta mill base M. Preparation of a pigment mill base was carried out by putting it into an M50 disperser motor mill (Eiger Machinery, Inc.) and dispersing using zirconia beads having a diameter of 0.65 mm at a peripheral speed of 9 m/s for 8 hours.

Preparation of yellow mill base Y

Y pigment (yellow pigment): NOVOPERM YELLOW H2G (Clariant): 30 parts by mass
PEA: 60 parts by mass
SOLSPERSE 32000: 10 parts by mass

The above components were stirred to give a yellow mill base Y. Preparation of a pigment mill base was carried out by putting it into an M50 disperser motor mill (Eiger Machinery, Inc.) and dispersing using zirconia beads having a diameter of 0.65 mm at a peripheral speed of 9 m/s for 8 hours.

Preparation of black mill base K

K pigment (black pigment): Mogul E (Cabot): 30 parts by mass
PEA: 60 parts by mass
EFKA 7731: 10 parts by mass

The above components were stirred to give a black mill base K. Preparation of a pigment mill base was carried

out by putting it into an M50 disperser motor mill (Eiger Machinery, Inc.) and dispersing using zirconia beads having a diameter of 0.65 mm at a peripheral speed of 9 m/s for 8 hours.

Preparation of white mill base W

W pigment (white pigment): KRONOS 2300 (KRONOS): 45 parts by mass
PEA: 50 parts by mass
SOLSEPERSE 41000: 5 parts by mass

The above components were stirred to give a white mill base W. Preparation of a pigment mill base was carried out by putting it into an M50 disperser motor mill (Eiger Machinery, Inc.) and dispersing using zirconia beads having a diameter of 0.65 mm at a peripheral speed of 9 m/s for 8 hours.

<Preparation of ink composition >

The components described in the table below were stirred using a mixer (Silverson L4R) at 2,500 revolutions/min for 15 minutes. Subsequently, the mixture was filtered using a cartridge filter (product name: Profile II AB01A01014J) manufactured by Pall Corporation, thus giving ink compositions of each color. The notation '-' in the table means that the corresponding component was not contained.

Table 1

| Magenta ink No. | | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|---|
| Magenta mill base | | 15 | 15 | 15 | 15 | 15 | 15 | 15 | 15 | 15 | 15 | 15 | 15 | 15 | 15 | 15 | 15 | 15 | 15 |
| Monofunctional monomer | NVC | - | 10 | 24 | 45 | 24 | 24 | 24 | 24 | 24 | 24 | 24 | 24 | 24 | 14 | 24 | 24 | 24 | 24 |
| | IBOA | 45 | 35 | 20 | - | - | 10 | 34.5 | 45.5 | 20 | 20 | 20 | 20 | 20 | 15 | 20 | 20 | 20 | 20 |
| | PEA | 24.5 | 24.5 | 25.5 | 24.5 | 45.5 | 35.5 | 11 | - | 27.5 | 26.5 | 23.5 | 19.5 | 3.5 | 2.5 | 25.5 | 25.5 | 25.5 | 25.5 |
| Polyfunctional oligomer | TEGO Rad 2010 | 2 | 2 | 2 | 2 | 2 | 2 | 2 | 2 | - | 1 | 4 | 8 | 24 | 10 | - | - | - | - |
| | TEGO Rad 2100 | - | - | - | - | - | - | - | - | - | - | - | - | - | - | 2 | - | - | - |
| | TEGO Rad 2700 | - | - | - | - | - | - | - | - | - | - | - | - | - | - | - | 2 | - | - |
| Polyfunctional monomer | DPGDA | - | - | - | - | - | - | - | - | - | - | - | - | - | - | - | - | 2 | - |
| | A-600 | - | - | - | - | - | - | - | - | - | - | - | - | - | 30 | - | - | - | 2 |
| Resin | BR113 | 1 | 1 | 1 | 1 | 1 | 1 | 1 | 1 | 1 | 1 | 1 | 1 | 1 | 1 | 1 | 1 | 1 | 1 |
| Polymerization initiator | TPO | 5 | 5 | 5 | 5 | 5 | 5 | 5 | 5 | 5 | 5 | 5 | 5 | 5 | 5 | 5 | 5 | 5 | 5 |
| | Irg819 | 5 | 5 | 5 | 5 | 5 | 5 | 5 | 5 | 5 | 5 | 5 | 5 | 5 | 5 | 5 | 5 | 5 | 5 |
| | ITX | 1 | 1 | 1 | 1 | 1 | 1 | 1 | 1 | 1 | 1 | 1 | 1 | 1 | 1 | 1 | 1 | 1 | 1 |
| Dispersant | BYK JET9151 | 1 | 1 | 1 | 1 | 1 | 1 | 1 | 1 | 1 | 1 | 1 | 1 | 1 | 1 | 1 | 1 | 1 | 1 |
| Polymerization inhibitor | OH-TEMPO | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| | UV-12 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| Total | | 100 | 100 | 100 | 100 | 100 | 100 | 100 | 100 | 100 | 100 | 100 | 100 | 100 | 100 | 100 | 100 | 100 | 100 |
| Surface tension (mN/m) | | 23.9 | 23.8 | 23.8 | 23.8 | 23.8 | 23.8 | 23.8 | 23.8 | 34.1 | 23.9 | 23.8 | 23.7 | 23.7 | 23.7 | 29.1 | 22.1 | 33.7 | 33.6 |
| Polyfunctional ratio (mass%) | | 2.5 | 2.5 | 2.5 | 2.5 | 2.5 | 2.5 | 2.5 | 2.5 | 0.0 | 1.2 | 5.0 | 9.9 | 29.8 | 49.7 | 2.5 | 2.5 | 2.5 | 2.5 |
| Monofunctional ratio (mass%) | | 97.5 | 97.5 | 97.5 | 97.5 | 97.5 | 97.5 | 97.5 | 97.5 | 100 | 98.8 | 95.0 | 90.1 | 70.2 | 50.3 | 97.5 | 97.5 | 97.5 | 97.5 |

Table 2

| Magenta ink No. | | 19 | 20 | 21 | 22 | 23 | 24 | 25 | 26 | 27 | 28 | 29 | 30 | 31 | 32 | 33 | 34 | 35 |
|---|---|---|---|---|---|---|---|---|---|---|---|---|---|---|---|---|---|---|
| Magenta mill base | | 15 | 15 | 15 | 15 | 15 | 15 | 15 | 15 | 15 | 15 | 15 | 15 | 15 | 15 | 15 | 15 | 15 |
| Monofunctional polymerizable monomer | NVC | 24 | 24 | 24 | 24 | 24 | 24 | 24 | 24 | 24 | 24 | 24 | 24 | 24 | 24 | 24 | 24 | 19.7 |
| | IBOA | 20 | 20 | 20 | 20 | 20 | 20 | 20 | 20 | 20 | 20 | 20 | 20 | 20 | 20 | 20 | 20 | - |
| | PEA | - | - | - | - | - | - | 25.5 | 25.5 | 25.5 | 25.5 | 25.5 | 25.5 | 25.5 | 25.5 | 25.5 | 25.5 | - |
| | CTFA | 25.5 | - | - | - | - | - | - | - | - | - | - | - | - | - | - | - | - |
| | EOEOEA | - | 25.5 | - | - | - | - | - | - | - | - | - | - | - | - | - | - | - |
| | TBCHA | - | - | 25.5 | | - | - | - | - | - | - | - | - | - | - | - | - | - |
| | CD420 | - | - | - | 25.5 | - | - | - | - | - | - | - | - | - | - | - | - | - |
| | CHA | - | - | - | - | 25.5 | - | - | - | - | - | - | - | - | - | - | - | - |
| | THFA | - | - | - | - | - | 25.5 | - | - | - | - | - | - | - | - | - | - | - |
| Polyfunctional polymerizable oligomer | TEGO Pad 2010 | 2 | 2 | 2 | 2 | 2 | 2 | 3 | 2 | 2 | 2 | 2 | 2 | 2 | 2 | 2 | 2 | 2 |
| Polyfunctional polymerizable monomer | DPGDA | - | - | - | - | - | - | - | - | - | - | - | - | - | - | - | - | 50 |
| Resin | BR113 | 1 | 1 | 1 | 1 | 1 | 1 | - | 1 | 1 | 1 | 1 | 1 | 1 | 1 | 1 | 1 | 1 |
| Polymerization initiator | TPO | 5 | 5 | 5 | 5 | 5 | 5 | 5 | - | 10 | 5 | 5 | 5 | 5 | 5 | 5 | 5 | 5 |
| | Irg819 | 5 | 5 | 5 | 5 | 5 | 5 | 5 | 10 | - | - | - | - | 6 | 5 | 5 | 5 | 5 |
| | Irg184 | - | - | - | - | - | - | - | - | - | 5 | - | - | - | - | - | - | - |
| | Irg369 | - | - | - | - | - | - | - | - | - | - | 5 | - | - | - | - | - | - |
| | Irg907 | - | - | - | - | - | - | - | - | - | - | - | 5 | - | - | - | - | - |
| | ITX | 1 | 1 | 1 | 1 | 1 | 1 | 1 | 1 | 1 | 1 | 1 | 1 | 1 | 1 | 1 | 1 | 1 |
| Dispersant | EFKA7701 | - | - | - | - | - | - | - | - | - | - | - | - | - | 1 | - | - | - |
| | BYK JET9151 | 1 | 1 | 1 | 1 | 1 | 1 | 1 | 1 | 1 | 1 | 1 | 1 | 1 | - | 1 | 1 | 1 |

(continued)

| Magenta ink No. | | 19 | 20 | 21 | 22 | 23 | 24 | 25 | 26 | 27 | 28 | 29 | 30 | 31 | 32 | 33 | 34 | 35 |
|---|---|---|---|---|---|---|---|---|---|---|---|---|---|---|---|---|---|---|
| Polymerization inhibitor | OH-TEMPO | 0.3 | 0.3 | 0.3 | 0.3 | 0.3 | 0.3 | 0.3 | 0.3 | 0.3 | 0.3 | 0.3 | 0.3 | 0.3 | 0.3 | - | 0.5 | 0.3 |
| | UV-12 | 0.2 | 0.2 | 0.2 | 0.2 | 0.2 | 0.2 | 0.2 | 0.2 | 0.2 | 0.2 | 0.2 | 0.2 | 0.2 | 0.2 | 0.5 | - | - |
| Total | | 100 | 100 | 100 | 100 | 100 | 100 | 100 | 100 | 100 | 100 | 100 | 100 | 100 | 100 | 100 | 100 | 100 |
| Surface tension (mN/m) | | 23.8 | 23.8 | 23.8 | 23.8 | 23.8 | 23.8 | 23.8 | 23.8 | 23.8 | 23.8 | 23.8 | 23.8 | 23.8 | 23.8 | 23.8 | 23.8 | 24.8 |
| Polyfunctional ratio (mass%) | | 2.5 | 2.5 | 2.5 | 2.5 | 2.5 | 2.5 | 3.7 | 2.5 | 2.5 | 2.5 | 2.5 | 2.5 | 2.5 | 2.5 | 2.5 | 2.5 | 64.4 |
| Monofunctional ratio (mass%) | | 97.5 | 97.5 | 97.5 | 97.5 | 97.5 | 97.5 | 96.3 | 97.5 | 97.5 | 97.5 | 97.5 | 97.5 | 97.5 | 97.5 | 97.5 | 97.5 | 35.6 |

Table 3

| Cyan ink No. | | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|---|
| Cyan mill base | | 9 | 9 | 9 | 9 | 9 | 9 | 9 | 9 | 9 | 9 | 9 | 9 | 9 | 9 | 9 | 9 | 9 | 9 |
| Monofunctional monomer | NVC | - | 10 | 24 | 45 | 24 | 24 | 24 | 24 | 24 | 24 | 24 | 24 | 24 | 14 | 24 | 24 | 24 | 24 |
| | IBOA | 45 | 35 | 20 | - | - | 10 | 34.5 | 51.5 | 20 | 20 | 20 | 20 | 20 | 15 | 20 | 20 | 20 | 20 |
| | PEA | 30.5 | 30.5 | 31.5 | 30.5 | 51.5 | 41.5 | 17 | - | 33.5 | 32.5 | 29.5 | 25.5 | 9.5 | 8.5 | 31.5 | 31.5 | 31.5 | 31.5 |
| Polyfunctional oligomer | TEGO Rad 2010 | 2 | 2 | 2 | 2 | 2 | 2 | 2 | 2 | - | 1 | 4 | 8 | 24 | 10 | - | - | - | - |
| | TEGO Rad 2100 | - | - | - | - | - | - | - | - | - | - | - | - | - | - | 2 | - | - | - |
| | TEGO Rad 2700 | - | - | - | - | - | - | - | - | - | - | - | - | - | - | - | 2 | - | - |
| Polyfunctional monomer | DPGDA | - | - | - | - | - | - | - | - | - | - | - | - | - | - | - | - | 2 | - |
| | A-600 | - | - | - | - | - | - | - | - | - | - | - | - | - | 30 | - | - | - | 2 |
| Resin | BR113 | 1 | 1 | 1 | 1 | 1 | 1 | 1 | 1 | 1 | 1 | 1 | 1 | 1 | 1 | 1 | 1 | 1 | 1 |
| Polymerization initiator | TPO | 5 | 5 | 5 | 5 | 5 | 5 | 5 | 5 | 5 | 5 | 5 | 5 | 5 | 5 | 5 | 5 | 5 | 5 |
| | Irg819 | 5 | 5 | 5 | 5 | 5 | 5 | 5 | 5 | 5 | 5 | 5 | 5 | 5 | 5 | 5 | 5 | 5 | 5 |
| | ITX | 1 | 1 | 1 | 1 | 1 | 1 | 1 | 1 | 1 | 1 | 1 | 1 | 1 | 1 | 1 | 1 | 1 | 1 |
| Dispersant | BYK JET9151 | 1 | 1 | 1 | 1 | 1 | 1 | 1 | 1 | 1 | 1 | 1 | 1 | 1 | 1 | 1 | 1 | 1 | 1 |
| Polymerization inhibitor | OH-TEMPO | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| | UV-12 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| Total | | 100 | 100 | 100 | 100 | 100 | 100 | 100 | 100 | 100 | 100 | 100 | 100 | 100 | 100 | 100 | 100 | 100 | 100 |
| Surface tension (mN/m) | | 23.9 | 23.8 | 23.8 | 23.8 | 23.8 | 23.8 | 23.8 | 23.8 | 34.1 | 23.9 | 23.8 | 23.7 | 23.7 | 23.7 | 29.1 | 22.1 | 33.7 | 33.6 |
| Polyfunctional ratio (mass%) | | 2.4 | 2.4 | 2.4 | 2.4 | 2.4 | 2.4 | 2.4 | 2.4 | 0.0 | 1.2 | 4.8 | 9.7 | 29.0 | 48.3 | 2.4 | 2.4 | 2.4 | 2.4 |
| Monofunctional ratio (mass%) | | 97.6 | 97.6 | 97.6 | 97.6 | 97.6 | 97.6 | 97.6 | 97.6 | 100 | 98.8 | 95.2 | 90.3 | 71.0 | 51.7 | 97.6 | 97.6 | 97.6 | 97.6 |

Table 4

| Cyan ink No. | | 19 | 20 | 21 | 22 | 23 | 24 | 25 | 26 | 27 | 28 | 29 | 30 | 31 | 32 | 33 | 34 | 35 |
|---|---|---|---|---|---|---|---|---|---|---|---|---|---|---|---|---|---|---|
| Cyan mill base | | 9 | 9 | 9 | 9 | 9 | 9 | 9 | 9 | 9 | 9 | 9 | 9 | 9 | 9 | 9 | 9 | 9 |
| Monofunctional polymerizable monomer | NVC | 24 | 24 | 24 | 24 | 24 | 24 | 24 | 24 | 24 | 24 | 24 | 24 | 24 | 24 | 24 | 24 | 24 |
| | IBOA | 20 | 20 | 20 | 20 | 20 | 20 | 20 | 20 | 20 | 20 | 20 | 20 | 20 | 20 | 20 | 20 | 1.7 |
| | PEA | - | - | - | - | - | - | 31.5 | 31.5 | 31.5 | 31.5 | 31.5 | 31.5 | 31.5 | 31.5 | 31.5 | 31.5 | - |
| | CTFA | 31.5 | - | - | - | - | - | - | - | - | - | - | - | - | - | - | - | - |
| | EOEOEA | - | 31.5 | - | - | - | - | - | - | - | - | - | - | - | - | - | - | - |
| | TBCHA | - | - | 31.5 | - | - | - | - | - | - | - | - | - | - | - | - | - | - |
| | CD420 | - | - | - | 31.5 | - | - | - | - | - | - | - | - | - | - | - | - | - |
| | CHA | - | - | - | - | 31.5 | - | - | - | - | - | - | - | - | - | - | - | - |
| | THFA | - | - | - | - | - | 31.5 | - | - | - | - | - | - | - | - | - | - | - |
| Polyfunctional polymerizable oligomer | TEGO Pad 2010 | 2 | 2 | 2 | 2 | 2 | 2 | 3 | 2 | 2 | 2 | 2 | 2 | 2 | 2 | 2 | 2 | 2 |
| Polyfunctional polymerizable monomer | DPGDA | - | - | - | - | - | - | - | - | - | - | - | - | - | - | - | - | 50 |
| Resin | BR113 | 1 | 1 | 1 | 1 | 1 | 1 | - | 1 | 1 | 1 | 1 | 1 | 1 | 1 | 1 | 1 | 1 |
| Polymerization initiator | TPO | 5 | 5 | 5 | 5 | 5 | 5 | 5 | - | 10 | 5 | 5 | 5 | 5 | 5 | 5 | 5 | 5 |
| | Irg819 | 5 | 5 | 5 | 5 | 5 | 5 | 5 | 10 | - | - | - | - | 6 | 5 | 5 | 5 | 5 |
| | Irg184 | - | - | - | - | - | - | - | - | - | 5 | - | - | - | - | - | - | - |
| | Irg369 | - | - | - | - | - | - | - | - | - | - | 5 | - | - | - | - | - | - |
| | Irg907 | - | - | - | - | - | - | - | - | - | - | - | 5 | - | - | - | - | - |
| | ITX | 1 | 1 | 1 | 1 | 1 | 1 | 1 | 1 | 1 | 1 | 1 | 1 | - | 1 | 1 | 1 | 1 |
| Dispersant | EFKA7701 | - | - | - | - | - | - | - | - | - | - | - | - | - | 1 | - | - | - |
| | BYK JET9151 | 1 | 1 | 1 | 1 | 1 | 1 | 1 | 1 | 1 | 1 | 1 | 1 | 1 | - | 1 | 1 | 1 |
| Polymerization inhibitor | OH-TEMPO | 0.3 | 0.3 | 0.3 | 0.3 | 0.3 | 0.3 | 0.3 | 0.3 | 0.3 | 0.3 | 0.3 | 0.3 | 0.3 | 0.3 | - | 0.5 | 0.3 |
| | UV-12 | 0.2 | 0.2 | 0.2 | 0.2 | 0.2 | 0.2 | 0.2 | 0.2 | 0.2 | 0.2 | 0.2 | 0.2 | 0.2 | 0.2 | 0.5 | - | - |
| Total | | 100 | 100 | 100 | 100 | 100 | 100 | 100 | 100 | 100 | 100 | 100 | 100 | 100 | 100 | 100 | 100 | 100 |
| Surface tension (mN/m) | | 23.8 | 23.8 | 23.8 | 23.8 | 23.8 | 23.8 | 23.8 | 23.8 | 23.8 | 23.8 | 23.8 | 23.8 | 23.8 | 23.8 | 23.8 | 23.8 | 24.8 |
| Polyfunctional ratio (mass%) | | 2.4 | 2.4 | 2.4 | 2.4 | 2.4 | 2.4 | 3.6 | 2.4 | 2.4 | 2.4 | 2.4 | 2.4 | 2.4 | 2.4 | 2.4 | 2.4 | 62.6 |
| Monofunctional ratio (mass%) | | 97.6 | 97.6 | 97.6 | 97.6 | 97.6 | 97.6 | 96.4 | 97.6 | 97.6 | 97.6 | 97.6 | 97.6 | 97.6 | 97.6 | 97.6 | 97.6 | 37.4 |

Table 5

| Yellow ink No. | | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|---|
| Yellow mill base | | 7 | 7 | 7 | 7 | 7 | 7 | 7 | 7 | 7 | 7 | 7 | 7 | 7 | 7 | 7 | 7 | 7 | 7 |
| Monofunctional monomer | NVC | - | 10 | 24 | 45 | 24 | 24 | 24 | 24 | 24 | 24 | 24 | 24 | 24 | 14 | 24 | 24 | 24 | 24 |
| | IBOA | 45 | 35 | 20 | - | - | 10 | 34.5 | 53.5 | 20 | 20 | 20 | 20 | 20 | 15 | 20 | 20 | 20 | 20 |
| | PEA | 32.5 | 32.5 | 33.5 | 20.5 | 53.5 | 43.5 | 19 | - | 35.5 | 34.5 | 31.5 | 27.5 | 11.5 | 10.5 | 33.5 | 33.5 | 33.5 | 33.5 |
| Polyfunctional oligomer | TEGO Rad 2010 | 2 | 2 | 2 | 2 | 2 | 2 | 2 | 2 | - | 1 | 4 | 8 | 24 | 10 | - | - | - | - |
| | TEGO Rad 2100 | - | - | - | - | - | - | - | - | - | - | - | - | - | - | 2 | - | - | - |
| | TEGO Rad 2700 | - | - | - | - | - | - | - | - | - | - | - | - | - | - | - | 2 | - | - |
| Polyfunctional monomer | DPGDA | - | - | - | - | - | - | - | - | - | - | - | - | - | - | - | - | 2 | - |
| | A-600 | - | - | - | - | - | - | - | - | - | - | - | - | - | 30 | - | - | - | 2 |
| Resin | BR113 | 1 | 1 | 1 | 1 | 1 | 1 | 1 | 1 | 1 | 1 | 1 | 1 | 1 | 1 | 1 | 1 | 1 | 1 |
| Polymerization initiator | TPO | 5 | 5 | 5 | 5 | 5 | 5 | 5 | 5 | 5 | 5 | 5 | 5 | 5 | 5 | 5 | 5 | 5 | 5 |
| | Irg819 | 5 | 5 | 5 | 5 | 5 | 5 | 5 | 5 | 5 | 5 | 5 | 5 | 5 | 5 | 5 | 5 | 5 | 5 |
| | ITX | 1 | 1 | 1 | 1 | 1 | 1 | 1 | 1 | 1 | 1 | 1 | 1 | 1 | 1 | 1 | 1 | 1 | 1 |
| Dispersant | BYK JET9151 | 1 | 1 | 1 | 1 | 1 | 1 | 1 | 1 | 1 | 1 | 1 | 1 | 1 | 1 | 1 | 1 | 1 | 1 |
| Polymerization inhibitor | OH-TEMPO | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| | UV-12 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| Total | | 100 | 100 | 100 | 100 | 100 | 100 | 100 | 100 | 100 | 100 | 100 | 100 | 100 | 100 | 100 | 100 | 100 | 100 |
| Surface tension (mN/m) | | 23.9 | 23.8 | 23.8 | 23.8 | 23.8 | 23.8 | 23.8 | 23.8 | 34.1 | 23.9 | 23.8 | 23.7 | 23.7 | 23.7 | 29.1 | 22.1 | 33.7 | 33.6 |
| Polyfunctional ratio (mass%) | | 2.4 | 2.4 | 2.4 | 2.4 | 2.4 | 2.4 | 2.4 | 2.4 | 0.0 | 1.2 | 4.8 | 9.6 | 28.7 | 47.8 | 2.4 | 2.4 | 2.4 | 2.4 |
| Monofunctional ratio (mass%) | | 97.6 | 97.6 | 97.6 | 97.6 | 97.6 | 97.6 | 97.6 | 97.6 | 100 | 98.8 | 95.2 | 90.4 | 71.3 | 52.2 | 97.6 | 97.6 | 97.6 | 97.6 |

Table 6

| Yellow ink No. | | 19 | 20 | 21 | 22 | 23 | 24 | 25 | 26 | 27 | 28 | 29 | 30 | 31 | 32 | 33 | 34 | 35 |
|---|---|---|---|---|---|---|---|---|---|---|---|---|---|---|---|---|---|---|
| Yellow mill base | | 7 | 7 | 7 | 7 | 7 | 7 | 7 | 7 | 7 | 7 | 7 | 7 | 7 | 7 | 7 | 7 | 7 |
| Monofunctional polymerizable monomer | NVC | 24 | 24 | 24 | 24 | 24 | 24 | 24 | 24 | 24 | 24 | 24 | 24 | 24 | 24 | 24 | 24 | 24 |
| | IBOA | 20 | 20 | 20 | 20 | 20 | 20 | 20 | 20 | 20 | 20 | 20 | 20 | 20 | 20 | 20 | 20 | 3.7 |
| | PEA | - | - | - | - | - | - | 33.5 | 33.5 | 33.5 | 33.5 | 33.5 | 33.5 | 33.5 | 33.5 | 33.5 | 33.5 | - |
| | CTFA | 33.5 | - | - | - | - | - | - | - | - | - | - | - | - | - | - | - | - |
| | EOEOEA | - | 33.5 | - | - | - | - | - | - | - | - | - | - | - | - | - | - | - |
| | TBCHA | - | - | 33.5 | - | - | - | - | - | - | - | - | - | - | - | - | - | - |
| | CD420 | - | - | - | 33.5 | - | - | - | - | - | - | - | - | - | - | - | - | - |
| | CHA | - | - | - | - | 33.5 | - | - | - | - | - | - | - | - | - | - | - | - |
| | THFA | - | - | - | - | - | 33.5 | - | - | - | - | - | - | - | - | - | - | - |
| Polyfunctional polymerizable oligomer | TEGO Pad 2010 | 2 | 2 | 2 | 2 | 2 | 2 | 3 | 2 | 2 | 2 | 2 | 2 | 2 | 2 | 2 | 2 | 2 |
| Polyfunctional polymerizable monomer | DPGDA | - | - | - | - | - | - | - | - | - | - | - | - | - | - | - | - | 50 |
| Resin | BR113 | 1 | 1 | 1 | 1 | 1 | 1 | - | 1 | 1 | 1 | 1 | 1 | 1 | 1 | 1 | 1 | 1 |
| Polymerization initiator | TPO | 5 | 5 | 5 | 5 | 5 | 5 | 5 | - | 10 | 5 | 5 | 5 | 5 | 5 | 5 | 5 | 5 |
| | Irg819 | 5 | 5 | 5 | 5 | 5 | 5 | 5 | 10 | - | - | - | - | 6 | 5 | 5 | 5 | 5 |
| | Irg184 | - | - | - | - | - | - | - | - | - | 5 | - | - | - | - | - | - | - |
| | Irg369 | - | - | - | - | - | - | - | - | - | - | 5 | - | - | - | - | - | - |
| | Irg907 | - | - | - | - | - | - | - | - | - | - | - | 5 | - | - | - | - | - |
| | ITX | 1 | 1 | 1 | 1 | 1 | 1 | 1 | 1 | 1 | 1 | 1 | 1 | - | 1 | 1 | 1 | 1 |
| Dispersant | EFKA7701 | - | - | - | - | - | - | - | - | - | - | - | - | - | 1 | - | - | - |
| | BYK JET9151 | 1 | 1 | 1 | 1 | 1 | 1 | 1 | 1 | 1 | 1 | 1 | 1 | 1 | - | 1 | 1 | 1 |
| Polymerization inhibitor | OH-TEMPO | 0.3 | 0.3 | 0.3 | 0.3 | 0.3 | 0.3 | 0.3 | 0.3 | 0.3 | 0.3 | 0.3 | 0.3 | 0.3 | 0.3 | - | 0.5 | 0.3 |
| | UV-12 | 0.2 | 0.2 | 0.2 | 0.2 | 0.2 | 0.2 | 0.2 | 0.2 | 0.2 | 0.2 | 0.2 | 0.2 | 0.2 | 0.2 | 0.5 | - | - |
| Total | | 100 | 100 | 100 | 100 | 100 | 100 | 100 | 100 | 100 | 100 | 100 | 100 | 100 | 100 | 100 | 100 | 100 |
| Surface tension (mN/m) | | 23.8 | 23.8 | 23.8 | 23.8 | 23.8 | 23.8 | 23.8 | 23.8 | 23.8 | 23.8 | 23.8 | 23.8 | 23.8 | 23.8 | 23.8 | 23.8 | 24.8 |
| Polyfunctional ratio (mass%) | | 2.4 | 2.4 | 2.4 | 2.4 | 2.4 | 2.4 | 3.5 | 2.4 | 2.4 | 2.4 | 2.4 | 2.4 | 2.4 | 2.4 | 2.4 | 2.4 | 62.0 |
| Monofunctional ratio (mass%) | | 97.6 | 97.6 | 97.6 | 97.6 | 97.6 | 97.6 | 96.5 | 97.6 | 97.6 | 97.6 | 97.6 | 97.6 | 97.6 | 97.6 | 97.6 | 97.6 | 38.0 |

Table 7

| Black ink No. | | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|---|
| Black mill base | | 9 | 9 | 9 | 9 | 9 | 9 | 9 | 9 | 9 | 9 | 9 | 9 | 9 | 9 | 9 | 9 | 9 | 9 |
| Monofunctional polymerizable monomer | NVC | - | 10 | 24 | 45 | 24 | 24 | 24 | 24 | 24 | 24 | 24 | 24 | 24 | 14 | 24 | 24 | 24 | 24 |
| | IBOA | 45 | 35 | 20 | - | - | 10 | 34.5 | 51.5 | 20 | 20 | 20 | 20 | 20 | 15 | 20 | 20 | 20 | 20 |
| | PEA | 30.5 | 30.5 | 31.5 | 30.5 | 51.5 | 41.5 | 17 | - | 33.5 | 32.5 | 29.5 | 25.5 | 9.5 | 8.5 | 31.5 | 31.5 | 31.5 | 31.5 |
| Polyfunctional polymerizable oligomer | TEGO Rad 2010 | 2 | 2 | 2 | 2 | 2 | 2 | 2 | 2 | - | 1 | 4 | 8 | 24 | 10 | - | - | - | - |
| | TEGO Rad 2100 | - | - | - | - | - | - | - | - | - | - | - | - | - | - | 2 | - | - | - |
| | TEGO Rad 2700 | - | - | - | - | - | - | - | - | - | - | - | - | - | - | - | 2 | - | - |
| Polyfunctional polymerizable monomer | DPGDA | - | - | - | - | - | - | - | - | - | - | - | - | - | - | - | - | 2 | - |
| | A-600 | - | - | - | - | - | - | - | - | - | - | - | - | - | 30 | - | - | - | 2 |
| Resin | BR113 | 1 | 1 | 1 | 1 | 1 | 1 | 1 | 1 | 1 | 1 | 1 | 1 | 1 | 1 | 1 | 1 | 1 | 1 |
| Polymerization initiator | TPO | 5 | 5 | 5 | 5 | 5 | 5 | 5 | 5 | 5 | 5 | 5 | 5 | 5 | 5 | 5 | 5 | 5 | 5 |
| | Irg819 | 5 | 5 | 5 | 5 | 5 | 5 | 5 | 5 | 5 | 5 | 5 | 5 | 5 | 5 | 5 | 5 | 5 | 5 |
| | ITX | 1 | 1 | 1 | 1 | 1 | 1 | 1 | 1 | 1 | 1 | 1 | 1 | 1 | 1 | 1 | 1 | 1 | 1 |
| Dispersant | BYK JET9151 | 1 | 1 | 1 | 1 | 1 | 1 | 1 | 1 | 1 | 1 | 1 | 1 | 1 | 1 | 1 | 1 | 1 | 1 |
| Polymerization inhibitor | OH-TEMPO | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| | UV-12 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| Total | | 100 | 100 | 100 | 100 | 100 | 100 | 100 | 100 | 100 | 100 | 100 | 100 | 100 | 100 | 100 | 100 | 100 | 100 |
| Surface tension (mN/m) | | 23.9 | 23.8 | 23.8 | 23.8 | 23.8 | 23.8 | 23.8 | 23.8 | 34.1 | 23.9 | 23.8 | 23.7 | 23.7 | 23.7 | 29.1 | 22.1 | 33.7 | 33.6 |
| Polyfunctional ratio (mass%) | | 2.4 | 2.4 | 2.4 | 2.4 | 2.4 | 2.4 | 2.4 | 2.4 | 0.0 | 1.2 | 4.8 | 9.7 | 29.0 | 48.3 | 2.4 | 2.4 | 2.4 | 2.4 |
| Monofunctional ratio (mass%) | | 97.6 | 97.6 | 97.6 | 97.6 | 97.6 | 97.6 | 97.6 | 97.6 | 100 | 98.8 | 95.2 | 90.3 | 71.0 | 51.7 | 97.6 | 97.6 | 97.6 | 97.6 |

Table 8

| Black ink No. | | 19 | 20 | 21 | 22 | 23 | 24 | 25 | 26 | 27 | 28 | 29 | 30 | 31 | 32 | 33 | 34 | 35 |
|---|---|---|---|---|---|---|---|---|---|---|---|---|---|---|---|---|---|---|
| Black mill base | | 9 | 9 | 9 | 9 | 9 | 9 | 9 | 9 | 9 | 9 | 9 | 9 | 9 | 9 | 9 | 9 | 9 |
| Monofunctional polymerizable monomer | NVC | 24 | 24 | 24 | 24 | 24 | 24 | 24 | 24 | 24 | 24 | 24 | 24 | 24 | 24 | 24 | 24 | 23.7 |
| | IBOA | 20 | 20 | 20 | 20 | 20 | 20 | 20 | 20 | 20 | 20 | 20 | 20 | 20 | 20 | 20 | 20 | - |
| | PEA | - | - | - | - | - | - | 31.5 | 31.5 | 31.5 | 31.5 | 31.5 | 31.5 | 31.5 | 31.5 | 31.5 | 31.5 | - |
| | CTFA | 31.5 | - | - | - | - | - | - | - | - | - | - | - | - | - | - | - | - |
| | EOEOEA | - | 31.5 | - | - | - | - | - | - | - | - | - | - | - | - | - | - | - |
| | TBCHA | - | - | 31.5 | - | - | - | - | - | - | - | - | - | - | - | - | - | - |
| | CD420 | - | - | - | 31.5 | - | - | - | - | - | - | - | - | - | - | - | - | - |
| | CHA | - | - | - | - | 31.5 | - | - | - | - | - | - | - | - | - | - | - | - |
| | THFA | - | - | - | - | - | 31.5 | - | - | - | - | - | - | - | - | - | - | - |
| Polyfunctional polymerizable oligomer | TEGO Pad 2010 | 2 | 2 | 2 | 2 | 2 | 2 | 3 | 2 | 2 | 2 | 2 | 2 | 2 | 2 | 2 | 2 | 3 |
| Polyfunctional polymerizable monomer | DPGDA | - | - | - | - | - | - | - | - | - | - | - | - | - | - | - | - | 50 |
| Resin | BR113 | 1 | 1 | 1 | 1 | 1 | 1 | - | 1 | 1 | 1 | 1 | 1 | 1 | 1 | 1 | 1 | 1 |
| Polymerization initiator | TPO | 5 | 5 | 5 | 5 | 5 | 5 | 5 | - | 10 | 5 | 5 | 5 | 5 | 5 | 5 | 5 | 5 |
| | Irg819 | 5 | 5 | 5 | 5 | 5 | 5 | 5 | 10 | - | - | - | - | 6 | 5 | 5 | 5 | 5 |
| | Irg184 | - | - | - | - | - | - | - | - | - | 5 | - | - | - | - | - | - | - |
| | Irg369 | - | - | - | - | - | - | - | - | - | - | 5 | - | - | - | - | - | - |
| | Irg907 | - | - | - | - | - | - | - | - | - | - | - | 5 | - | - | - | - | - |
| | ITX | 1 | 1 | 1 | 1 | 1 | 1 | 1 | 1 | 1 | 1 | 1 | 1 | - | 1 | 1 | 1 | 2 |
| Dispersant | EFKA7701 | - | - | - | - | - | - | - | - | - | - | - | - | - | 1 | - | - | - |
| | BYK JET9151 | 1 | 1 | 1 | 1 | 1 | 1 | 1 | 1 | 1 | 1 | 1 | 1 | 1 | - | 1 | 1 | 1 |
| Polymerization inhibitor | OH-TEMPO | 0.3 | 0.3 | 0.3 | 0.3 | 0.3 | 0.3 | 0.3 | 0.3 | 0.3 | 0.3 | 0.3 | 0.3 | 0.3 | 0.3 | - | 0.5 | - |
| | UV-12 | 0.2 | 0.2 | 0.2 | 0.2 | 0.2 | 0.2 | 0.2 | 0.2 | 0.2 | 0.2 | 0.2 | 0.2 | 0.2 | 0.2 | 0.5 | - | 0.3 |
| Total | | 100 | 100 | 100 | 100 | 100 | 100 | 100 | 100 | 100 | 100 | 100 | 100 | 100 | 100 | 100 | 100 | 100 |
| Surface tension (mN/m) | | 23.8 | 23.8 | 23.8 | 23.8 | 23.8 | 23.8 | 23.8 | 23.8 | 23.8 | 23.8 | 23.8 | 23.8 | 23.8 | 23.8 | 23.8 | 23.8 | 24.8 |
| Polyfunctional ratio (mass%) | | 2.4 | 2.4 | 2.4 | 2.4 | 2.4 | 2.4 | 3.6 | 2.4 | 2.4 | 2.4 | 2.4 | 2.4 | 2.4 | 2.4 | 2.4 | 2.4 | 64.6 |
| Monofunctional ratio (mass%) | | 97.6 | 97.6 | 97.6 | 97.6 | 97.6 | 97.6 | 96.4 | 97.6 | 97.6 | 97.6 | 97.6 | 97.6 | 97.6 | 97.6 | 97.6 | 97.6 | 35.4 |

Table 9

| White ink No. | | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|---|
| White mill base | | 30 | 30 | 30 | 30 | 30 | 30 | 30 | 30 | 30 | 30 | 30 | 30 | 30 | 30 | 30 | 30 | 30 | 30 |
| Monofunctional polymerizable monomer | NVC | - | 10 | 24 | 45 | 24 | 24 | 24 | 24 | 24 | 24 | 24 | 24 | 24 | 10 | 24 | 24 | 24 | 24 |
| | IBOA | 45.5 | 35.5 | 20.5 | - | - | 10.5 | 20.5 | 31 | 20.5 | 20.5 | 20.5 | 20.5 | 7.5 | 7.5 | 20.5 | 20.5 | 20.5 | 20.5 |
| | PEA | 9.5 | 9.5 | 10.5 | 10 | 31 | 20.5 | 10.5 | - | 12.5 | 11.5 | 9.5 | 5.5 | 4.5 | 4.5 | 10.5 | 10.5 | 10.5 | 10.5 |
| Polyfunctional polymerizable oligomer | TEGO Rad 2010 | 2 | 2 | 2 | 2 | 2 | 2 | 2 | 2 | - | 1 | 3 | 7 | 21 | 10 | - | - | - | - |
| | TEGO Rad 2100 | - | - | - | - | - | - | - | - | - | - | - | - | - | - | 2 | - | - | - |
| | TEGO Rad 2700 | - | - | - | - | - | - | - | - | - | - | - | - | - | - | - | 2 | - | - |
| Polyfunctional polymerizable monomer | DPGDA | - | - | - | - | - | - | - | - | - | - | - | - | - | - | - | - | 2 | - |
| | A-600 | - | - | - | - | - | - | - | - | - | - | - | - | - | 25 | - | - | - | 2 |
| Resin | BR113 | 1 | 1 | 1 | 1 | 1 | 1 | 1 | 1 | 1 | 1 | 1 | 1 | 1 | 1 | 1 | 1 | 1 | 1 |
| Polymerization initiator | TPO | 5 | 5 | 5 | 5 | 5 | 5 | 5 | 5 | 5 | 5 | 5 | 5 | 5 | 5 | 5 | 5 | 5 | 5 |
| | Irg819 | 5 | 5 | 5 | 5 | 5 | 5 | 5 | 5 | 5 | 5 | 5 | 5 | 5 | 5 | 5 | 5 | 5 | 5 |
| | ITX | 1 | 1 | 1 | 1 | 1 | 1 | 1 | 1 | 1 | 1 | 1 | 1 | 1 | 1 | 1 | 1 | 1 | 1 |
| Polymerization inhibitor | OH-TEMPO | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| | UV-12 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| Total | | 100 | 100 | 100 | 100 | 100 | 100 | 100 | 100 | 100 | 100 | 100 | 100 | 100 | 100 | 100 | 100 | 100 | 100 |
| Surface tension (mN/m) | | 23.9 | 23.8 | 23.8 | 23.8 | 23.8 | 23.8 | 23.8 | 23.8 | 34.1 | 23.9 | 23.8 | 23.7 | 23.7 | 23.7 | 29.1 | 22.1 | 33.7 | 33.6 |
| Polyfunctional ratio (mass%) | | 2.4 | 2.4 | 2.4 | 2.4 | 2.4 | 2.4 | 2.4 | 2.4 | 0.0 | 1.2 | 4.8 | 9.7 | 29.0 | 48.3 | 2.4 | 2.4 | 2.4 | 2.4 |
| Monofunctional ratio (mass%) | | 97.6 | 97.6 | 97.6 | 97.6 | 97.6 | 97.6 | 97.6 | 97.6 | 100 | 98.8 | 95.2 | 90.3 | 71.0 | 51.7 | 97.6 | 97.6 | 97.6 | 97.6 |

Table 10

| White ink No. | | 19 | 20 | 21 | 22 | 23 | 24 | 25 | 26 | 27 | 28 | 29 | 30 | 31 | 32 | 33 | 34 | 35 |
|---|---|---|---|---|---|---|---|---|---|---|---|---|---|---|---|---|---|---|
| White mill base | | 30 | 30 | 30 | 30 | 30 | 30 | 30 | 30 | 30 | 30 | 30 | 30 | 30 | 30 | 30 | 30 | 30 |
| Monofunctional polymerizable monomer | NVC | 24 | 24 | 24 | 24 | 24 | 24 | 24 | 24 | 24 | 24 | 24 | 24 | 24 | 24 | 24 | 24 | 3.5 |
| | IBOA | 20.5 | 20.5 | 20.5 | 20.5 | 20.5 | 20.5 | 20.5 | 20.5 | 20.5 | 20.5 | 20.5 | 20.5 | 20.5 | 20 | 20.5 | 20.5 | - |
| | PEA | - | - | - | - | - | - | 10.5 | 10.5 | 10.5 | 10.5 | 10.5 | 10.5 | 10.5 | 10.5 | 11 | 11 | - |
| | CTFA | 10.5 | - | - | - | - | - | - | - | - | - | - | - | - | - | - | - | - |
| | EOEOEA | - | 10.5 | - | - | - | - | - | - | - | - | - | - | - | - | - | - | - |
| | TBCHA | - | - | 10.5 | - | - | - | - | - | - | - | - | - | - | - | - | - | - |
| | CD420 | - | - | - | 10.5 | - | - | - | - | - | - | - | - | - | - | - | - | - |
| | CHA | - | - | - | - | 10.5 | - | - | - | - | - | - | - | - | - | - | - | - |
| | THFA | - | - | - | - | - | 10.5 | - | - | - | - | - | - | - | - | - | - | - |
| Polyfunctional polymerizable oligomer | TEGO Pad 2010 | 2 | 2 | 2 | 2 | 2 | 2 | 3 | 2 | 2 | 2 | 2 | 2 | 2 | 2 | 2 | 2 | 3 |
| Polyfunctional polymerizable monomer | DPGDA | - | - | - | - | - | - | - | - | - | - | - | - | - | - | - | - | 50 |
| Resin | BR113 | 1 | 1 | 1 | 1 | 1 | 1 | - | 1 | 1 | 1 | 1 | 1 | 1 | 1 | 1 | 1 | 1 |
| Polymerization initiator | TPO | 5 | 5 | 5 | 5 | 5 | 5 | 5 | - | 10 | 5 | 5 | 5 | 5 | 5 | 5 | 5 | 5 |
| | Irg819 | 5 | 5 | 5 | 5 | 5 | 5 | 5 | 10 | - | - | - | - | 6 | 5 | 5 | 5 | 5 |
| | Irg184 | - | - | - | - | - | - | - | - | - | 5 | - | - | - | - | - | - | - |
| | Irg369 | - | - | - | - | - | - | - | - | - | - | 5 | - | - | - | - | - | - |
| | Irg907 | - | - | - | - | - | - | - | - | - | - | - | 5 | - | - | - | - | - |
| | ITX | 1 | 1 | 1 | 1 | 1 | 1 | 1 | 1 | 1 | 1 | 1 | 1 | - | 1 | 1 | 1 | 1 |
| Dispersant | EFKA7701 | - | - | - | - | - | - | - | - | - | - | - | - | - | 1 | - | - | - |
| Polymerization inhibitor | OH-TEMPO | 0.3 | 0.3 | 0.3 | 0.3 | 0.3 | 0.3 | 0.3 | 0.3 | 0.3 | 0.3 | 0.3 | 0.3 | 0.3 | 0.3 | - | 0.5 | 1.5 |
| | UV-12 | 0.2 | 0.2 | 0.2 | 0.2 | 0.2 | 0.2 | 0.2 | 0.2 | 0.2 | 0.2 | 0.2 | 0.2 | 0.2 | 0.2 | 0.5 | - | - |
| Total | | 100 | 100 | 100 | 100 | 100 | 100 | 100 | 100 | 100 | 100 | 100 | 100 | 100 | 100 | 100 | 100 | 100 |
| Surface tension (mN/m) | | 23.8 | 23.8 | 23.8 | 23.8 | 23.8 | 23.8 | 23.8 | 23.8 | 23.8 | 23.8 | 23.8 | 23.8 | 23.8 | 23.8 | 23.8 | 23.8 | 24.8 |
| Polyfunctional ratio (mass%) | | 2.8 | 2.8 | 2.8 | 2.8 | 2.8 | 2.8 | 4.1 | 2.8 | 2.8 | 2.8 | 2.8 | 2.8 | 2.8 | 2.8 | 2.8 | 2.8 | 74.1 |
| Monofunctional ratio (mass%) | | 97.2 | 97.2 | 97.2 | 97.2 | 97.2 | 97.2 | 95.9 | 97.2 | 97.2 | 97.2 | 97.2 | 97.2 | 97.2 | 97.2 | 97.2 | 97.2 | 25.9 |

Table 11

| Clear ink No. | | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|---|
| Monofunctional polymerizable monomer | IBOA | 14 | - | 7 | 21 | 30 | 40 | - | - | - | - | 14 | 14 | 14 | 14 | 14 | 14 |
| | PEA | - | - | - | - | - | - | 14 | - | - | - | - | - | - | - | - | - |
| | CTFA | - | - | - | - | - | - | - | 14 | - | - | - | - | - | - | - | - |
| | TBCHA | - | - | - | - | - | - | - | - | 14 | - | - | - | - | - | - | - |
| | CD420 | - | - | - | - | - | - | - | - | - | 14 | - | - | - | - | - | - |
| Polyfunctional polymerizable monomer | DPGDA | 44 | 58 | 51 | 37 | 28 | 18 | 44 | 44 | 44 | 44 | 24 | - | 44 | 44 | 44 | 44 |
| | TMPTA | 5 | 5 | 5 | 5 | 5 | 5 | 5 | 5 | 5 | 5 | 5 | 5 | - | - | 25 | 5 |
| | SR833 | 20 | 20 | 20 | 20 | 20 | 20 | 20 | 20 | 20 | 20 | 20 | 20 | 25 | 20 | - | - |
| | SR454 | - | - | - | - | - | - | - | - | - | - | - | - | - | 5 | - | 20 |
| | SR238 | - | - | - | - | - | - | - | - | - | - | 20 | 44 | - | - | - | - |
| Polyfunctional polymerizable oligomer | TEGO Rad 2100 | 1 | 1 | 1 | 1 | 1 | 1 | 1 | 1 | 1 | 1 | 1 | 1 | 1 | 1 | 1 | 1 |
| Polymerization initiator | TPO | 14 | 14 | 14 | 14 | 14 | 14 | 14 | 14 | 14 | 14 | 14 | 14 | 14 | 14 | 14 | 14 |
| Polymerization inhibitor | MEHQ | 1 | 1 | 1 | 1 | 1 | 1 | 1 | 1 | 1 | 1 | 1 | 1 | 1 | 1 | 1 | 1 |
| | UV-12 | 1 | 1 | 1 | 1 | 1 | 1 | 1 | 1 | 1 | 1 | 1 | 1 | 1 | 1 | 1 | 1 |
| Total | | 100 | 100 | 100 | 100 | 100 | 100 | 100 | 100 | 100 | 100 | 100 | 100 | 100 | 100 | 100 | 100 |
| *Surface tension (mN/m)* | | 29.1 | 29.1 | 29.1 | 29.1 | 29.1 | 29.1 | 29.1 | 29.1 | 29.1 | 29.1 | 29.1 | 29.1 | 29.1 | 29.1 | 29.1 | 29.1 |
| Monofunctional ratio (mass%) | | 16.7 | 0.0 | 8.3 | 25.0 | 35.7 | 47.6 | 16.7 | 16.7 | 16.7 | 16.7 | 16.7 | 16.7 | 16.7 | 16.7 | 16.7 | 16.7 |
| Polyfunctional ratio (mass%) | | 83.3 | 100.0 | 91.7 | 75.0 | 64.3 | 52.4 | 83.3 | 83.3 | 83.3 | 83.3 | 83.3 | 83.3 | 83.3 | 83.3 | 83.3 | 83.3 |

Table 12

| Clear ink No. | | 17 | 18 | 19 | 20 | 21 | 22 | 23 | 24 | 25 | 26 | 27 | 28 | 29 | 30 | 31 | 32 |
|---|---|---|---|---|---|---|---|---|---|---|---|---|---|---|---|---|---|
| Monofunctional polymerizable monomer | IBOA | 14 | 14 | 14 | 14 | 14 | 14 | 14 | 14 | 14 | 14 | 14 | 14 | 14 | 14 | 14 | 50 |
| Polyfunctional polymerizable monomer | DPGDA | 44 | 44 | 44 | 44 | 44 | 44 | 44 | 44 | 48 | 40 | 44 | 44 | 44 | 44 | - | 19 |
| | MPD-A | - | - | - | - | - | - | - | - | - | - | - | - | - | - | 44 | - |
| | TMPTA | 5 | 5 | 5 | 5 | 5 | 5 | 5 | 5 | 5 | 5 | 5 | 5 | 5 | 5 | 5 | 5 |
| | SR833 | 21 | 20 | 20 | 20 | 20 | 20 | 20 | 20 | 20 | 20 | 20 | 20 | 20 | 20 | 20 | 10 |
| Polyfunctional polymerizable oligomer | TEGO Pad 2010 | - | 1 | - | - | - | - | - | - | - | - | - | - | - | - | - | - |
| | TEGO Pad 2100 | - | - | - | 1 | 1 | 1 | 1 | 1 | 1 | 1 | 1 | 1 | 1 | 1 | 1 | 1 |
| | TEGO Pad 2700 | - | - | 1 | - | - | - | - | - | - | - | - | - | - | - | - | - |
| Polymerization initiator | TPO | 14 | 14 | 14 | 7 | 7 | 7 | 7 | 13 | 10 | 18 | 14 | 14 | 14 | 14 | 14 | 14 |
| | Irg819 | - | - | - | 7 | - | - | - | - | - | - | - | - | - | - | - | - |
| | Irg184 | - | - | - | - | 7 | - | - | - | - | - | - | - | - | - | - | - |
| | Irg369 | - | - | - | - | - | 7 | - | - | - | - | - | - | - | - | - | - |
| | Irg907 | - | - | - | - | - | - | 7 | - | - | - | - | - | - | - | - | - |
| | ITX | - | - | - | - | - | - | - | 1 | - | - | - | - | - | - | - | - |
| Polymerization inhibitor | OH-TEMPO | - | - | - | - | - | - | - | - | - | - | 1 | - | 1 | - | - | - |
| | MEHQ | 1 | 1 | 1 | 1 | 1 | 1 | 1 | 1 | 1 | 1 | 1 | 2 | - | - | 1 | - |
| | UV-12 | 1 | 1 | 1 | 1 | 1 | 1 | 1 | 1 | 1 | 1 | - | - | 1 | 2 | 1 | 1 |
| Total | | 100 | 100 | 100 | 100 | 100 | 100 | 100 | 100 | 100 | 100 | 100 | 100 | 100 | 100 | 100 | 100 |
| Surface tension (mN/m) | | 34.2 | 23.7 | 22.1 | 29.1 | 29.1 | 29.1 | 29.1 | 29.1 | 29.1 | 29.1 | 29.1 | 29.1 | 29.1 | 29.1 | 30.1 | 30.1 |
| Monofunctional ratio (mass%) | | 16.7 | 16.7 | 16.7 | 16.7 | 16.7 | 16.7 | 16.7 | 16.7 | 15.9 | 17.5 | 16.7 | 16.7 | 16.7 | 16.7 | 16.7 | 58.8 |
| Polyfunctional ratio (mass%) | | 83.3 | 83.3 | 83.3 | 83.3 | 83.3 | 83.3 | 83.3 | 83.3 | 84.1 | 82.5 | 83.3 | 83.3 | 83.3 | 83.3 | 83.3 | 41.2 |

(Inkjet recording method)

Recording on a recording medium was carried out using Acuity LED1600 inkjet recording equipment having a piezo inkjet nozzle. The ink supply system comprised a main tank, a supply pipe, an ink supply tank immediately before an inkjet head, a filter, and a piezo inkjet head, a section from the ink supply tank to the inkjet head being thermally insulated and heated. A temperature sensor was provided in the vicinity of each of the ink supply tank and the nozzle of the inkjet head, and temperature control was carried out so that the nozzle section was always at 45°C ± 2°C. The piezo inkjet head was driven so as to discharge multi size dots of 1 to 60 pL at resolutions of 1,200 × 1,200 dpi, 900 × 800 dpi, and 600 × 500 dpi. In the present invention dpi denotes the number of dots per 2.54 cm. As the recording medium, a polycarbonate substrate (product name: Panlite, film thickness 400 μm, Teijin Chemicals Ltd.) was used.

The number of reciprocations of the head when an image was formed using the above resolutions were as follows.

24 reciprocations for 1200 × 1200 dpi

16 reciprocations for 900 × 800 dpi

10 reciprocations for 600 × 500 dpi

The number of nozzles used during reciprocation of the head depended on the image formation mode.

When an image with only one layer of YMCK color was formed, 256 nozzles were used for YMCK.

When an image with two layers, that is, YMCK color and W, was formed in one pass, 128 nozzles of the 256 nozzles were used for YMCK and 128 nozzles of the 256 nozzles were used for W.

When an image with two layers, that is, YMCK color and CL, was formed in one pass, 128 to 255 nozzles of the 256 nozzles were used for YMCK and 128 to 1 nozzles of the 256 nozzles were used for CL.

When an image with three layers, that is, YMCK color, W, and CL, was formed in one pass, 85 to 127 nozzles of the 256 nozzles were used for YMCK, 85 to 127 nozzles of the 256 nozzles were used for W, and 85 to 1 nozzles of the 256 nozzles were used for CL.

When the clear ink was discharged, the number of nozzles used could be changed freely, and the number of nozzles used for discharge did not affect the film quality of the image formed.

Evaluation methods

Sticking to mold

In accordance with the inkjet recording method, a transparent substrate (polycarbonate) was used as a resin sheet, a solid image was printed with the inks of the Examples and Comparative Examples, and molding was carried out using a vacuum forming machine (CUVF-1216-PWB, Fu-se Vacuum Forming). Molding conditions were mold temperatures of 80°C and 90°C (sticking was stronger for 90°C than for 80°C) and a substrate temperature of 150°C, the mold being made of aluminum.

The evaluation criteria for mold sticking were as follows.

5: no sound of sticking or transfer for either a mold temperature of 80°C or of 90°C.
4: no sound of sticking or transfer for a mold temperature of 80°C, but there was sound of sticking for a mold temperature of 90°C.
3: sound of sticking for both a mold temperature of 80°C and of 90°C, but no transfer to mold.
2: sound of sticking and transfer to mold.
1: image stuck to mold and could not be detached.

An evaluation 5 is the best, and an evaluation 3 or greater is a range that does not cause problems in practice.

Blocking properties

In accordance with the inkjet recording method, a transparent substrate (polycarbonate) was used as a resin sheet, a solid image was printed with the inks of the Examples and Comparative Examples and cut into A6 size, a transparent polycarbonate substrate and a weight of 1 kg were placed thereon and allowed to stand at room temperature for one day, and transfer of the image to the transparent polycarbonate substrate placed on the image was evaluated.
Evaluation criteria for blocking were as follows.

5: no transfer at all.
4: no transfer but sound produced.
3: only some transparent transfer observed.
2: transparent transfer occurred over entire face.
1: color transfer occurred.

An evaluation of 5 is the best, and an evaluation 3 or greater is a range that does not cause problems in practice.

Measurement of thermal stretching ratio (stretchability)

Solid images having an average film thickness of 30 μm were drawn on a transparent substrate (polycarbonate) as a resin sheet using the ink compositions of the Examples and Comparative Examples in accordance with the inkjet recording method, and the ink images were cut to a size of 5 cm × 2 cm and subjected to measurement of stretching ratio by pulling using the stretching machine and temperature conditions below.

Equipment used: Tensilon (Shimadzu Corporation)
Conditions: temperature 180°C, pulling speed 50 millimeter/min.

Length at break was measured and the stretching ratio was calculated. The stretching ratio was determined from

$$\text{stretching ratio} = \{(\text{length at break} - \text{length before stretching})/\text{length before stretching}\} \times 100.$$

Specifically, when there was break at 10 cm, the stretching ratio was

$$\{(10\ \text{cm} - 5\ \text{cm})/5\ \text{cm}\} \times 100 = 100\%.$$

The evaluation criteria for thermal stretchability were as follows.

5: stretching ratio of at least 200%
4: stretching ratio of at least 150% but less than 200%
3: stretching ratio of at least 100% but less than 150%
2: stretching ratio of at least 70% but less than 100%
1: stretching ratio of less than 70%

An evaluation of 5 was the best, and an evaluation of 3 or greater was a level that gave no problems in practice.

Evaluation of suitability for punching

Solid images having an average film thickness of 30 μm were drawn on a transparent substrate (polycarbonate) as a resin sheet using the ink compositions of the Examples and Comparative Examples in accordance with the inkjet recording method, thus producing ink films. A punching test was carried out using an office punch under the conditions below, and the suitability for punching was evaluated by means of examination by eye and by an optical microscope.

Equipment used: office punch (product name DP-23 Blue, MAX Co., Ltd.)
Conditions: ink film was punched at a temperature of 25°C.

The evaluation criteria for suitability for punching were as follows.

5: there was no cracking at all in any part of the image when examined by eye and by optical microscope
4: there were no greater than two parts with cracking in the image when examined by optical microscope, but they were not visible by eye
3: there were at least three parts with cracking in the image when examined by optical microscope, but they were not visible by eye
2: cracking occurred around the punch hole and was visible by eye
1: cracking occurred and spread at least 5 cm from the punch hole

An evaluation of 5 was the best, and an evaluation of 3 or greater was a level that gave no problems in practice.
Clear layers were formed on a single color image layer and an image layer with 5 colors by changing the area ratio and the mass ratio of the clear layer relative to the image layer. In Table 7, Y being '9' and CL being '1' means that yellow ink No.9 and clear ink No.1 were used; the same applies to the tables below.
The mass ratio of the clear layer was determined by preparing a 100 $cm^2$ polycarbonate substrate, measuring the mass of the substrate, producing a 100 $cm^2$ solid image using 4-color black and white, then measuring the total mass of the substrate and the image, further producing a clear image, then measuring the total mass of the substrate and the image, calculating the mass for each of <substrate>, <4-color black and white>, and <clear>, and deriving the mass ratio.
Furthermore, the area ratio of the clear layer was determined by measuring an image using a profile measurement laser microscope (VK9700, Keyence Corporation) at a magnification of 200×, randomly selecting a 1,350 μm × 1,012 μm region from the measured image, defining this region as the entire image, identifying the area of dots formed from the clear ink composition in the entire image, and analyzing the area occupied by the clear ink (area of clear ink/area of entire image × 100). The area ratios (%) shown in Table 7 and Table 8 were determined by randomly selecting 10 points from the image, calculating the area ratio of the clear ink for each point as described above, and calculating the average value thereof.

Table 13

| | 1-1 | 1-2 | 1-3 | 1-4 | 1-5 | 1-6 | 1-7 | 1-8 | 1-9 | 1-10 |
|---|---|---|---|---|---|---|---|---|---|---|
| | Comp. Ex. | Ex. | Ex. | Ex. | Ex. | Ex. | Ex. | Ex. | Ex. | Comp. Ex. |
| Y | 9 | 9 | 9 | 9 | 9 | 9 | 9 | 9 | 9 | 9 |
| CL | 1 | 1 | 1 | 1 | 1 | 1 | 1 | 1 | 1 | 1 |
| Area ratio (%) | 0 | 0.01 | 1 | 5 | 10 | 30 | 50 | 65 | 80 | 100 |
| Mass ratio (%) | 0 | 0.01 | 0.2 | 1 | 2 | 6 | 10 | 15 | 20 | 50 |
| Blocking properties | 1 | 3 | 4 | 5 | 5 | 5 | 5 | 5 | 5 | 5 |
| Sticking to mold | 1 | 3 | 3 | 3 | 4 | 4 | 5 | 5 | 5 | 5 |
| Stretchability | 5 | 5 | 5 | 5 | 5 | 5 | 5 | 5 | 4 | 1 |
| Cracking properties | 3 | 3 | 3 | 3 | 3 | 3 | 5 | 4 | 3 | 1 |

Table 14

| | 2-1 | 2-2 | 2-3 | 2-4 | 2-5 | 2-6 | 2-7 | 2-8 | 2-9 | 2-10 |
|---|---|---|---|---|---|---|---|---|---|---|
| | Comp. Ex. | Ex. | Ex. | Ex. | Ex. | Ex. | Ex. | Ex. | Ex. | Comp. Ex. |
| Y | 9 | 9 | 9 | 9 | 9 | 9 | 9 | 9 | 9 | 9 |
| M | 9 | 9 | 9 | 9 | 9 | 9 | 9 | 9 | 9 | 9 |
| C | 9 | 9 | 9 | 9 | 9 | 9 | 9 | 9 | 9 | 9 |
| K | 9 | 9 | 9 | 9 | 9 | 9 | 9 | 9 | 9 | 9 |
| W | 9 | 9 | 9 | 9 | 9 | 9 | 9 | 9 | 9 | 9 |
| CL | 1 | 1 | 1 | 1 | 1 | 1 | 1 | 1 | 1 | 1 |

(continued)

| | 2-1 | 2-2 | 2-3 | 2-4 | 2-5 | 2-6 | 2-7 | 2-8 | 2-9 | 2-10 |
|---|---|---|---|---|---|---|---|---|---|---|
| | Comp. Ex. | Ex. | Ex. | Ex. | Ex. | Ex. | Ex. | Ex. | Ex. | Comp. Ex. |
| Area ratio (%) | 0 | 0.01 | 1 | 5 | 10 | 30 | 50 | 65 | 80 | 100 |
| Mass ratio (%) | 0 | 0.01 | 0.15 | 0.8 | 1.5 | 4.5 | 7.5 | 11.3 | 15 | 30 |
| Blocking properties | 1 | 3 | 4 | 5 | 5 | 5 | 5 | 5 | 5 | 5 |
| Sticking to mold | 1 | 3 | 3 | 3 | 4 | 4 | 5 | 5 | 5 | 5 |
| Stretchability | 5 | 5 | 5 | 5 | 5 | 5 | 5 | 5 | 4 | 1 |
| Cracking properties | 3 | 3 | 3 | 3 | 3 | 3 | 5 | 4 | 3 | 1 |

When images obtained in Comparative Example 1-10 and Comparative Example 2-10 were examined using a UV laser microscope, it was found that the clear layers were continuous. Furthermore, in Comparative Example 1-1 and Comparative Example 2-1 no clear layer was formed.

Because of these results, in the Examples below evaluation was carried out by fixing the mass ratio at 5%.

An image was formed by changing the monofunctional proportion (mass % of monofunctional polymerizable compound relative to polymerizable compound) of the colored ink composition. The results are shown below.

Table 15

| | 3-1 | 3-2 | 3-3 | 3-4 | 3-5 | 3-6 | 3-7 | 3-8 |
|---|---|---|---|---|---|---|---|---|
| | Ex. | Ex. | Ex. | Ex. | Ex. | Ex. | Ex. | Comp. Ex. |
| Y | 9 | 3 | 10 | 11 | 12 | 13 | 14 | 35 |
| M | 9 | 3 | 10 | 11 | 12 | 13 | 14 | 35 |
| C | 9 | 3 | 10 | 11 | 12 | 13 | 14 | 35 |
| K | 9 | 3 | 10 | 11 | 12 | 13 | 14 | 35 |
| W | 9 | 3 | 10 | 11 | 12 | 13 | 14 | 35 |
| CL | 1 | 1 | 1 | 1 | 1 | 1 | 1 | 1 |
| Magenta ink monofunctional proportion (mass%) | 100.0 | 97.5 | 98.8 | 95.0 | 90.1 | 70.2 | 50.3 | 35.6 |
| Blocking properties | 5 | 5 | 5 | 5 | 5 | 5 | 5 | 5 |
| Sticking to mold | 5 | 5 | 5 | 5 | 5 | 5 | 5 | 5 |
| Stretchability | 5 | 4 | 5 | 4 | 3 | 3 | 3 | 1 |
| Cracking properties | 5 | 5 | 5 | 5 | 5 | 4 | 4 | 1 |

An image was formed by changing the polyfunctional proportion (mass % of polyfunctional polymerizable compound relative to polymerizable compound) of the clear ink composition. The results are shown below.

Table 16

| | 4-1 | 4-2 | 4-3 | 4-4 | 4-5 | 4-6 | 4-7 |
|---|---|---|---|---|---|---|---|
| | Ex. | Ex. | Ex. | Ex. | Ex. | Ex. | Comp. Ex. |
| Y | 9 | 9 | 9 | 9 | 9 | 9 | 9 |
| M | 9 | 9 | 9 | 9 | 9 | 9 | 9 |
| C | 9 | 9 | 9 | 9 | 9 | 9 | 9 |
| K | 9 | 9 | 9 | 9 | 9 | 9 | 9 |
| W | 9 | 9 | 9 | 9 | 9 | 9 | 9 |

(continued)

| | 4-1 | 4-2 | 4-3 | 4-4 | 4-5 | 4-6 | 4-7 |
|---|---|---|---|---|---|---|---|
| | Ex. | Ex. | Ex. | Ex. | Ex. | Ex. | Comp. Ex. |
| CL | 2 | 3 | 1 | 4 | 5 | 6 | 32 |
| Clear ink polyfunctional proportion (mass%) | 100.0 | 91.7 | 83.3 | 75.0 | 64.3 | 52.4 | 41.2 |
| Blocking properties | 5 | 5 | 5 | 5 | 5 | 4 | 2 |
| Sticking to mold | 5 | 5 | 5 | 5 | 4 | 4 | 1 |
| Stretchability | 4 | 5 | 5 | 5 | 5 | 5 | 5 |
| Cracking properties | 4 | 4 | 5 | 5 | 5 | 5 | 1 |

An image was formed by changing the content of NVC (N-vinylcaprolactam) in the colored ink composition. The results are shown below.

Table 17

| | 5-1 | 5-2 | 5-3 | 5-4 |
|---|---|---|---|---|
| | Ex. | Ex. | Ex. | Ex. |
| Y | 1 | 2 | 3 | 4 |
| M | 1 | 2 | 3 | 4 |
| C | 1 | 2 | 3 | 4 |
| K | 1 | 2 | 3 | 4 |
| W | 1 | 2 | 3 | 4 |
| CL | 1 | 1 | 1 | 1 |
| Colored ink NVC amount (mass%) | 0 | 10 | 24 | 45 |
| Blocking properties | 3 | 4 | 5 | 4 |
| Sticking to mold | 3 | 4 | 5 | 4 |
| Stretchability | 3 | 4 | 4 | 4 |
| Cracking properties | 3 | 4 | 5 | 5 |

An image was formed by changing the ratio by mass of IBOA (isobornyl acrylate) and PEA (phenoxyethyl acrylate) in the colored ink composition. The results are shown below.

Table 18

| | 6-1 | 6-2 | 6-3 | 6-4 | 6-5 |
|---|---|---|---|---|---|
| | Ex. | Ex. | Ex. | Ex. | Ex. |
| Y | 5 | 6 | 3 | 7 | 8 |
| M | 5 | 6 | 3 | 7 | 8 |
| C | 5 | 6 | 3 | 7 | 8 |
| K | 5 | 6 | 3 | 7 | 8 |
| W | 1 | 6 | 3 | 7 | 8 |
| CL | 1 | 1 | 1 | 1 | 1 |
| Magenta ink IBOA/PEA ratio (w/w) | 0.00 | 0.22 | 0.58 | 1.73 | 5.06 |
| Blocking properties | 5 | 5 | 5 | 5 | 5 |

(continued)

| | 6-1 | 6-2 | 6-3 | 6-4 | 6-5 |
|---|---|---|---|---|---|
| | Ex. | Ex. | Ex. | Ex. | Ex. |
| Sticking to mold | 5 | 5 | 5 | 5 | 5 |
| Stretchability | 3 | 4 | 4 | 4 | 5 |
| Cracking properties | 5 | 5 | 5 | 4 | 3 |

Images were formed by changing the colored ink composition and the clear ink composition. The results are shown below.

Table 19

| | Ex. | | | | | | | | | | | | | | | | | |
|---|---|---|---|---|---|---|---|---|---|---|---|---|---|---|---|---|---|---|
| | 7-1 | 7-2 | 7-3 | 7-4 | 7-5 | 7-6 | 7-7 | 7-8 | 7-9 | 7-10 | 7-11 | 7-12 | 7-13 | 7-14 | 7-15 | 7-16 | 7-17 | 7-18 |
| Y | 3 | 17 | 19 | 20 | 21 | 22 | 23 | 24 | 25 | 26 | 27 | 28 | 29 | 30 | 31 | 32 | 33 | 34 |
| M | 3 | 17 | 19 | 20 | 21 | 22 | 23 | 24 | 25 | 26 | 27 | 28 | 29 | 30 | 31 | 32 | 33 | 34 |
| C | 3 | 17 | 19 | 20 | 21 | 22 | 23 | 24 | 25 | 26 | 27 | 28 | 29 | 30 | 31 | 32 | 33 | 34 |
| K | 3 | 17 | 19 | 20 | 21 | 22 | 23 | 24 | 25 | 26 | 27 | 28 | 29 | 30 | 31 | 32 | 33 | 34 |
| W | 3 | 17 | 19 | 20 | 21 | 22 | 23 | 24 | 25 | 26 | 27 | 28 | 29 | 30 | 31 | 32 | 33 | 34 |
| CL | 1 | 1 | 1 | 1 | 1 | 1 | 1 | 1 | 1 | 1 | 1 | 1 | 1 | 1 | 1 | 1 | 1 | 1 |
| Blocking properties | 5 | 5 | 5 | 5 | 5 | 5 | 5 | 5 | 5 | 5 | 5 | 5 | 5 | 5 | 5 | 5 | 5 | 5 |
| Sticking to mold | 5 | 5 | 5 | 5 | 5 | 5 | 5 | 5 | 5 | 5 | 5 | 5 | 5 | 5 | 5 | 5 | 5 | 5 |
| Stretchability | 4 | 3 | 4 | 4 | 4 | 4 | 4 | 4 | 4 | 4 | 4 | 4 | 4 | 4 | 4 | 4 | 4 | 4 |
| Cracking properties | 5 | 5 | 5 | 5 | 5 | 5 | 5 | 5 | 5 | 5 | 5 | 5 | 5 | 5 | 5 | 5 | 5 | 5 |

Table 20

| | 8-1 | 8-2 | 8-3 | 8-4 | 8-5 | 8-6 | 8-7 | 8-8 | 8-9 | 8-10 | 8-11 | 8-12 | 8-13 | 8-14 | 8-15 | 8-16 | 8-17 | 8-18 | 8-19 | 8-20 | 8-21 | 8-22 | 8-23 |
|---|---|---|---|---|---|---|---|---|---|---|---|---|---|---|---|---|---|---|---|---|---|---|---|
| | Ex. | | | | | | | | | | | | | | | | | | | | | | |
| Y | 3 | 3 | 3 | 3 | 3 | 3 | 3 | 3 | 3 | 3 | 3 | 3 | 3 | 3 | 3 | 3 | 3 | 3 | 3 | 3 | 3 | 3 | 3 |
| M | 3 | 3 | 3 | 3 | 3 | 3 | 3 | 3 | 3 | 3 | 3 | 3 | 3 | 3 | 3 | 3 | 3 | 3 | 3 | 3 | 3 | 3 | 3 |
| C | 3 | 3 | 3 | 3 | 3 | 3 | 3 | 3 | 3 | 3 | 3 | 3 | 3 | 3 | 3 | 3 | 3 | 3 | 3 | 3 | 3 | 3 | 3 |
| K | 3 | 3 | 3 | 3 | 3 | 3 | 3 | 3 | 3 | 3 | 3 | 3 | 3 | 3 | 3 | 3 | 3 | 3 | 3 | 3 | 3 | 3 | 3 |
| W | 3 | 3 | 3 | 3 | 3 | 3 | 3 | 3 | 3 | 3 | 3 | 3 | 3 | 3 | 3 | 3 | 3 | 3 | 3 | 3 | 3 | 3 | 3 |
| CL | 1 | 7 | 8 | 9 | 10 | 11 | 12 | 13 | 14 | 15 | 16 | 20 | 21 | 22 | 23 | 24 | 25 | 26 | 27 | 28 | 29 | 30 | 31 |
| Blocking properties | 5 | 5 | 5 | 5 | 5 | 5 | 5 | 5 | 5 | 5 | 5 | 5 | 5 | 5 | 5 | 5 | 5 | 5 | 5 | 5 | 5 | 5 | 5 |
| Sticking to mold | 5 | 5 | 5 | 5 | 5 | 3 | 3 | 5 | 3 | 5 | 3 | 5 | 5 | 5 | 5 | 5 | 5 | 5 | 5 | 5 | 5 | 5 | 5 |
| Stretchability | 4 | 4 | 4 | 4 | 4 | 4 | 4 | 4 | 4 | 4 | 4 | 4 | 4 | 4 | 4 | 4 | 4 | 4 | 4 | 4 | 4 | 4 | 4 |
| Cracking properties | 5 | 5 | 5 | 5 | 5 | 5 | 5 | 5 | 5 | 5 | 5 | 5 | 5 | 5 | 5 | 5 | 5 | 5 | 5 | 5 | 5 | 5 | 5 |

## Claims

1. An image formation method comprising, in sequence,
an image layer formation step of forming an image layer by discharging at least one radiation curable inkjet colored ink composition onto a recording medium, and
a clear layer formation step of forming a clear layer by discharging a radiation curable inkjet clear ink composition onto the image layer,
the radiation curable inkjet colored ink composition comprising a monofunctional polymerizable compound in an amount of at least 50 mass % of polymerizable compounds,
the radiation curable inkjet clear ink composition comprising a polyfunctional polymerizable compound in an amount of at least 50 mass % of the polymerizable compounds, and
in the clear layer formation step the radiation curable inkjet clear ink composition being dispersed above the image layer to thus form a non-continuous clear layer;
wherein when the image layer is formed using n color radiation curable inkjet colored ink compositions, the requirements below are satisfied,
when n = 1, $1/10,000 \leq X/Y \leq 40/100$
when n = 2, $1/10,000 \leq X/Y \leq 30/100$
when n = 3, $1/10,000 \leq X/Y \leq 25/100$
when n = 4, $1/10,000 \leq X/Y \leq 20/100$
when no $\geq$ 5, $1/10,000 \leq X/Y \leq 15/100$
wherein the amount of fired droplets per unit area of the clear layer-forming radiation curable inkjet clear ink composition is X, in $g/m^2$, and the total amount of fired droplets per unit area of the image layer-forming radiation curable inkjet colored ink compositions is Y, in $g/m^2$.

2. The image formation method according to Claim 1, wherein the clear layer has an area of at least 0.1 % but no greater than 80% of an image region.

3. The image formation method according to either Claim 1 or 2, wherein the radiation curable inkjet colored ink composition comprises the monofunctional polymerizable compound in an amount of at least 70 mass % of the polymerizable compounds and the radiation curable inkjet clear ink composition comprises the polyfunctional polymerizable compound in an amount of at least 60 mass % of the polymerizable compounds.

4. The image formation method according to any one of Claims 1 to 3, wherein the radiation curable inkjet colored ink composition comprises the monofunctional polymerizable compound in an amount of at least 80 mass % of the polymerizable compounds and the radiation curable inkjet clear ink composition comprises the polyfunctional polymerizable compound in an amount of at least 70 mass % of the polymerizable compounds.

5. The image formation method according to any one of Claims 1 to 4, wherein the radiation curable inkjet colored ink composition comprises as the polymerizable compound an *N*-vinyllactam.

6. The image formation method according to any one of Claims 1 to 5, wherein the radiation curable inkjet colored ink composition comprises as the polymerizable compound at least one monofunctional polymerizable compound selected from the group consisting of (a-1) to (a-8) below,

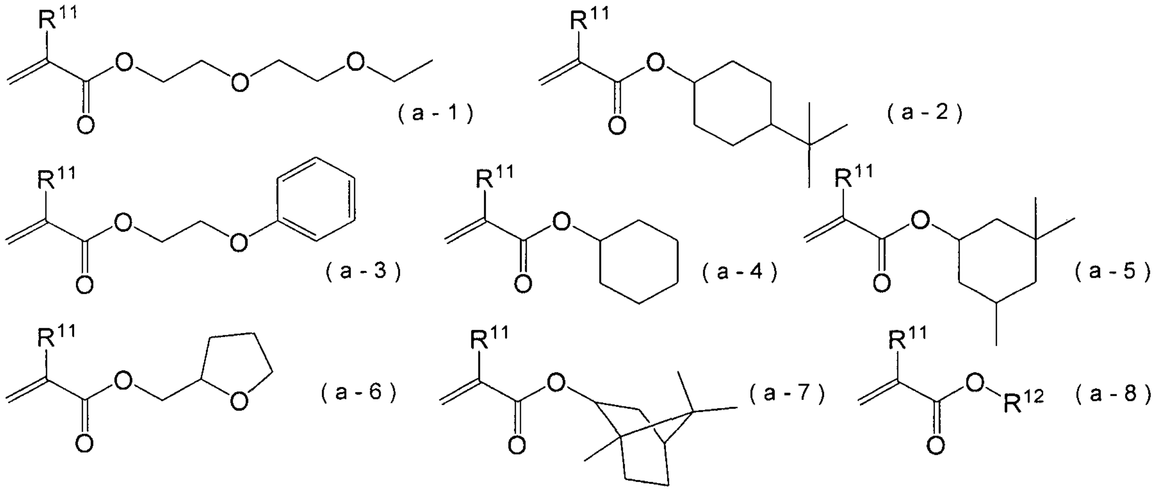

(a - 1) (a - 2) (a - 3) (a - 4) (a - 5) (a - 6) (a - 7) (a - 8)

wherein in the Formulae, $R^{11}$ denotes a hydrogen atom or a methyl group and $R^{12}$ denotes an alkyl group having 4 to 12 carbons.

**7.** The image formation method according to any one of Claims 1 to 6, wherein the radiation curable inkjet clear ink composition comprises a polyfunctional polymerizable compound having a glass transition temperature (Tg) of at least 80°C, wherein the glass transition temperature of a polyfunctional polymerizable compound means the glass transition temperature of a homopolymer of this polyfunctional polymerizable compound.

**8.** The image formation method according to Claim 7, wherein the radiation curable inkjet clear ink composition comprises as the polyfunctional polymerizable compound having a glass transition temperature (Tg) of at least 80°C at least one polyfunctional polymerizable compound selected from the group consisting of the polymerizable compounds below.

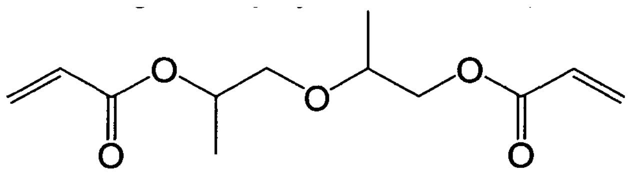

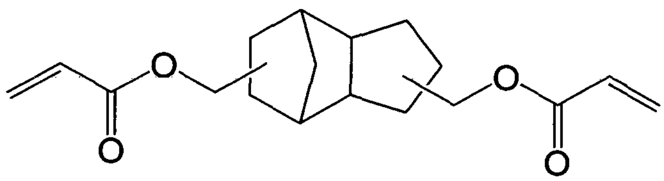

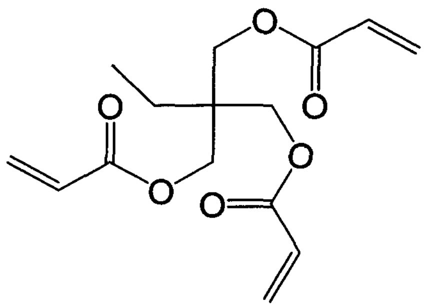

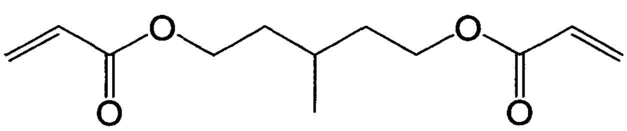

**9.** The image formation method according to any one of Claims 1 to 8, wherein the radiation curable inkjet clear ink composition comprises the polyfunctional polymerizable compound having a glass transition temperature (Tg) of at least 80°C in an amount of at least 30 mass % in the ink composition, wherein the glass transition temperature of a polyfunctional polymerizable compound means the glass transition temperature of a homopolymer of this polyfunctional polymerizable compound .

**10.** The image formation method according to any one of Claims 1 to 9, wherein the radiation curable inkjet colored ink composition and/or the radiation curable inkjet clear ink composition comprise as the polymerizable compound a silicone-based acrylate oligomer.

**11.** The image formation method according to any one of Claims 1 to 10, wherein the image layer formation step and/or the clear layer formation step comprise

(a1) a step of discharging the inkjet ink composition onto a recording medium by an inkjet method,
(b1) a step of irradiating the discharged inkjet ink composition with actinic radiation so as to preliminarily cure the inkjet ink composition to thus form a preliminarily cured film, and
(c1) a step of irradiating the preliminarily cured film with actinic radiation to thus completely cure it.

**12.** The image formation method according to Claim 11, wherein the actinic radiation employs as a light source a light-emitting diode.

**13.** A decorative sheet comprising above a resin sheet an image layer and a clear layer formed by the image formation method according to any one of Claims 1 to 12.

**14.** A molding method comprising vacuum forming, pressure forming, or vacuum/pressure forming the decorative sheet according to Claim 13.

**15.** A decorative sheet molded product obtained by vacuum forming, pressure forming, or vacuum/pressure forming the decorative sheet according to Claim 13.

**16.** The decorative sheet molded product according to Claim 15, wherein it is further subjected to hole making by means of trimming after the vacuum forming, pressure forming, or vacuum/pressure forming.

**17.** A process for producing an in-mold molded article, comprising
a step of placing the decorative sheet according to Claim 13 or the decorative sheet molded product according to Claim 15 or 16 on an inner wall of a hollow part formed from a plurality of molds, and
a step of injecting a molten resin into the hollow part via a gate.

**18.** An in-mold molded article obtained by the production process according to Claim 17.

## Patentansprüche

**1.** Bildherstellungsverfahren, umfassend in der Reihenfolge

einen Bildschicht-Ausbildungsschritt zum Ausbilden einer Bildschicht durch Freisetzen mindestens einer durch Strahlung härtbaren farbigen Tintenstrahl-Tintenzusammensetzung auf ein Aufzeichnungsmedium und
einen Transparentschicht-Ausbildungsschritt zum Ausbilden einer Transparentschicht durch Freisetzen einer durch Strahlung härtbaren farblosen Tintenstrahl-Tintenzusammensetzung auf der Bildschicht,
wobei die durch Strahlung härtbare farbige Tintenstrahl-Tintenzusammensetzung eine monofunktionale polymerisierbare Verbindung in einer Menge von mindestens 50 Masse% an polymerisierbaren Verbindungen enthält,
wobei die durch Strahlung härtbare farblose Tintenstrahl-Tintenzusammensetzung eine polyfunktionale polymerisierbare Verbindung in einer Menge von mindestens 50 Masse% der polymerisierbaren Verbindungen enthält, und
wobei im Transparentschicht-Ausbildungsschritt die durch Strahlung härtbare farblose Tintenstrahl-Tintenzusammensetzung auf der Bildschicht dispergiert wird, um dadurch eine nicht-kontinuierliche Transparentschicht zu bilden;
wobei, wenn die Bildschicht unter Verwendung von n durch Strahlung härtbaren farbigen Tintenstrahl-Tintenzusammensetzungen gebildet wird, die nachstehenden Anforderungen erfüllt werden,
wenn n = 1, $1/10{,}000 \leq X/Y \leq 40/100$
wenn n = 2, $1/10{,}000 \leq X/Y \leq 30/100$
wenn n = 3, $1/10{,}000 \leq X/Y \leq 25/100$
wenn n = 4, $1/10{,}000 \leq X/Y \leq 20/100$
wenn $n \geq 5$, $1/10{,}000 \leq X/Y \leq 15/100$

wobei die Menge an abgegebenen Tropfen pro Einheitsfläche der die Transparentschicht bildenden durch Strahlung härtbaren farblosen Tintenstrahl-Tintenzusammensetzung X in $g/m^2$ ist und eine Gesamtmenge an abgegebenen

Tropfen pro Einheitsfläche der Bildschicht bildenden durch Strahlung härtbaren farbigen Tintenstrahl-Tintenzusammensetzungen Y in $g/m^2$ ist.

2. Bildherstellungsverfahren nach Anspruch 1, wobei die Transparentschicht eine Fläche von mindestens 0,1% aber nicht größer als 80% eines Bildbereichs hat.

3. Bildherstellungsverfahren nach entweder Anspruch 1 oder 2, wobei die durch Strahlung härtbare farbige Tintenstrahl-Tintenzusammensetzung die monofunktionale polymerisierbare Verbindung in einer Menge von mindestens 70 Masse% der polymerisierbaren Verbindungen enthält und wobei die durch Strahlung härtbaren farblose Tintenstrahl-Tintenzusammensetzung die polyfunktionale polymerisierbare Verbindung in einer Menge von mindestens 60 Masse% der polymerisierbaren Verbindungen enthält.

4. Bildherstellungsverfahren nach einem der Ansprüche 1 bis 3, wobei die durch Strahlung härtbare farbige Tintenstrahl-Tintenzusammensetzung die monofunktionale polymerisierbare Verbindung in einer Menge von mindestens 80 Masse% der polymerisierbaren Verbindungen enthält und die durch Strahlung härtbare farblose Tintenstrahl-Tintenzusammensetzung die polyfunktionale polymerisierbare Verbindung in einer Menge von mindestens 70 Masse% der polymerisierbaren Verbindungen enthält.

5. Bildherstellungsverfahren nach einem der Ansprüche 1 bis 4, wobei die durch Strahlung härtbare farbige Tintenstrahl-Tintenzusammensetzung N-Vinyllactam als die polymerisierbare Verbindung enthält.

6. Bildherstellungsverfahren nach einem der Ansprüche 1 bis 5, wobei die durch Strahlung härtbare farbige Tintenstrahl-Tintenzusammensetzung mindestens eine monofunktionale polymerisierbare Verbindung, ausgewählt aus der Gruppe bestehend aus den nachstehenden (a-1) bis (a-8) als die polymerisierbare Verbindung enthält,

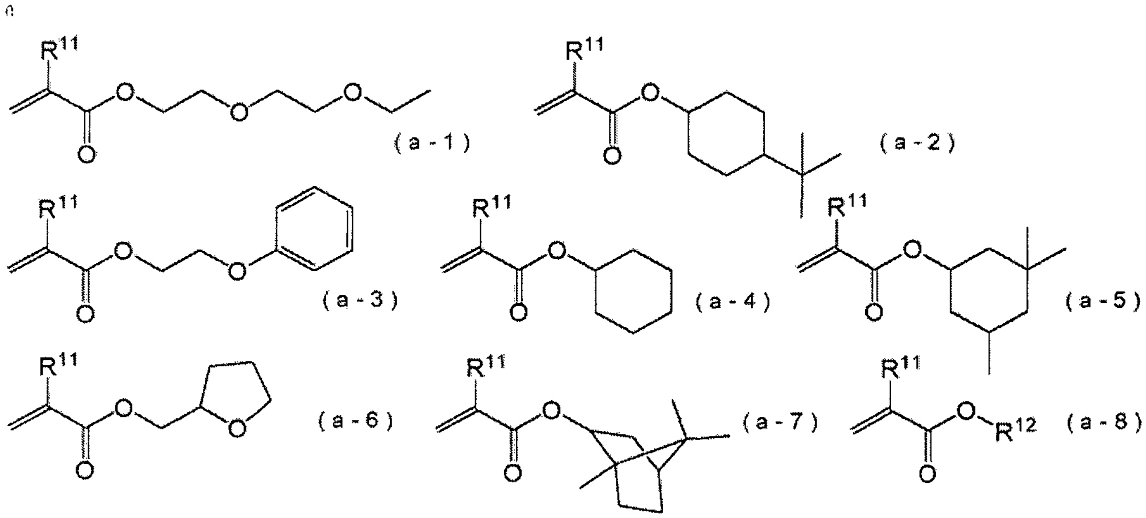
(a-1) (a-2) (a-3) (a-4) (a-5) (a-6) (a-7) (a-8)

wobei in den Formeln $R^{11}$ ein Wasserstoffatom oder eine Methylgruppe bezeichnet und $R^{12}$ eine Alkylgruppe mit 4 bis 12 Kohlenstoffatomen bezeichnet.

7. Bildherstellungsverfahren nach einem der Ansprüche 1 bis 6, wobei die durch Strahlung härtbare farblose Tintenstrahl-Tintenzusammensetzung eine polyfunktionale polymerisierbare Verbindung enthält, die eine Glasübergangstemperatur (Tg) von mindestens 80°C hat, wobei die Glasübergangstemperatur einer polyfunktionalen polymerisierbaren Verbindung die Glasübergangstemperatur eines Homopolymers dieser polyfunktionalen polymerisierbaren Verbindung bedeutet.

8. Bildherstellungsverfahren nach Anspruch 7, wobei die durch Strahlung härtbare farblose Tintenstrahl-Tintenzusammensetzung mindestens eine polyfunktionale polymerisierbare Verbindung, ausgewählt aus der Gruppe bestehend aus den nachstehenden polymerisierbaren Verbindungen als die polyfunktionale polymerisierbare Verbindung mit einer Glasübergangstemperatur (Tg) von mindestens 80°C enthält.

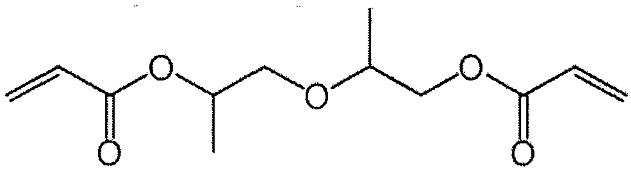

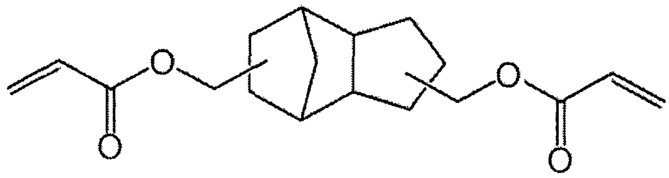

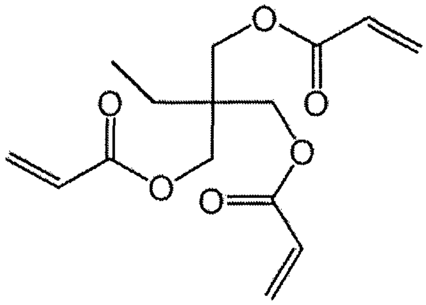

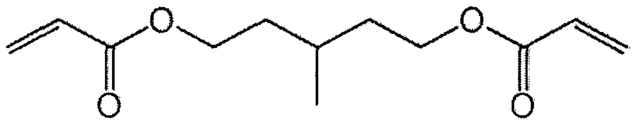

9. Bildherstellungsverfahren nach einem der Ansprüche 1 bis 8, wobei die durch Strahlung härtbare farblose Tintenstrahl-Tintenzusammensetzung die polyfunktionale polymerisierbare Verbindung mit einer Glasübergangstemperatur (Tg) von mindestens 80 °C in einer Menge von mindestens 30 Masse% in der Tintenzusammensetzung enthält, wobei die Glasübergangstemperatur eine polyfunktionalen polymerisierbaren Verbindung die Glasübergangstemperatur eines Homopolymers dieser polyfunktionalen polymerisierbaren Verbindung bedeutet.

10. Bildherstellungsverfahren nach einem der Ansprüche 1 bis 9, wobei die durch Strahlung härtbare farbige Tintenstrahl-Tintenzusammensetzung und/oder die durch Strahlung härtbare farblose Tintenstrahl-Tintenzusammensetzung ein Silikon-basiertes Acrylatoligomer als die polymerisierbare Verbindung enthält.

11. Bildherstellungsverfahren nach einem der Ansprüche 1 bis 10, wobei der Bildschicht-Herstellungsschritt und/oder der Transparentschicht-Herstellungsschritt

(a1) einen Schritt des Freisetzens der Tintenstrahl-Tintenzusammensetzung auf ein Aufzeichnungsmedium durch ein Tintenstrahl-Druckverfahren,
(b1) einen Schritt de Belichtens der freigesetzten Tintenstrahl-Tintenzusammensetzung mit aktinischer Strahlung, um die Tintenstrahl-Tintenzusammensetzung vorläufig zu härten, um so einen vorläufig gehärteten Film zu erzeugen, und
(c1) einen Schritt des Belichtens des vorläufig gehärteten Films mit aktinischer Strahlung, um diesen vollständig zu härten,

umfasst.

12. Bildherstellungsverfahren nach Anspruch 11, wobei die aktinische Strahlung eine Lichtemittierende Diode als Lichtquelle verwendet.

13. Dekoratives Blatt umfassend eine Bildschicht und eine Transparentschicht, die durch das Bildherstellungsverfahren nach einem der Ansprüche 1 bis 12 hergestellt sind, auf einem Harzblatt.

14. Formverfahren umfassend Vakuumformen, Druckformen oder Vakuum-/Druckformen des dekorativen Blattes nach Anspruch 13.

15. Produkt aus einem geformten dekorativen Blatt, erhalten durch Vakuumformen, Druckformen oder Vakuum-/Druckformen des dekorativen Blattes nach Anspruch 13.

16. Produkt aus einem geformten dekorativen Blatt nach Anspruch 15, wobei es ferner einem Lochen durch Mittel des Trimmens nach dem Vakuumformen, Druckformen oder Vakuum-/Druckformen unterworfen wird.

17. Verfahren zur Herstellung eines In-Mold-Formartikels, umfassend einen Schritt des Platzierens des dekorativen Blattes nach Anspruch 13 oder des Produktes aus einem geformten dekorativen Blatt nach Anspruch 15 oder 16

auf einer inneren Wandung eines hohlen Bereichs, der durch eine Vielzahl von Formen gebildet wird, und einen Schritt des Injizierens eines geschmolzenen Harzes in den hohlen Bereich über einen Einlass.

**18.** In-Mold Formartikel erhalten durch den Herstellungsverfahren nach Anspruch 17.

**Revendications**

**1.** Procédé de formation d'image comprenant, dans l'ordre :

une étape de formation de couche d'image destinée à former une couche d'image en déchargeant au moins une composition d'encre colorée pour jet d'encre durcissable par rayonnement sur un support d'enregistrement, et
une étape de formation de couche transparente destinée à former une couche transparente en déchargeant une composition d'encre transparente pour jet d'encre durcissable par rayonnement sur la couche d'image ;
la composition d'encre colorée pour jet d'encre durcissable par rayonnement comprenant un composé polymérisable monofonctionnel en une quantité d'au moins 50 % en masse de composés polymérisables ;
la composition d'encre transparente pour jet d'encre durcissable par rayonnement comprenant un composé polymérisable polyfonctionnel en une quantité d'au moins 50 % en masse des composés polymérisables, et
lors de l'étape de formation de couche transparente, la composition d'encre transparente pour jet d'encre durcissable par rayonnement étant dispersée au-dessus de la couche d'image afin de former ainsi une couche transparente non continue ;
dans lequel lorsque la couche d'image est formée à l'aide de n compositions d'encre colorée pour jet d'encre et durcissables par rayonnement de couleur, les exigences ci-dessous sont satisfaites :

lorsque n = 1, $1/10\,000 \leq X/Y \leq 40/100$
lorsque n = 2, $1/10\,000 \leq X/Y \leq 30/100$
lorsque n = 3, $1/10\,000 \leq X/Y \leq 25/100$
lorsque n = 4, $1/10\,000 \leq X/Y \leq 20/100$
lorsque $n \geq 5$, $1/10\,000 \leq X/Y \leq 15/100$

dans lequel la quantité de gouttelettes éjectées par unité de surface de la composition d'encre transparente pour jet d'encre durcissable par rayonnement formant la couche transparente est X, en g/m$^2$, et la quantité totale de gouttelettes éjectées par unité de surface de la composition d'encre colorée pour jet d'encre durcissable par rayonnement formant la couche d'image est Y, en g/m$^2$.

**2.** Procédé de formation d'image selon la revendication 1, dans lequel la couche transparente présente une aire qui est au moins égale à 0,1 % mais non supérieure à 80 % d'une région d'image.

**3.** Procédé de formation d'image selon la revendication 1 ou 2 , dans lequel la composition d'encre colorée pour jet d'encre durcissable par rayonnement comprend le composé polymérisable monofonctionnel en une quantité d'au moins 70 % en masse des composés polymérisables, et la composition d'encre transparente pour jet d'encre durcissable par rayonnement comprend le composé polymérisable polyfonctionnel en une quantité d'au moins 60 % en masse des composés polymérisables.

**4.** Procédé de formation d'image selon l'une quelconque des revendications 1 à 3, dans lequel la composition d'encre colorée pour jet d'encre durcissable par rayonnement comprend le composé polymérisable monofonctionnel en une quantité d'au moins 80 % en masse des composés polymérisables, et la composition d'encre transparente pour jet d'encre durcissable par rayonnement comprend le composé polymérisable polyfonctionnel en une quantité d'au moins 70 % en masse des composés polymérisables.

**5.** Procédé de formation d'image selon l'une quelconque des revendications 1 à 4, dans lequel la composition d'encre colorée pour jet d'encre durcissable par rayonnement comprend pour le composé polymérisable un N-vinyllactame.

**6.** Procédé de formation d'image selon l'une quelconque des revendications 1 à 5, dans lequel la composition d'encre colorée pour jet d'encre durcissable par rayonnement comprend pour le composé polymérisable au moins un composé polymérisable monofonctionnel sélectionné parmi le groupe consistant en (a-1) à (a-8) ci-dessous :

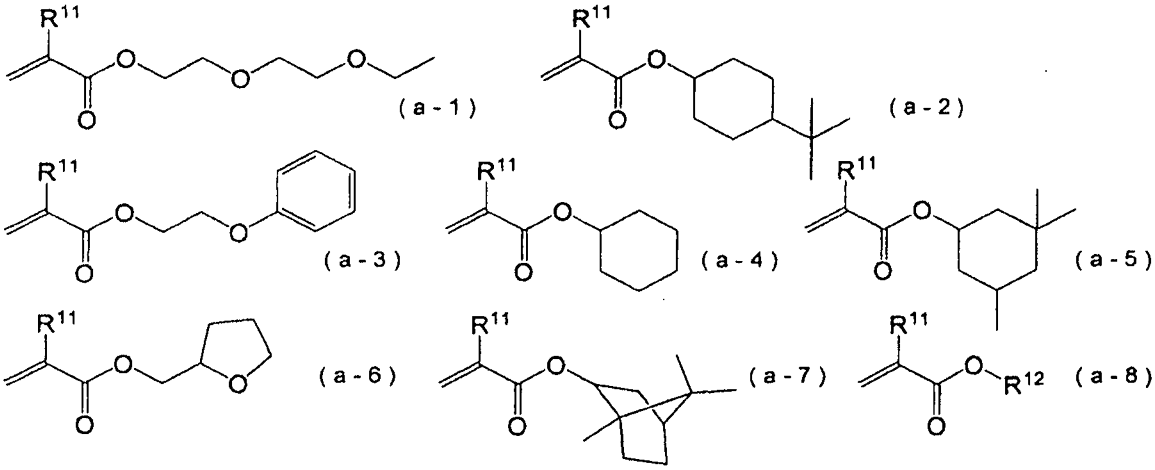

(a-1) (a-2) (a-3) (a-4) (a-5) (a-6) (a-7) (a-8)

où dans les formules, $R^{11}$ indique un atome d'hydrogène ou un groupe méthyle, et $R^{12}$ indique un groupe alkyle présentant de 4 à 12 atomes de carbone.

7. Procédé de formation d'image selon l'une quelconque des revendications 1 à 6, dans lequel la composition d'encre transparente pour jet d'encre durcissable par rayonnement comprend un composé polymérisable polyfonctionnel présentant une température de transition vitreuse (Tg) d'au moins 80 °C, où la température de transition vitreuse d'un • composé polymérisable polyfonctionnel signifie la température de transition vitreuse d'un homopolymère de ce composé polymérisable polyfonctionnel.

8. Procédé de formation d'image selon la revendication 7, dans lequel la composition d'encre transparente pour jet d'encre durcissable par rayonnement comprend pour le composé polymérisable polyfonctionnel présentant une température de transition vitreuse (Tg) d'au moins 80 °C au moins un composé polymérisable polyfonctionnel sélectionné parmi le groupe consistant en les composés polymérisables ci-dessous :

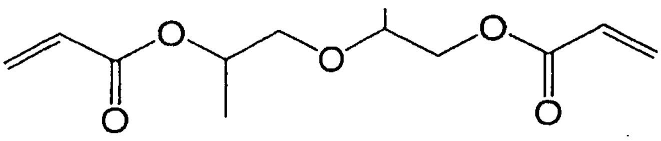

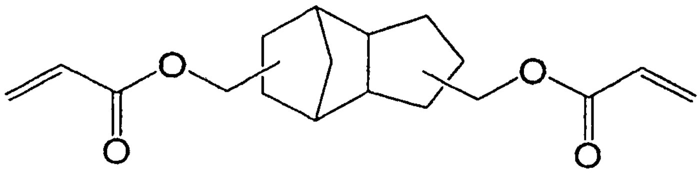

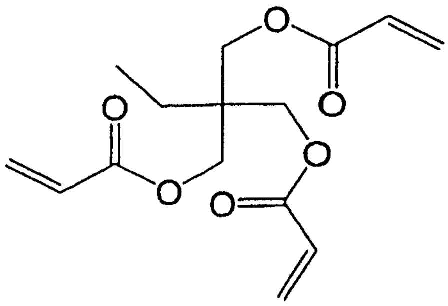

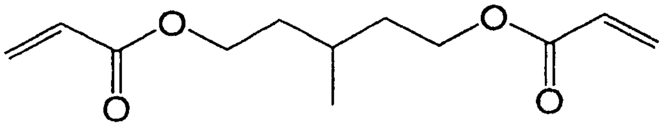

9. Procédé de formation d'image selon l'une quelconque des revendications 1 à 8, dans lequel la composition d'encre transparente pour jet d'encre durcissable par rayonnement comprend le composé polymérisable polyfonctionnel présentant une température de transition vitreuse (Tg) d'au moins 80 °C en une quantité d'au moins 30 % en masse dans la composition d'encre, où la température de transition vitreuse d'un composé polymérisable polyfonctionnel signifie la température de transition vitreuse d'un homopolymère de ce composé polymérisable polyfonctionnel.

10. Procédé de formation d'image selon l'une quelconque des revendications 1 à 9, dans lequel la composition d'encre colorée pour jet d'encre durcissable par rayonnement et/ou la composition d'encre transparente pour jet d'encre durcissable par rayonnement comprennent pour le composé polymérisable un oligomère d'acrylate à base de silicone.

**11.** Procédé de formation d'image selon l'une quelconque des revendications 1 à 10, dans lequel l'étape de formation de couche d'image et/ou l'étape de formation de couche transparente comprennent :

(a1) une étape de décharge de la composition d'encre pour jet d'encre sur un support d'enregistrement par un procédé à jet d'encre ;
(b1) une étape d'irradiation de la composition d'encre pour jet d'encre déchargée avec un rayonnement actinique afin de durcir de manière préalable la composition d'encre pour jet d'encre et de former ainsi un film durci de manière préalable, et
(c1) une étape d'irradiation du film durci de manière préalable avec un rayonnement actinique afin de le durcir entièrement.

**12.** Procédé de formation d'image selon la revendication 11, dans lequel le rayonnement actinique utilise comme source lumineuse une diode électroluminescente.

**13.** Feuille décorative comprenant, au-dessus d'une feuille de résine, une couche d'image et une couche transparente formées par le procédé de formation d'image selon l'une quelconque des revendications 1 à 12.

**14.** Procédé de moulage comprenant un formage sous vide, un formage sous pression ou un formage sous vide/sous pression formant la feuille décorative selon la revendication 13.

**15.** Produit moulé de feuille décorative obtenu par formage sous vide, formage sous pression, ou formage sous vide/sous pression formant la feuille décorative selon la revendication 13.

**16.** Produit moulé de feuille décorative selon la revendication 15, dans lequel celui-ci est en outre soumis à la réalisation de trous par découpage après formage sous vide, formage sous pression, ou formage sous vide/sous pression.

**17.** Processus pour produire un article moulé en moule, comprenant :

une étape pour placer la feuille décorative selon la revendication 13 ou le produit moulé de feuille décorative selon la revendication 15 ou 16 sur une paroi intérieure d'une partie creuse formée à partir d'une pluralité de moules, et
une étape d'injection d'une résine fondue dans la partie creuse par le biais d'une grille.

**18.** Article moulé en moule obtenu par le processus de production selon la revendication 17.

FIG.1

(a)

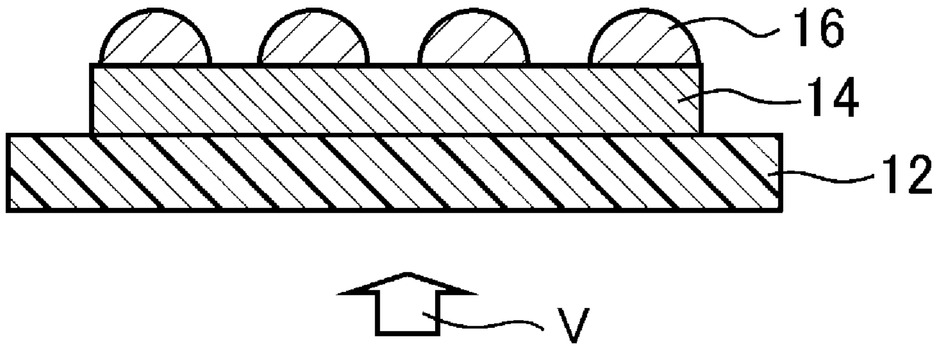


(b)

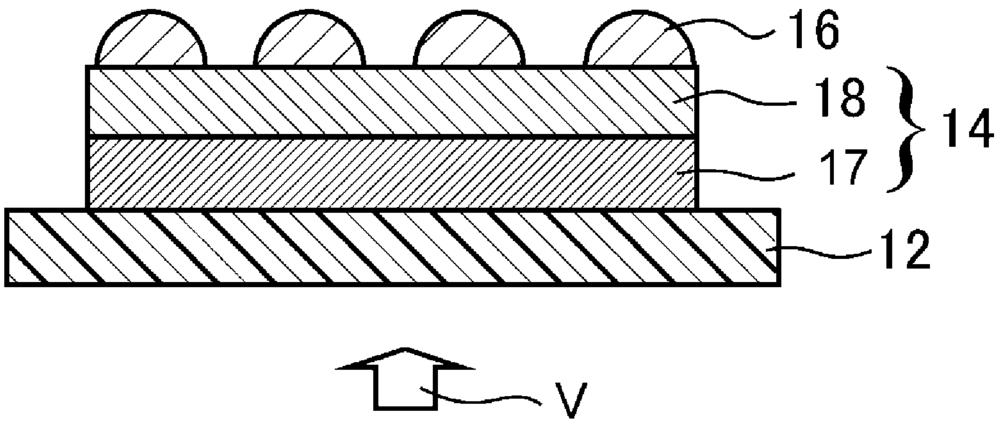

FIG.2

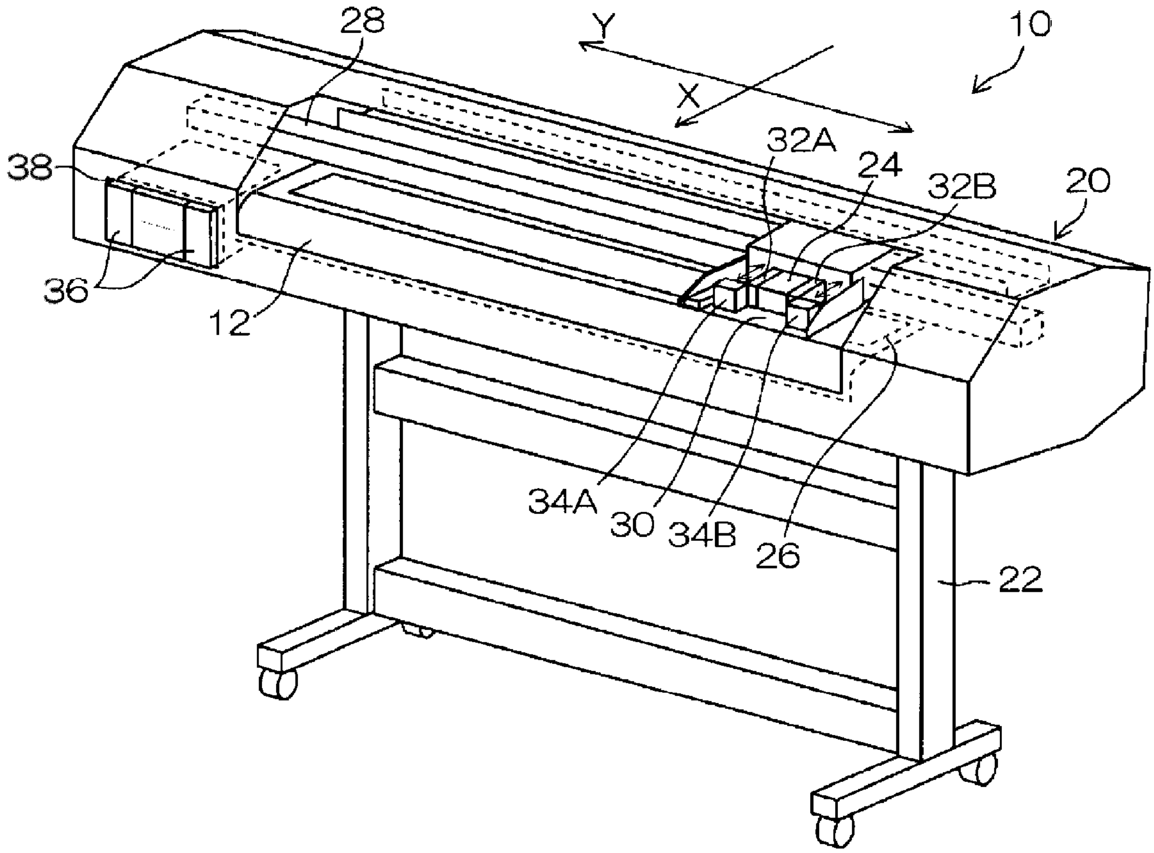

FIG.3

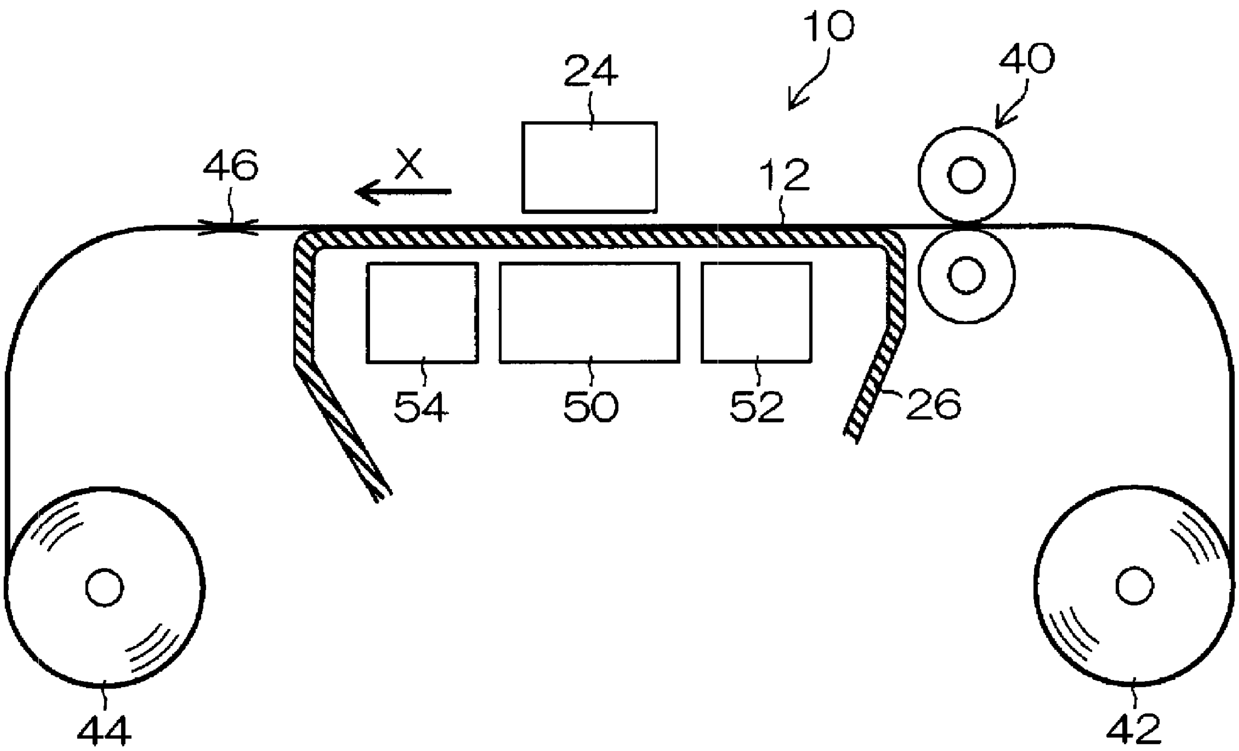

FIG.4

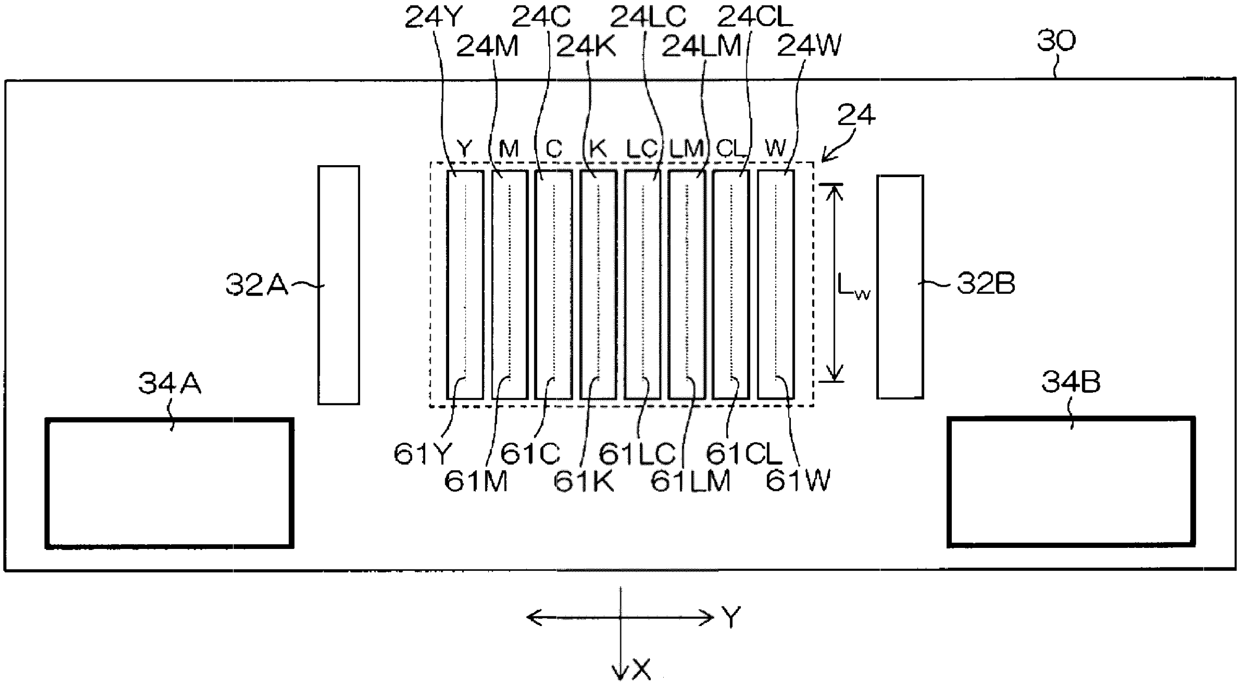
24Y
24M
24C
24K
24LC
24LM
24CL
24W
30
24
Y
M
C
K
LC
LM
CL
W
32A
32B
Lw
34A
34B
61Y
61M
61C
61K
61LC
61LM
61CL
61W
Y
X

FIG.5

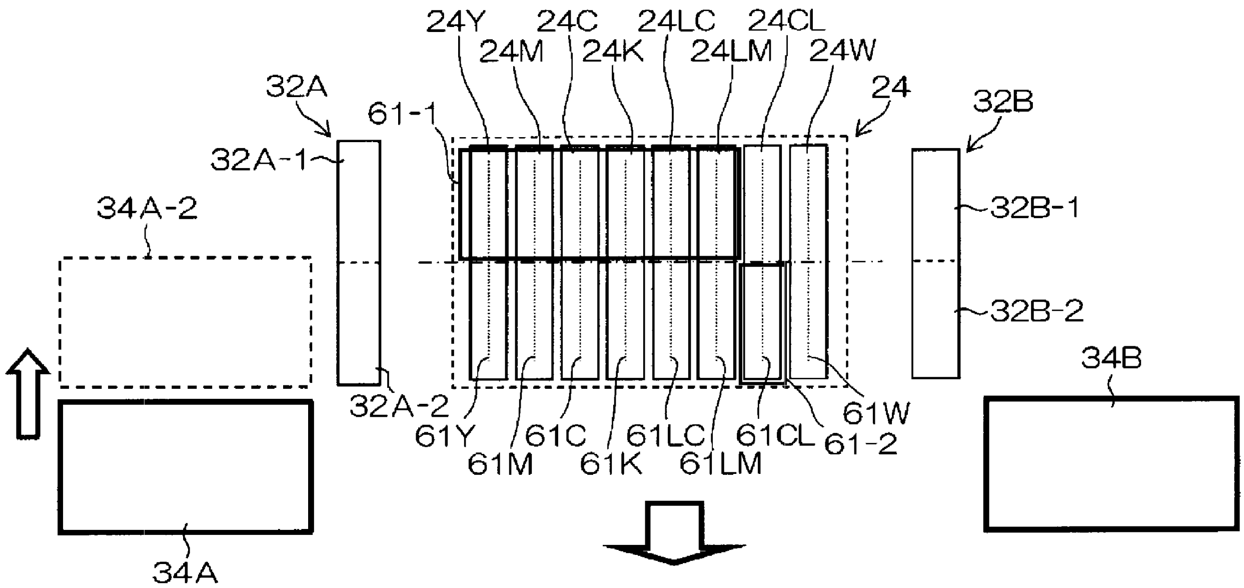
24Y
24C
24LC
24CL
24M
24K
24LM
24W
32A
24
32B
61-1
32A-1
32B-1
34A-2
32B-2
34B
32A-2
61W
61Y
61C
61LC
61CL
61-2
61M
61K
61LM
34A

FIG.6

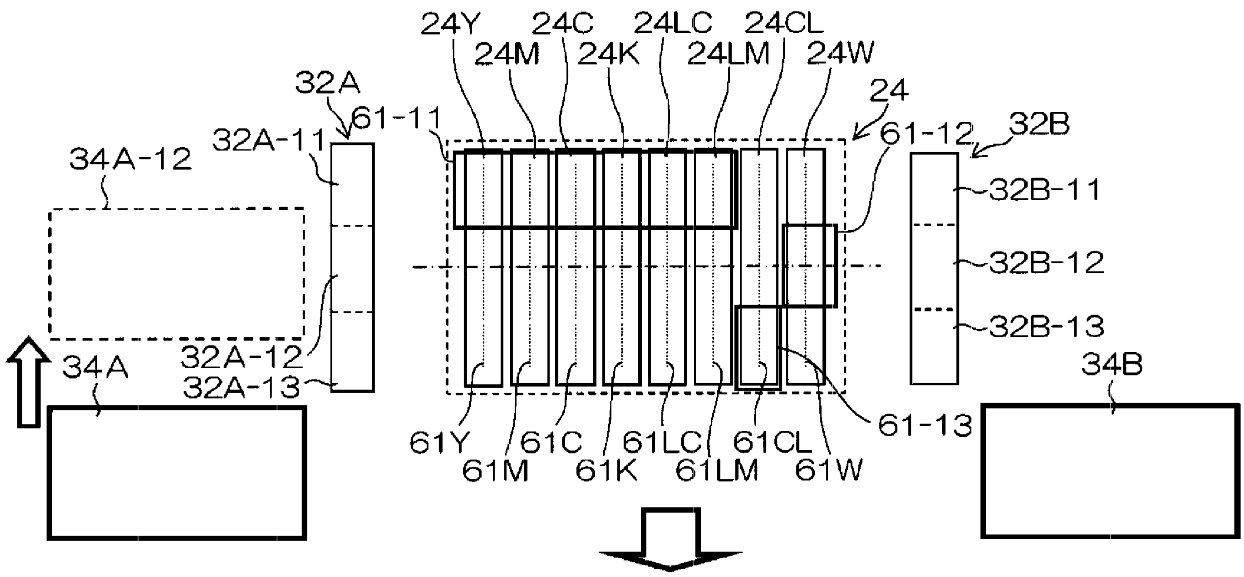
24Y
24M
24C
24K
24LC
24LM
24CL
24W
24
32A
61-11
32A-11
34A-12
61-12
32B
32B-11
32B-12
32B-13
32A-12
32A-13
34A
34B
61-13
61Y
61M
61C
61K
61LC
61LM
61CL
61W

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012007107 A
- JP 2009096043 A
- JP 2009221416 A
- JP 2009185186 A
- JP 2009096985 A
- JP 2009084423 A
- JP 2002012607 A
- JP 2002188025 A
- JP 2003026978 A
- JP 2003342503 A
- JP 62173463 A
- JP 62183457 A
- JP 57009053 B
- JP 62135826 A
- US 6084250 A
- JP 60132767 A
- WO 9954415 A
- JP 2008248070 A


### Non-patent literature cited in the description


- Industrial Organic Pigments. **W. HERBST ; K. HUNGER.** Ganryo no Jiten. 2000
- Thermal Forming. Koubunshi Daijiten. Maruzen Co., Ltd, 766-768